# EUROPEAN PATENT APPLICATION

(11) **EP 4 394 569 A1**
(43) Date of publication of application: **03.07.2024**
(21) Application number: 23790835.5
(22) Date of filing: 10.01.2023
(51) Int. Cl.: G06F 3/04817

(54) **PHOTO HIDING METHOD AND APPARATUS**

(30) Priority: 19.04.2022 CN 202210412488
(71) Applicant: Honor Device Co., Ltd., Shenzhen, Guangdong 518040 (CN)
(72) Inventor: HAN, Xiao, Shenzhen, Guangdong 518040 (CN)
(74) Representative: Gill Jennings & Every LLP
(86) International application number: PCT/CN2023/071683
(87) International publication number: WO 2023/202171

(57) **Abstract**

Embodiments of this application relate to the field of terminal technologies, and provide a method and an apparatus for hiding a photo. The method includes: A terminal device displays a first interface, where the first interface displays an icon of a first album and an icon of a second album. The terminal device displays a second interface in response to a first operation of selecting the first album, where the second interface displays a first button for hiding the album. The terminal device displays the first interface in response to a second operation on the first button, where after the second operation, the first interface displays the icon of the second album, and skips displaying the icon of the first album. This can enable the terminal device to provide, for a user, the method for hiding the photo in an album dimension, simplify steps for hiding the photo, and improve user experience on a function for hiding the photo.

## Description

This application claims priority to Chinese Patent Application No. 202210412488.3, filed with the China National Intellectual Property Administration on April 19, 2022 and entitled "METHOD AND APPARATUS FOR HIDING PHOTO", which is incorporated herein by reference in its entirety.

### TECHNICAL FIELD

This application relates to the field of terminal technologies, and in particular, to a method and an apparatus for hiding a photo.

### BACKGROUND

With the popularization and development of the internet, people have more diversified function requirements for terminal devices. For example, in order to simplify a manner a user manages a photo, a terminal device can provide a function for hiding a photo.

Generally, the terminal device may hide a single photo or a plurality of photos based on user's operation on the single photo or the plurality of photos, and save the single photo or the plurality of photos in corresponding hidden albums.

However, in the foregoing method for hiding the photo, the operation is cumbersome, which affects user experience on the function for hiding the photo.

### SUMMARY

Embodiments of this application provide a method and an apparatus for hiding a photo, and can provide, for a user, the method for hiding the photo in an album dimension, simplify steps for hiding the photo, and improve user experience on a function for hiding the photo.

According to a first aspect, an embodiment of this application provides a method for hiding a photo. The method includes: A terminal device displays a first interface, where the first interface displays an icon of a first album and an icon of a second album. The terminal device displays a second interface in response to a first operation of selecting the first album, where the second interface displays a first button for hiding the album. The terminal device displays the first interface in response to a second operation on the first button, where after the second operation, the first interface displays the icon of the second album, and skips displaying the icon of the first album. This can enable the terminal device to provide, for a user, the method for hiding the photo in an album dimension, simplify steps for hiding the photo, and improve user experience on a function for hiding the photo.

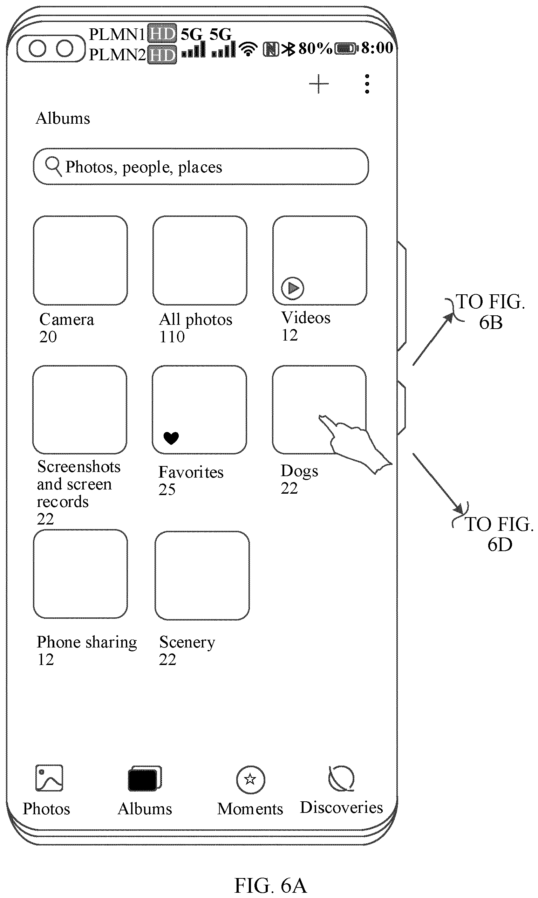

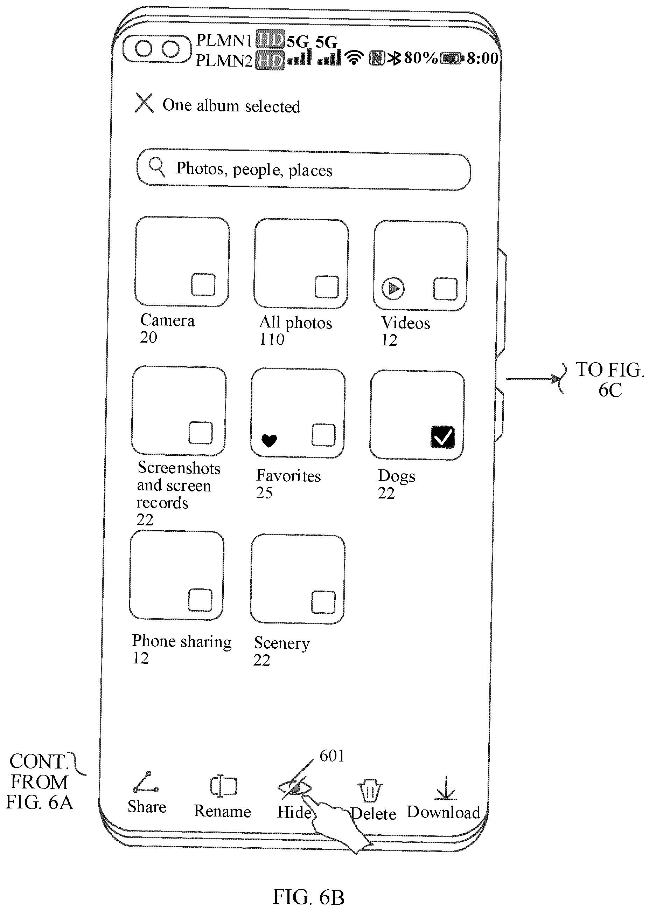

The first interface may be an ordinary album interface in this embodiment of this application, or referred to as a non-hidden interface, or the like. For example, the first interface may be an interface shown in FIG. 6A. The first button may be a hide button 601 shown in FIG. 6B.

In a possible implementation, that the terminal device displays the first interface in response to a second operation on the first button includes: The terminal device displays a first pop-up window in response to the second operation, where the first pop-up window displays text information prompting whether to hide the album and a second button for determining to hide the first album. The terminal device displays the first interface in response to a third operation on the second button. This can enable the user to determine the operation of hiding the album based on the pop-up window displayed by the terminal device, and avoid mistaken touch.

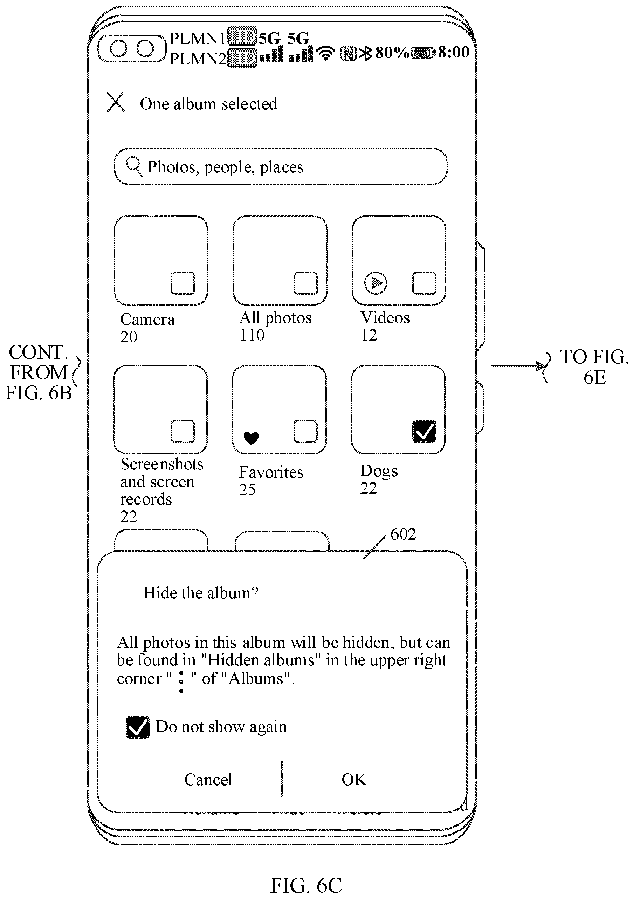

The first pop-up window may be a pop-up window 602 in the interface shown in FIG. 6C for prompting to hide the album, or may also be referred to as a pop-up window 602, or the like. The second button may be an OK button in the pop-up window 902.

In a possible implementation, the method further includes: After the first operation, the terminal device determines, in response to the first operation, whether the first album satisfies a preset condition, where when the preset condition is not satisfied, the first button is in a disabled state, or when the preset condition is satisfied, the first button is in an available state. In this way, when the user taps the album, the terminal device can identify the album to determine whether to allow further processing of the album.

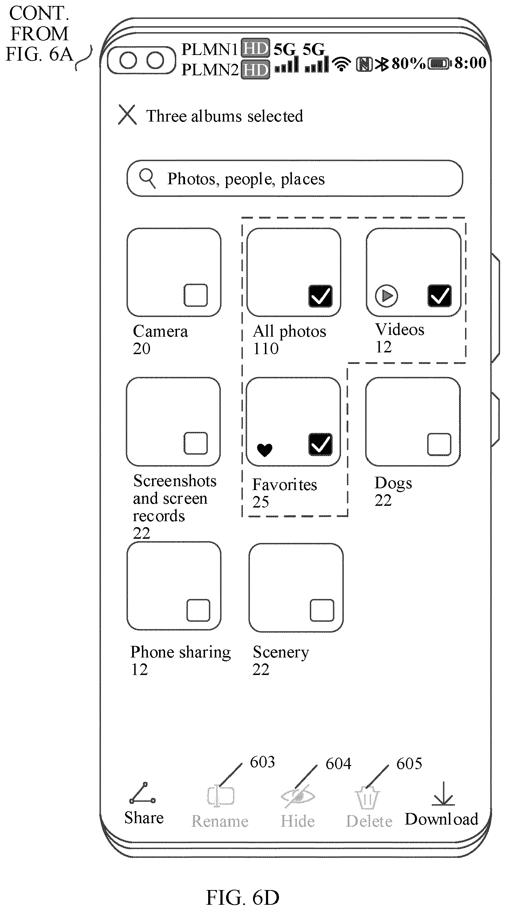

The available state can be a state in which the button can be triggered. The disabled state may be a state in which the button cannot be triggered and the disabled state may be unselected described in embodiments of this application. Specifically, for the available state, refer to a state in which the hide album button 601 shown in FIG. 6B, and for the disabled state, refer to a state in which a hide button 604 in the interface shown in FIG. 6D, where the hide button 604 is displayed as a gray icon.

In a possible implementation, the first interface further displays a third button for viewing more functions in albums, and the method further includes: The terminal device displays a second pop-up window in response to a fourth operation on the third button, where the second pop-up window displays a first option for viewing a hidden album. The terminal device displays a third interface in response to a fifth operation on the first option, where the third interface displays the icon of the first album. This can enable the user to view the hidden album based on the fourth operation and the fifth operation.

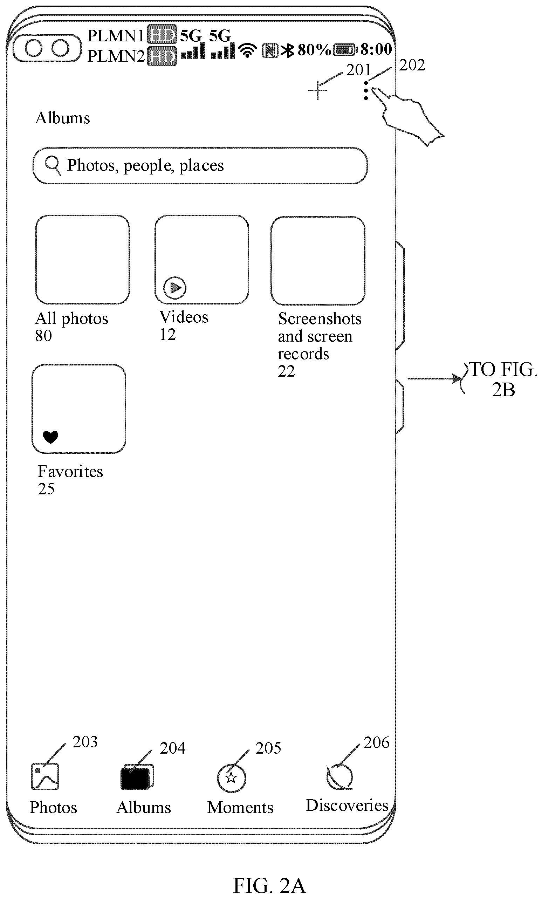

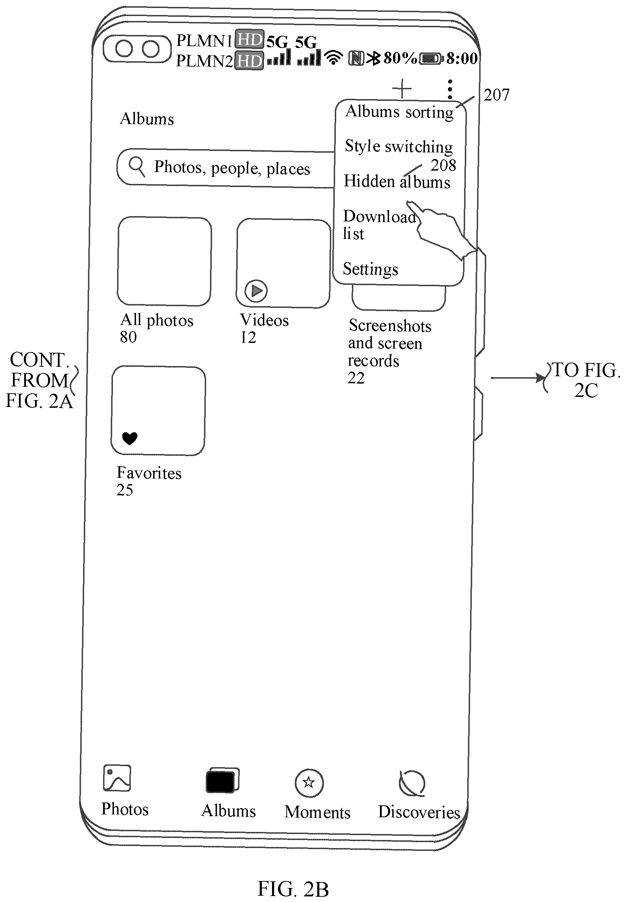

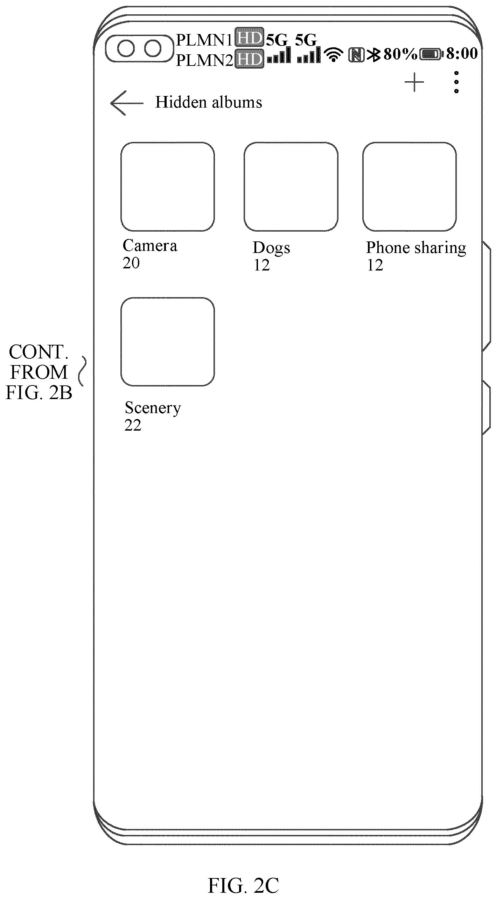

The first interface may be an ordinary album interface, for example, the first interface may be an interface shown in FIG. 2A. The third button for viewing the more functions in the albums may be a button 202 in the upper right corner of the interface shown in FIG. 2A for viewing more functions in albums. The second pop-up window may be a menu pop-up window 207 in the albums shown in FIG. 2B, or may also be referred to as a pop-up window 207, or the like. The first option for viewing the hidden album may be a hidden album option 208 in the pop-up window 207. The third interface may be a hidden album interface, and the third interface is for viewing a hidden album or a hidden photo, for example, the third interface may be the interface shown in FIG. 2C.

In a possible implementation, the third interface includes an icon of a fourth album, and the method further includes: The terminal device displays a ninth interface in response to a thirteenth operation of selecting the first album in the third interface, where the ninth interface displays an eighth button for unhiding the album. In response to a fourteenth operation on the eighth button, the terminal device skips displaying the icon of the first album, and displays the icon of the fourth album in the third interface. This can enable the terminal device to provide a function for hiding the photo in an album dimension, and provide a function for unhiding the photo in the album dimension, simplify the method for hiding the photo, and improve user experience for the function for hiding the photo.

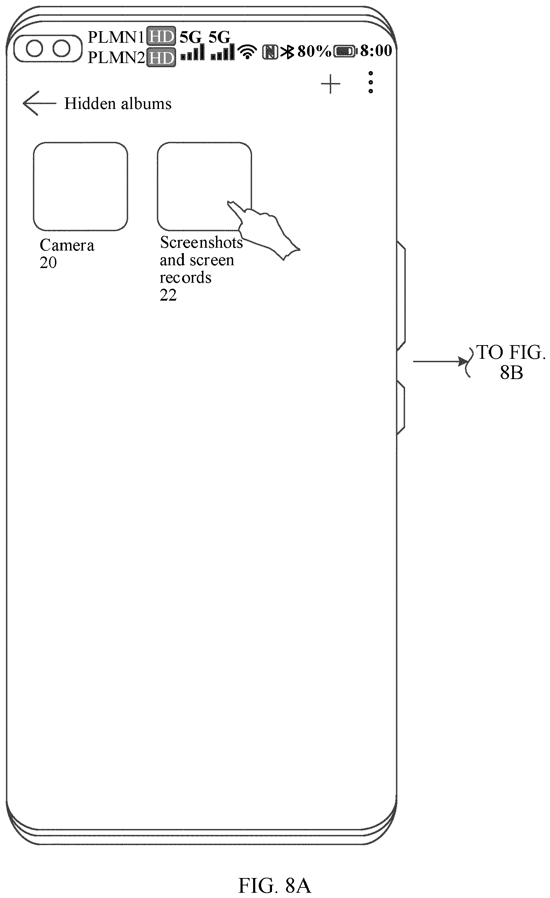

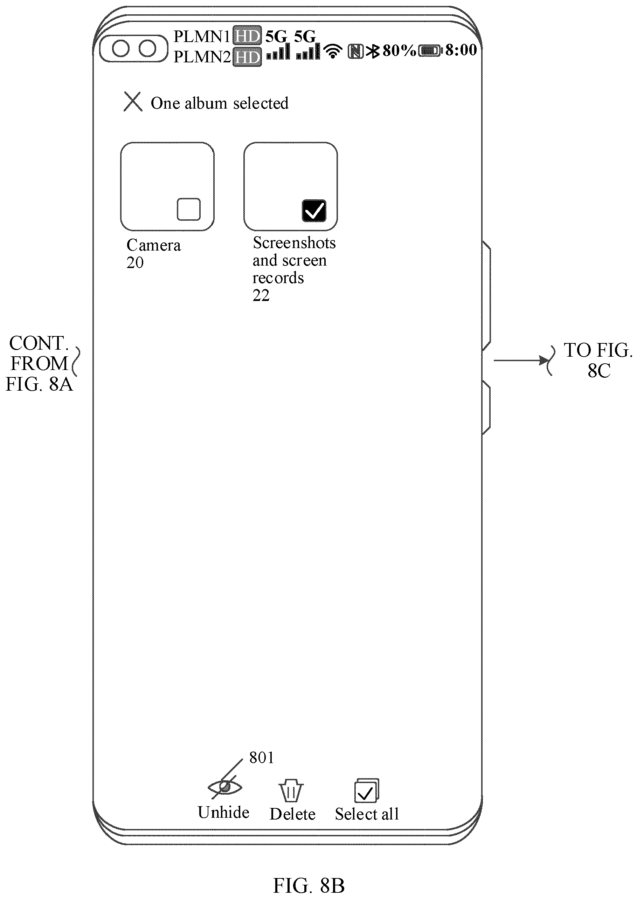

The third interface may be a hidden album interface, for example, the third interface may be an interface shown in FIG. 8A. The first album may be any hidden album in the interface shown in FIG. 8A, like a "screenshots and screen records" album. The fourth album may be an album other than the "screenshots and screen records" album shown in FIG. 8A, like a "camera" album. The ninth interface may be an interface shown in FIG. 8B. The eighth button for unhiding the album may be an unhide button 801 in the interface shown in FIG. 8B.

In a possible implementation, the method further includes: When the terminal device obtains a second image, and the second image belongs to the first album, the terminal device displays the icon of the first album in the first interface. The terminal device displays a tenth interface in response to a fifteenth operation of selecting the first album, where the tenth interface displays the second image in the first album. This can enable the terminal device to implement reasonable division of the hidden album and an unhidden album.

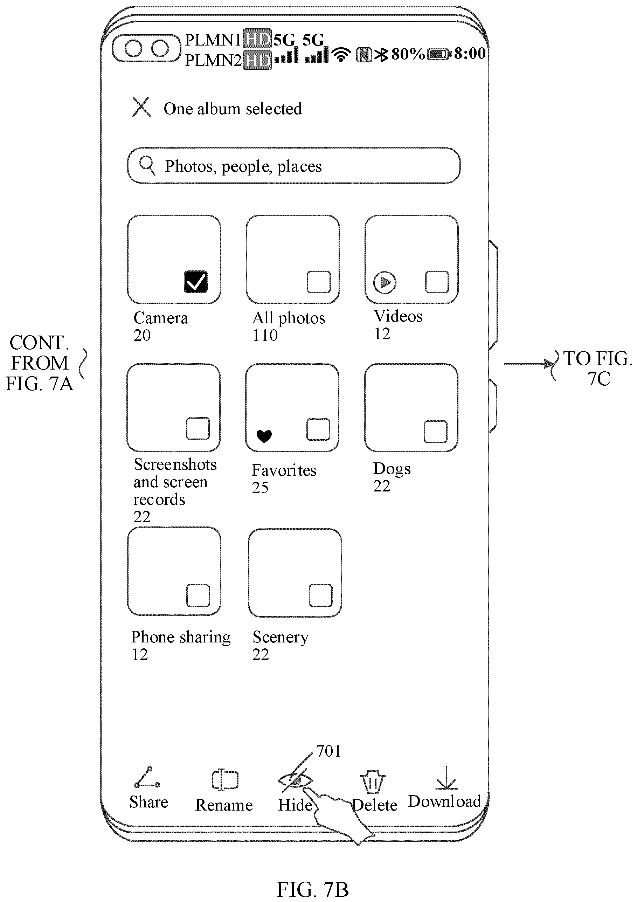

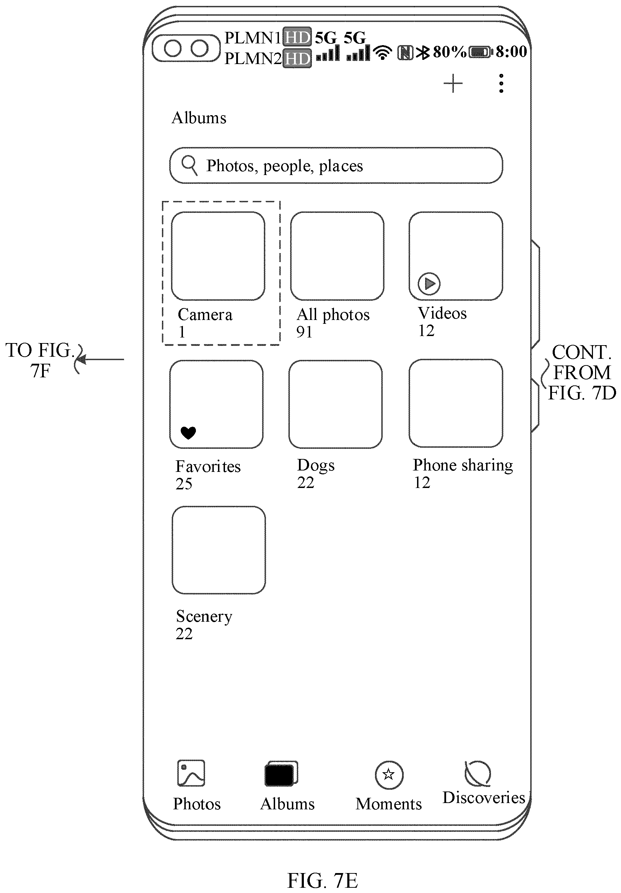

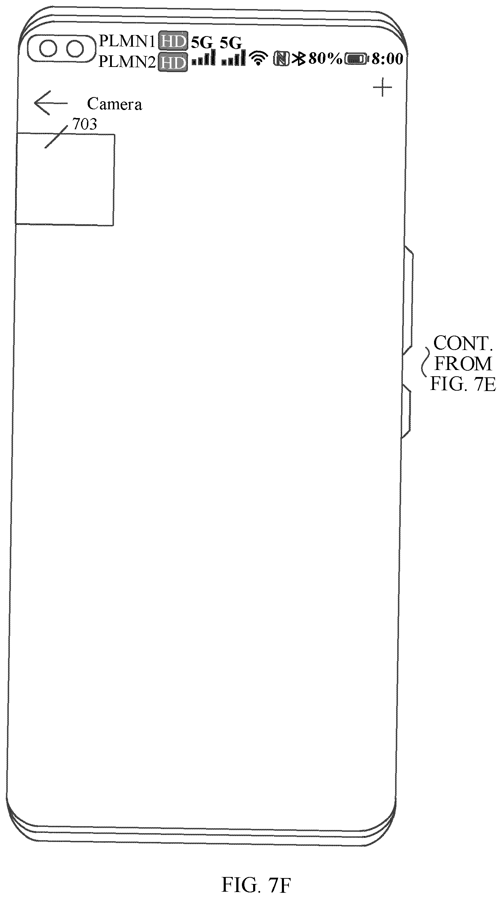

The first album may be a "camera" album shown in FIG. 7B. When the terminal device hides the "camera" album, the second image may be a new image shot by the terminal device based on a shooting function of the terminal device. The first interface may be a "camera" album in an interface shown in FIG. 7E. The tenth interface may be an interface shown in FIG. 7F. The second image may be a photo 703 in the interface shown in FIG. 7F.

In a possible implementation, a display style in the third interface is consistent with a display style in the first interface. This can ensure user experience on the function for hiding the album, and avoid a style difference.

According to a second aspect, an embodiment of this application provides a method for hiding a photo. The method includes: A terminal device displays a third interface, where the third interface includes a first album that is hidden. The terminal device displays a fourth interface in response to a sixth operation on the first album in the third interface, where the fourth interface displays a photo in the first album and a fourth button for adding a photo to the album. In response to a seventh operation on the fourth button, when the terminal device determines that there is a first album that is not hidden and has a same name as the first album, the terminal device displays a fifth interface, where the fifth interface displays a photo in the first album that is not hidden. Alternatively, in response to an eighth operation on the fourth button, when the terminal device determines that there is no album that is not hidden and has a same name as the first album, the terminal device displays a sixth interface, where the sixth interface displays a photo that is not hidden, and the photo that is not hidden does not include the photo in the first album. In this way, when a photo is added to any hidden album, the terminal device can locate, by default, a photo that is not hidden and has a same album name as the hidden album, which is convenient for a user to select a appropriate to-be-hidden photo in the same album. When the terminal device determines that there is no album that has the same name as the hidden album, the terminal device locates an "all photos" album by default, so that the user can select a to-be-hidden photo in the "all photos" album, thereby improving user experience.

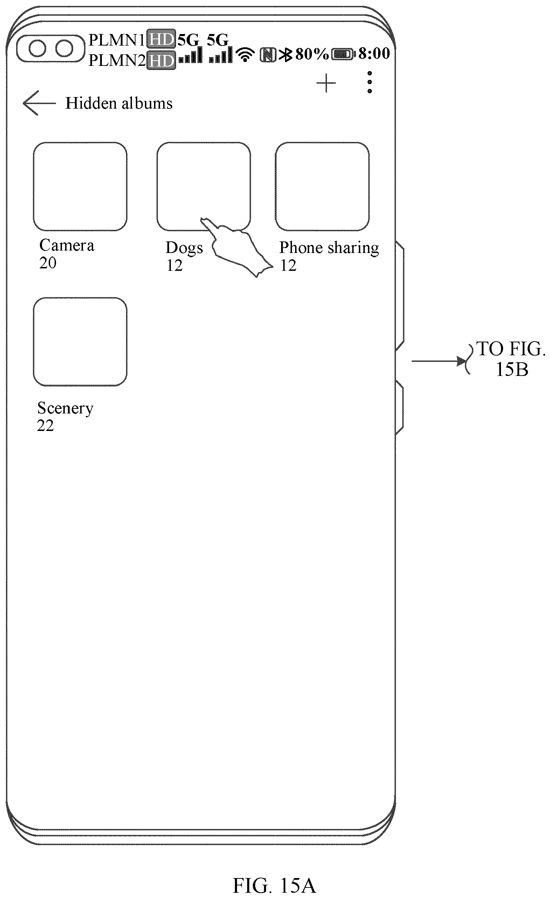

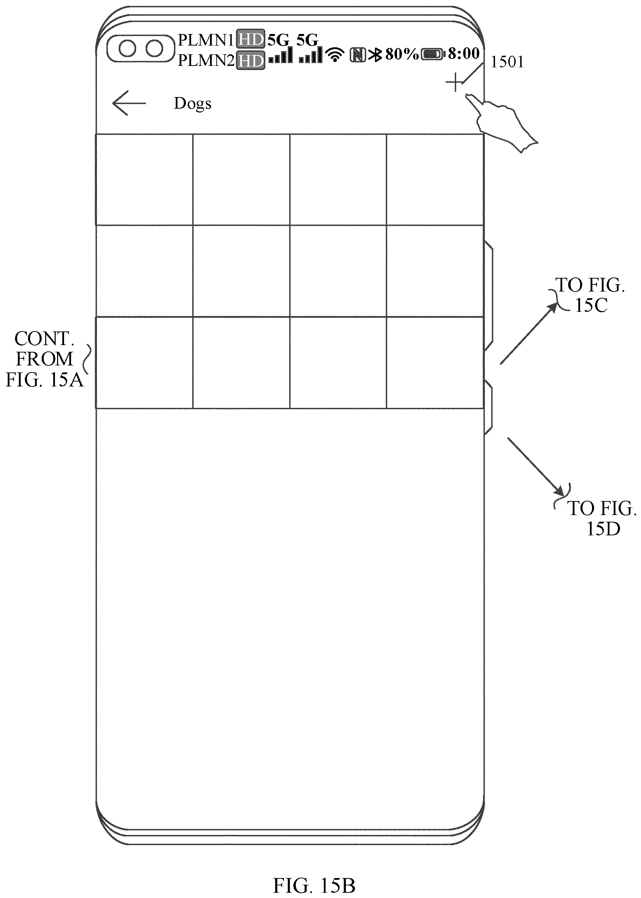

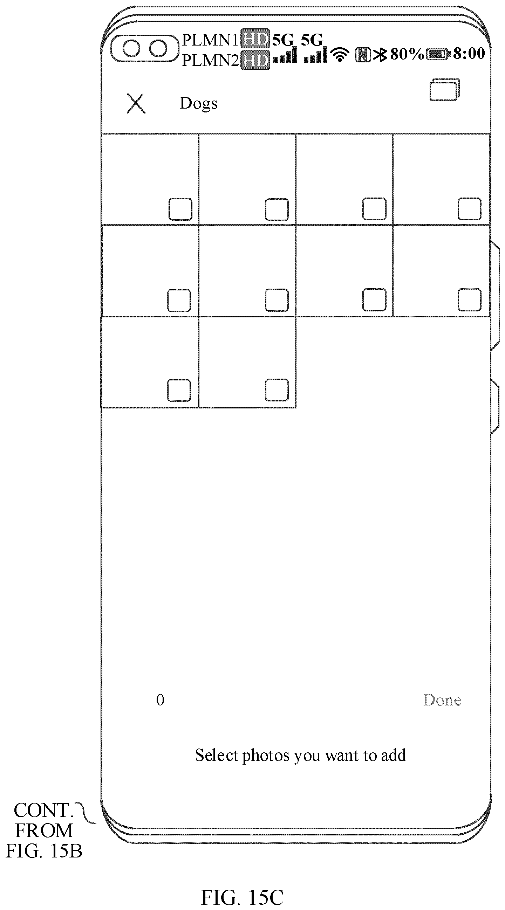

The third interface may be a hidden album interface, for example, the third interface may be an interface shown in FIG. 15A. The fourth interface may be an interface shown in FIG. 15B. The fourth button, for adding the photo to the album, in the fourth interface may be a button 1501 in the interface shown in FIG. 15B for adding a photo to an album. The fifth interface may be an interface shown in FIG. 15C. The photo in the first album that is not hidden may be a photo in a "dogs" album that is not hidden.

In a possible implementation, the fifth interface further displays a fifth button for viewing the album, and the method further includes: The terminal device displays a seventh interface in response to a ninth operation on the fifth button, where the seventh interface displays an icon of a third album. The terminal device displays an eighth interface in response to a tenth operation of selecting the third album, where the eighth interface displays a first image in the third album and a sixth button indicating completion of adding the photo. When the first image is in a selected state, the terminal device displays the first image in the third interface in response to an eleventh operation on the sixth button. This can enable the terminal device to add a photo across albums in any hidden album.

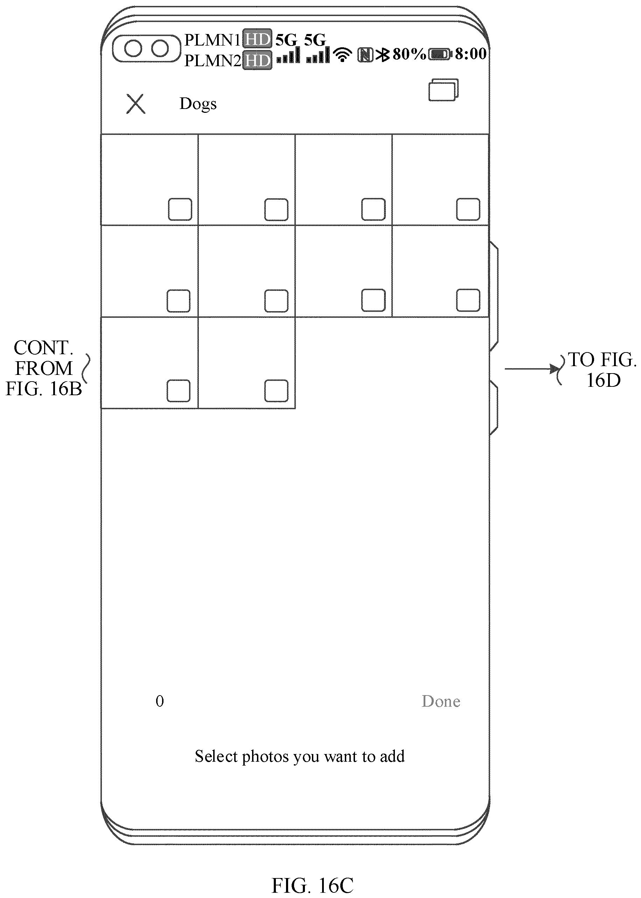

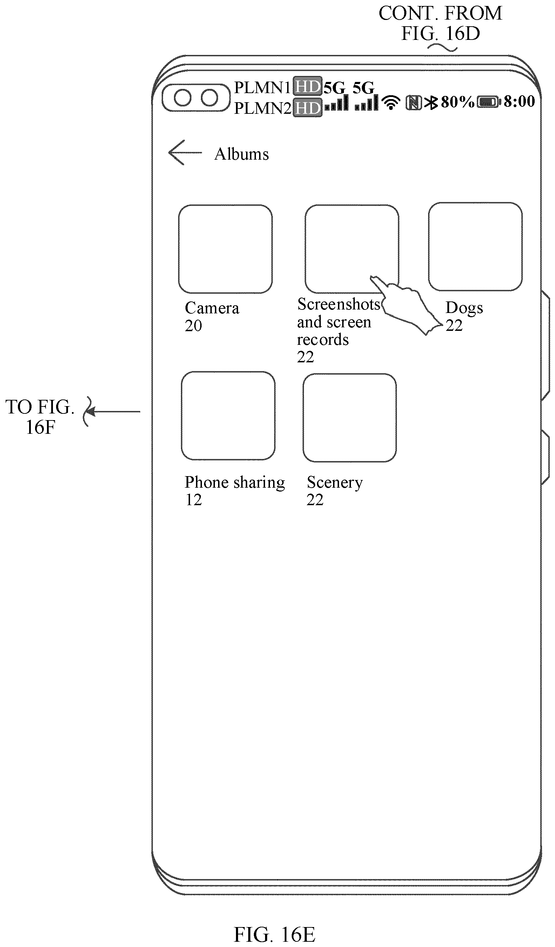

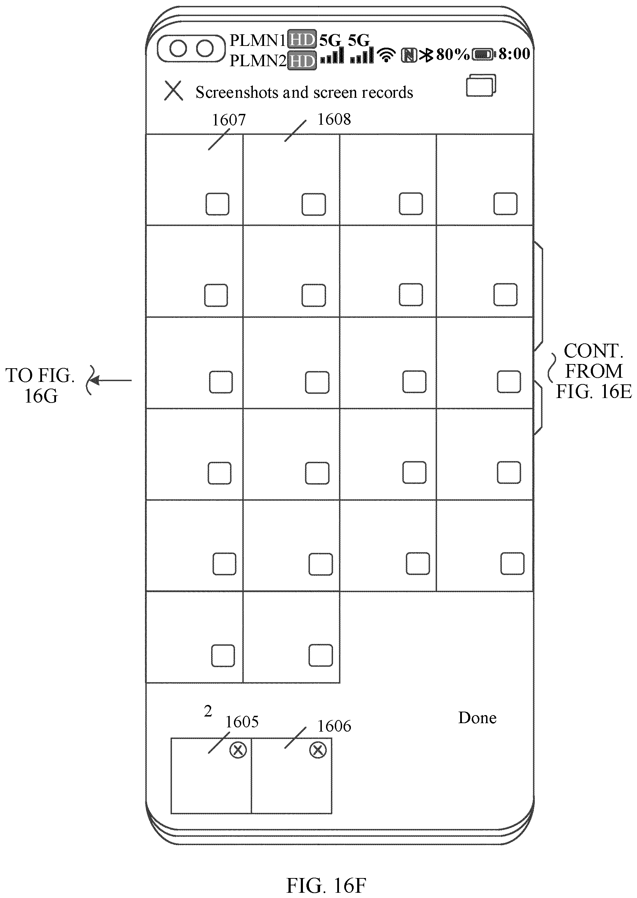

The fifth interface may be an interface shown in FIG. 16C. The fifth button for viewing the album may be a button in the upper right corner of the interface shown in FIG. 16C for viewing an album. The seventh interface may be an interface shown in FIG. 16E. The third interface may be a "screenshots and screen records" album in the interface shown in FIG. 16E. The eighth interface may be an interface shown in FIG. 16F. The first image may be a photo 1607 (or a photo 1608) in the interface shown in FIG. 16F. The sixth button indicating completion of adding the photo may be a done button in the interface shown in FIG. 16F.

In a possible implementation, that the terminal device displays the first image in the third interface in response to an eleventh operation on the sixth button includes: The terminal device displays a third pop-up window in response to the eleventh operation, where the third pop-up window displays text information prompting to add a to-be-hidden photo across albums, and a seventh button for determining to hide the photo across albums. The electronic device displays the first image in the third interface in response to a twelfth operation on the seventh button. In this way, when the terminal device adds a photo across albums in the hidden album, the terminal device can initiate a prompt, so that the user can determine, based on the prompt, whether to continue adding the photo across albums.

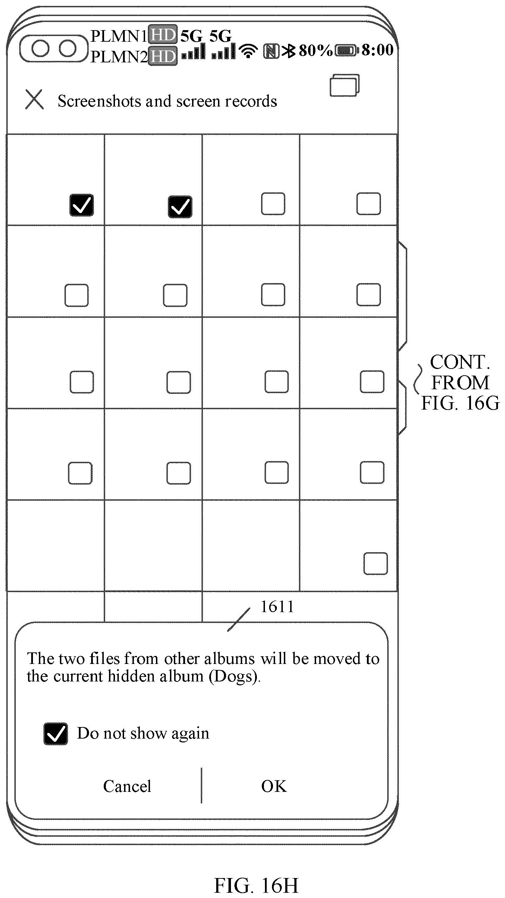

The third pop-up window may be a pop-up window 1611 in an interface shown in FIG. 16H for prompting across albums, or may also be referred to as a pop-up window 1611, or the like. The seventh button for determining to hide the photo across albums may be an OK button in the pop-up window 1611.

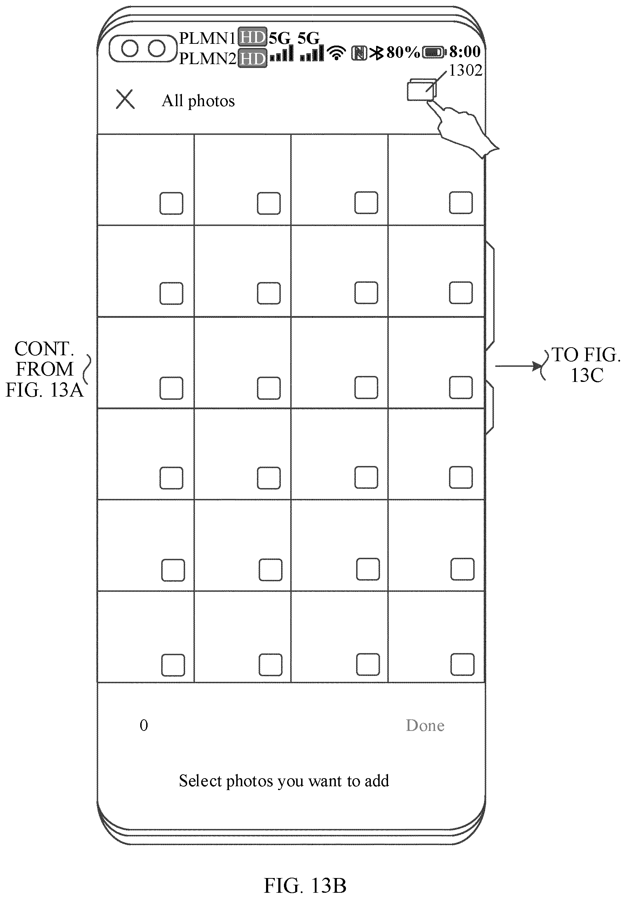

In a possible implementation, the terminal device displays a twelfth interface, where the twelfth interface displays a hidden album displayed in a photo view and a twelfth button for adding a photo in the hidden album. The terminal device displays a fourteenth interface in response to a twenty-fourth operation on the twelfth button, where the fourteenth interface displays a thirteenth button for viewing the album. The terminal device displays a fifteenth interface in response to a twenty-fifth operation on the thirteenth button, where the fifteenth interface displays an album that is not hidden. In this way, because photos in an "all photos" album are displayed by default in an interface shown in FIG. 13B, and there is large quantity of photos in the "all photos" album, which does not facilitate view of the user, the user can flexibly select a photo to be added to the hidden albums from the albums in the ordinary album interface shown in FIG. 13B.

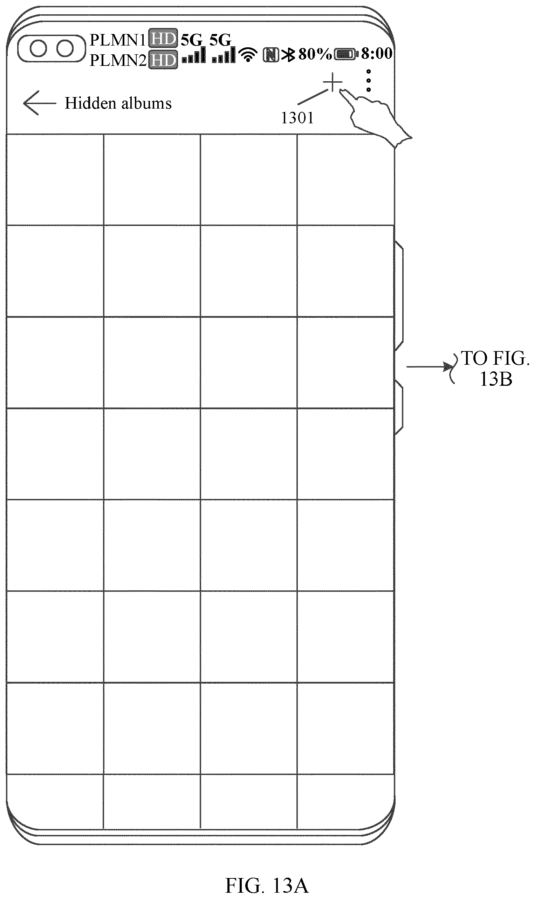

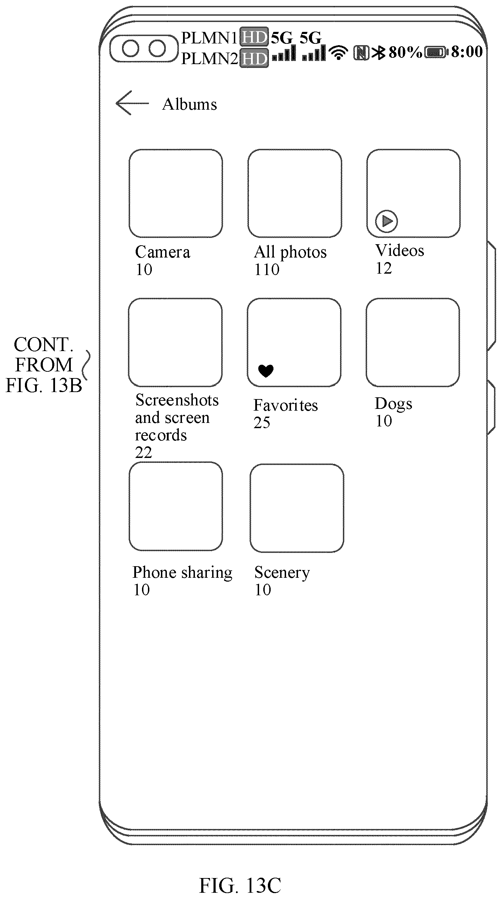

The twelfth interface may be an interface shown in FIG. 13A. The twelfth button may be a button 1301 for adding a photo to a hidden album. The fourteenth interface may be the interface shown in FIG. 13B. The thirteenth button for viewing the album may be a button 1302 in the interface shown in FIG. 13B for viewing an album. The fifteenth interface may be an interface shown in FIG. 13C, and the interface displays unhidden albums.

The fourteenth interface further displays a fifth image and a fourteenth button indicating completion of adding the photo, and the method further includes: When the fifth image is in a selected state, the terminal device adds the fifth image to the hidden album in response to a twenty-sixth operation on the fourteenth button. This can enable the terminal device to add a photo in a hidden album.

In the interface shown in FIG. 13B, the fifth image may be any image in the interface shown in FIG. 13B. The fourteenth button may be a done button shown in FIG. 13B.

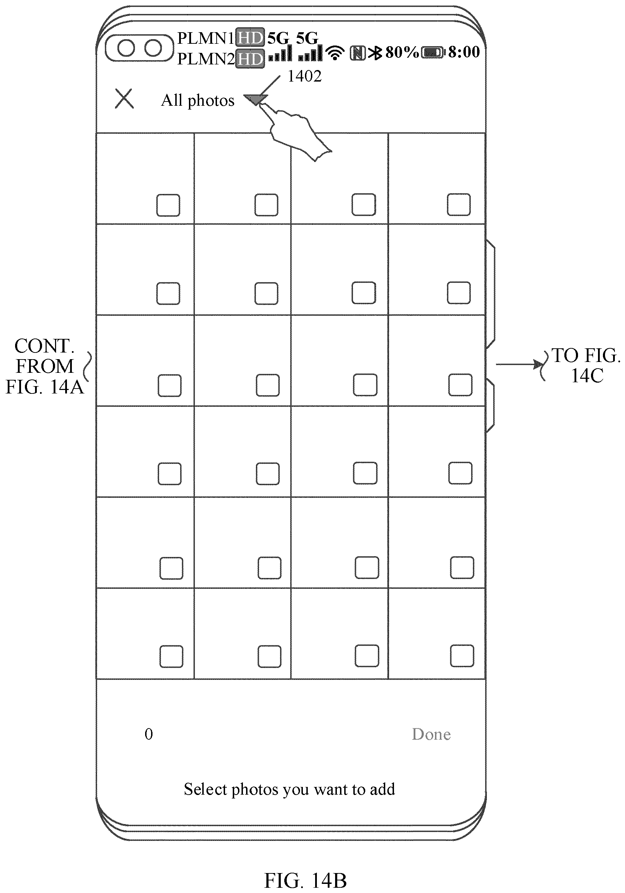

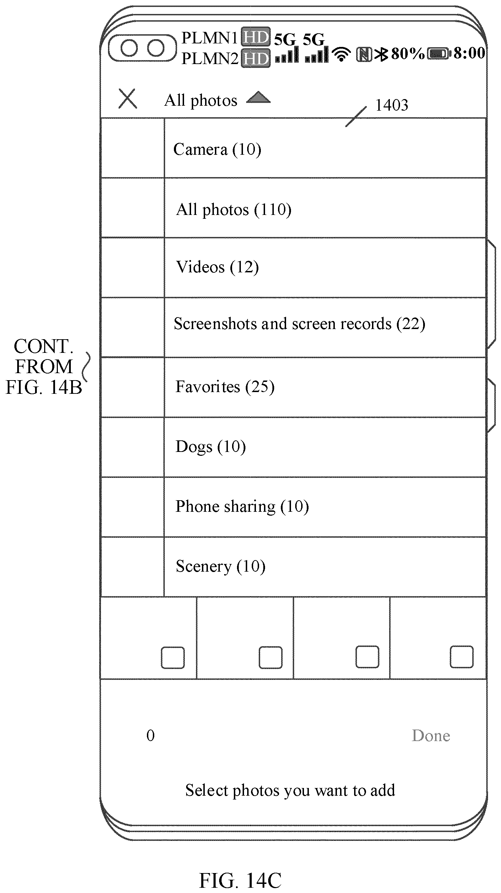

In a possible implementation, the twelfth interface further displays a fifteenth button for adding a photo in the hidden album, and the method further includes: The terminal device displays a sixteenth interface in response to a twenty-ninth operation on the fifteenth button, where the sixteenth interface displays a sixteenth button for switching the album. The terminal device displays a seventeenth interface in response to a thirtieth operation on the sixteenth button, where the seventeenth interface displays a drop-down menu, and the drop-down menu displays the album that is not hidden. In this way, because photos in an "all photos" album are displayed by default in an interface shown in FIG. 14B, and there is large quantity of photos in the "all photos" album, which does not facilitate view of the user, the user can flexibly select a photo to be added to the hidden albums from the albums in albums in a drop-down menu 1403 shown in FIG. 14C.

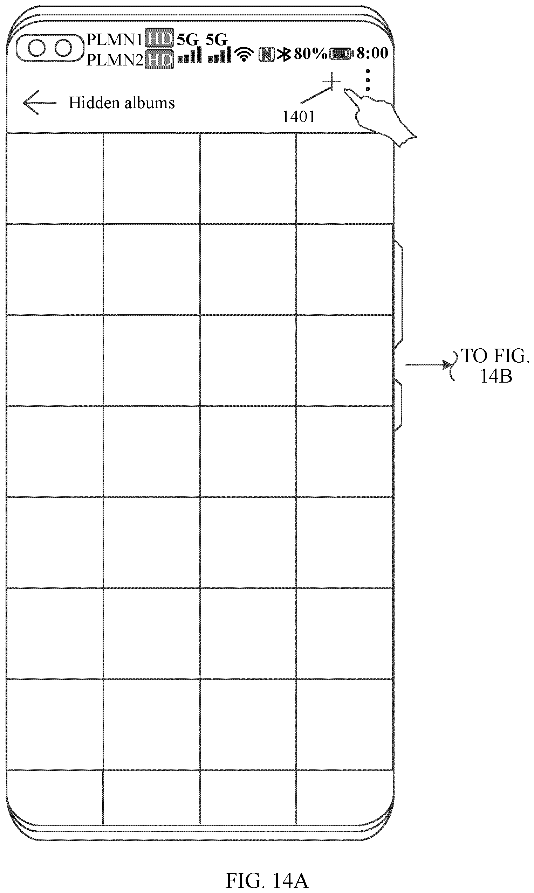

The twelfth interface may be an interface shown in FIG. 14A. The fifteenth button for adding the photo in the hidden album may be a button 1401 for adding a photo to a hidden album. The sixteenth interface may be an interface shown in FIG. 14B. The sixteenth button for switching the album may be a button 1402 for switching an album. The seventeenth interface may be an interface shown in FIG. 14C. The drop-down menu may be the drop-down menu 1403, and the drop-down menu 1403 includes an album that is not hidden.

It can be understood that the second aspect may be combined with at least one possible implementation of the first aspect to form a new solution.

According to a third aspect, an embodiment of this application provides a method for hiding a photo. The method further includes: The terminal device displays a first interface, where the first interface displays a third button for viewing more functions in albums. The terminal device displays a second pop-up window in response to a fourth operation on the third button, where the second pop-up window displays a first option for viewing a hidden album. The terminal device displays a third interface in response to a fifth operation on the first option, where the third interface displays a first album displayed in an album dimension and a seventeenth button for switching a display manner of a photo in the hidden album. When the hidden album satisfies a first view, the terminal device displays a sixth pop-up window in response to a thirty-first operation on the seventeenth button, where the sixth pop-up window displays a fourth option for switching to a second view. The terminal device displays the photo in the hidden album in the third interface in the second view in response to a thirty-second operation on the fourth option. This can enable a user to switch a view of the hidden album based on a requirement.

The first interface may be an ordinary album interface, for example, the first interface may be an interface shown in FIG. 2A. The third button for viewing the more functions in the albums may be a button 202 in the upper right corner of the interface shown in FIG. 2A for viewing more functions in albums.

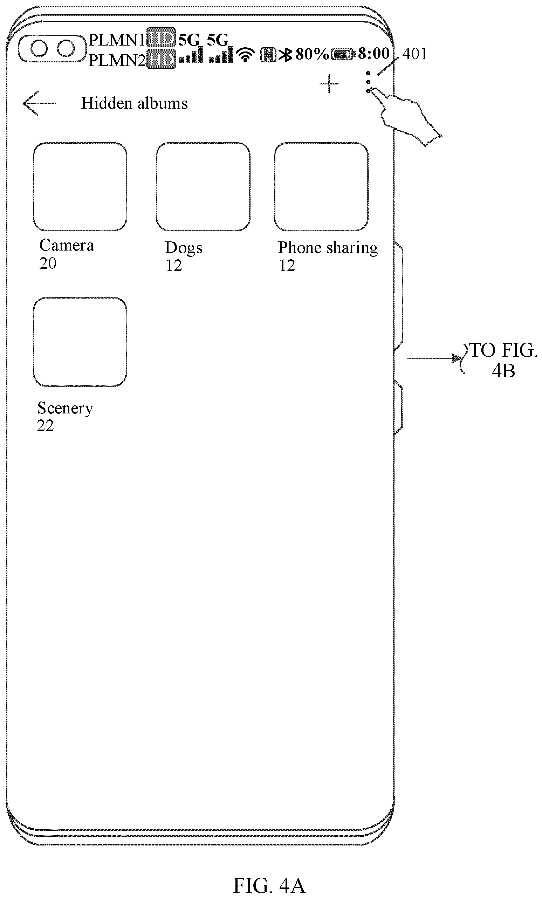

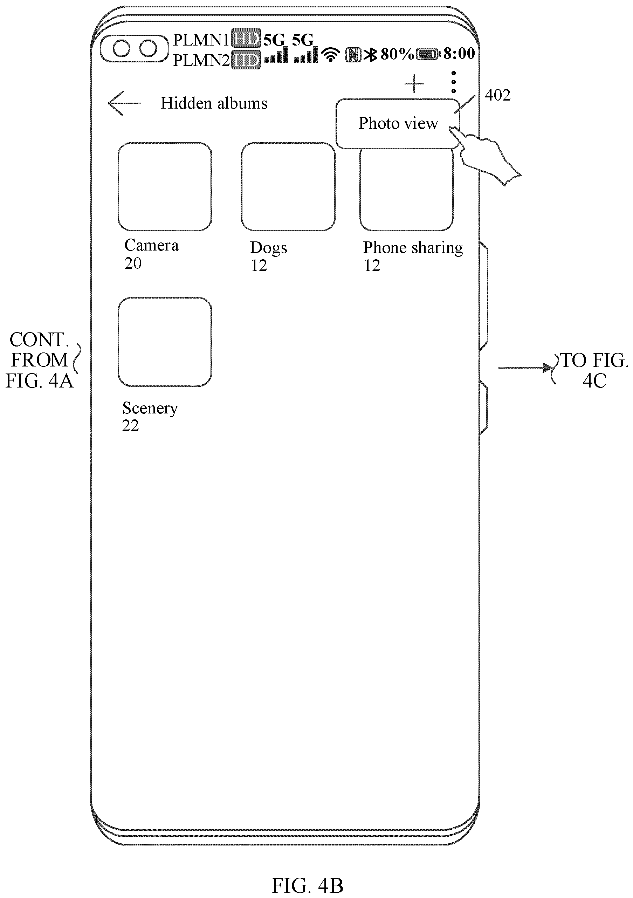

Descriptions are provided by using an example in which the third interface is an interface shown in FIG. 4A, the first view is an album view, and the second view is a photo view. The seventeenth button may be a button 401 for switching a display manner of a photo in a hidden album. The sixth pop-up window may be a menu pop-up window 402 of the hidden album in an interface shown in FIG. 4B. The fourth option may be a photo view option in the pop-up window 402.

In a possible implementation, when the first view is an album view, the second view is a photo view; or when the first view is the photo view, the second view is the album view.

It can be understood that the third aspect may be combined with at least one possible implementation of the first aspect and/or at least one possible implementation of the second aspect to form a new solution.

According to a fourth aspect, an embodiment of this application provides a method for hiding a photo. The method includes: A terminal device displays a first interface, where the first interface includes a first album. The terminal device displays a second interface in response to a first operation of selecting the first album, where the second interface displays a first button for hiding the album. The electronic device skips displaying an icon of the first album in the first interface in response to a second operation on the first button. When the terminal device shots a second image, and a name of an album to which the second image belongs is the same as a name of the first album, the terminal device displays an icon of a third album in the first interface, where the third album includes the second image. This can enable the terminal device to implement reasonable division of the hidden album and an unhidden album.

The first album may be a "camera" album shown in FIG. 7B. When the terminal device hides the "camera" album, the second image may be a new image shot by the terminal device based on a shooting function of the terminal device. The third album may be a "camera" album in an interface shown in FIG. 7E, and the second image may be an image in the "camera" album in the interface shown in FIG. 7E.

It can be understood that the fourth aspect may be combined with at least one possible implementation of the first aspect, at least one possible implementation of the second aspect, and/or at least one possible implementation of the third aspect to form a new solution.

According to a fifth aspect, an embodiment of this application provides a method for hiding a photo. The method further includes: A terminal device displays a first interface, where the first interface includes an icon of a fifth album. The terminal device displays a tenth interface in response to a sixteenth operation on the fifth album, where the tenth interface displays a third image. The terminal device displays an eleventh interface in response to a seventeenth operation on the third image, where the eleventh interface displays a ninth button for viewing more functions of the image. The terminal device displays a fourth pop-up window in response to an eighteenth operation on the ninth button, where the fourth pop-up window displays a second option for hiding the photo. The terminal device skips displaying the third image in the tenth interface in response to a nineteenth operation on the second option. This can enable the user to hide at least one photo by operating the at least one photo.

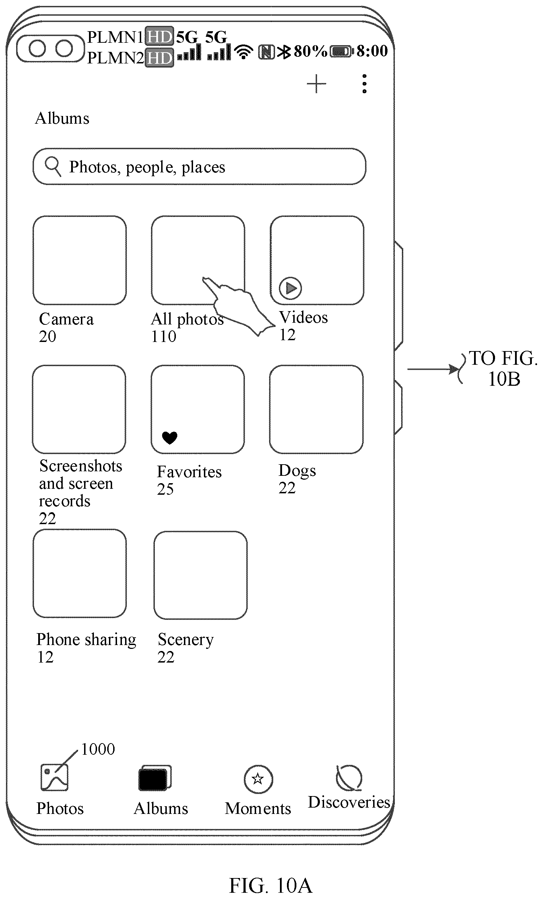

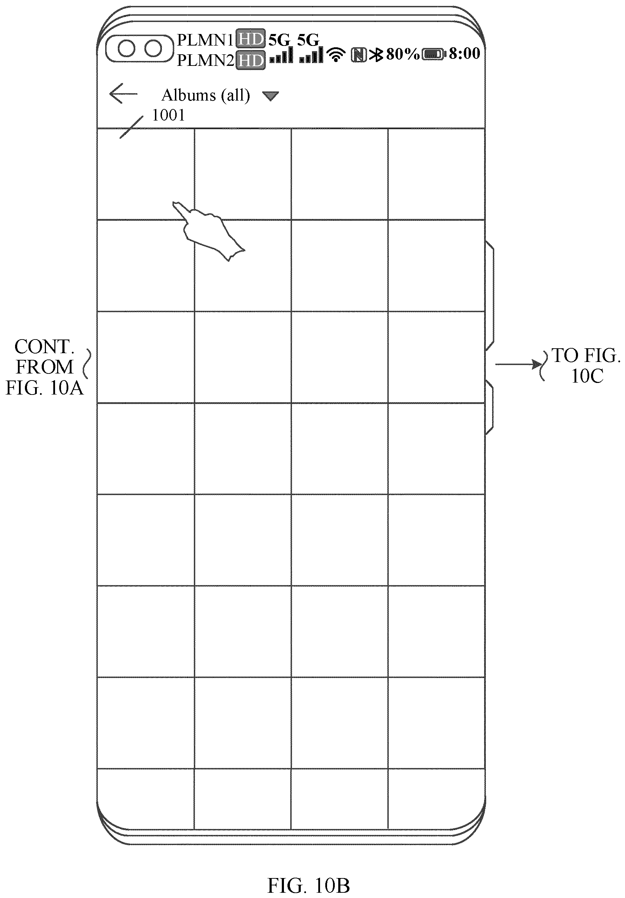

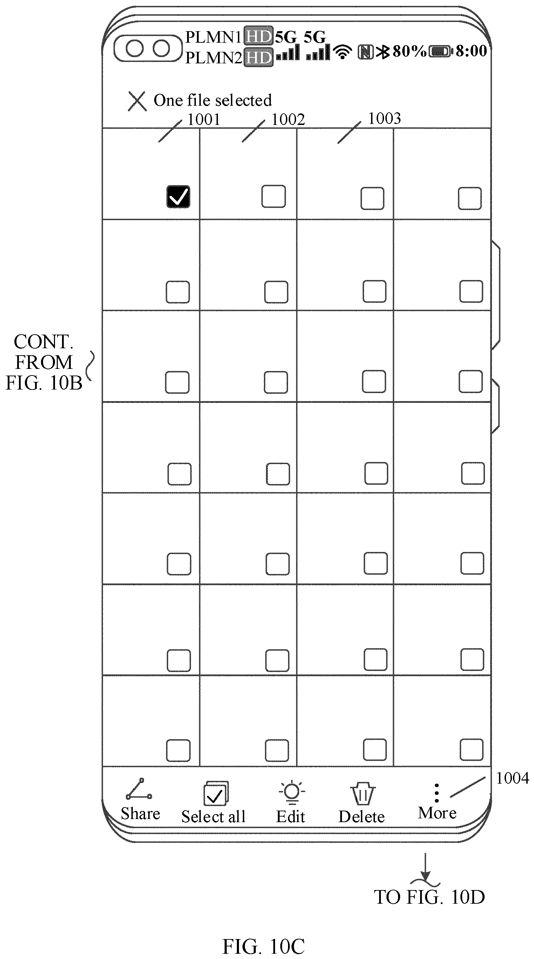

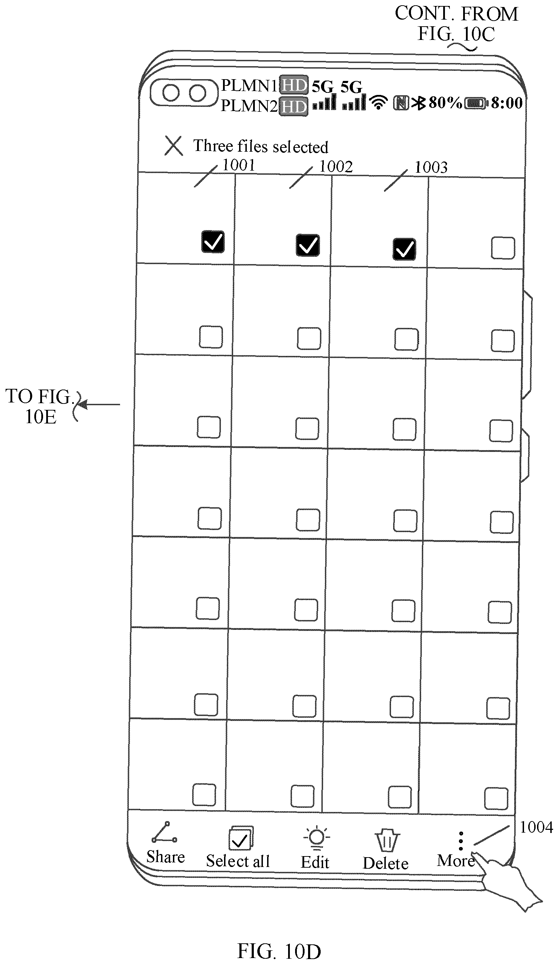

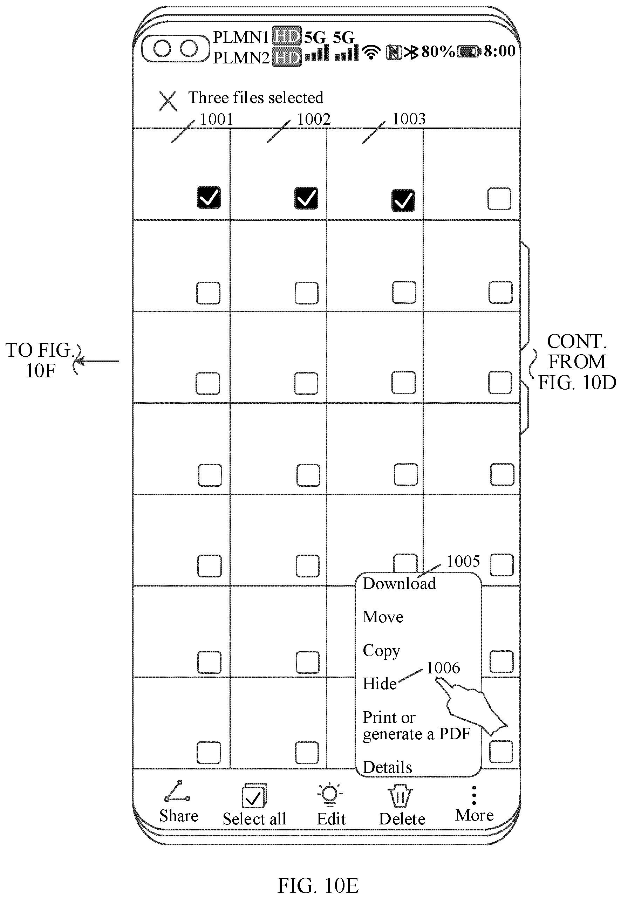

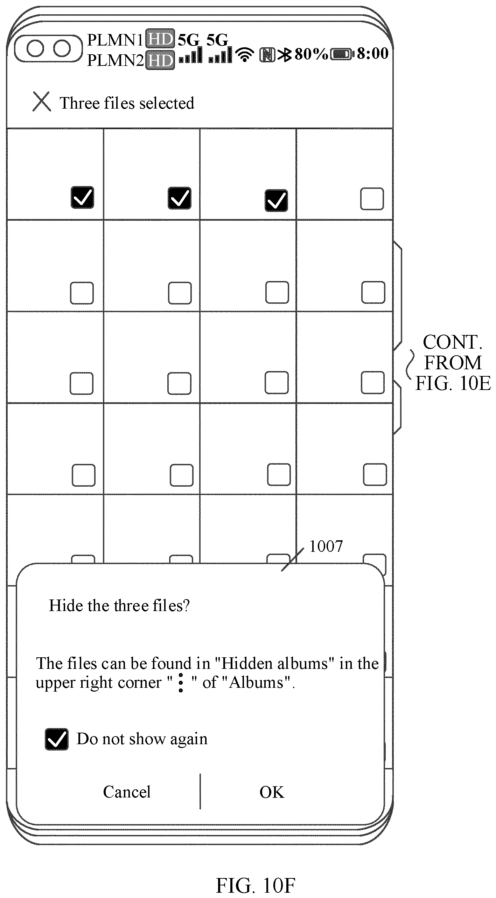

The first interface may be an interface shown in FIG. 10A. The fifth album may be an "all photos" album shown in FIG. 10A. The tenth interface may be an interface shown in FIG. 10B. The third image may be a photo 1001 shown in FIG. 10B. The eleventh interface may be an interface shown in c in FIG 10. The ninth button for viewing the more functions of the image may be a more button 1004 in the interface shown in c in FIG 10. The fourth pop-up window may be a menu pop-up window 1005 in photos shown in FIG. 10E, or may also be referred to as a pop-up window 1005. The second option for hiding the photo may be a hide option 1006 in the pop-up window 1005. In a possible implementation, the first interface further displays a tenth button for viewing more functions in albums, and the method further includes:

The terminal device displays a fifth pop-up window in response to a twentieth operation on the tenth button, where the fifth pop-up window displays a third option for viewing a hidden album. The terminal device displays a twelfth interface in response to a twenty-first operation on the third option, where the twelfth interface displays the third image. This can enable the user to redetermine whether to hide a photo in the pop-up window.

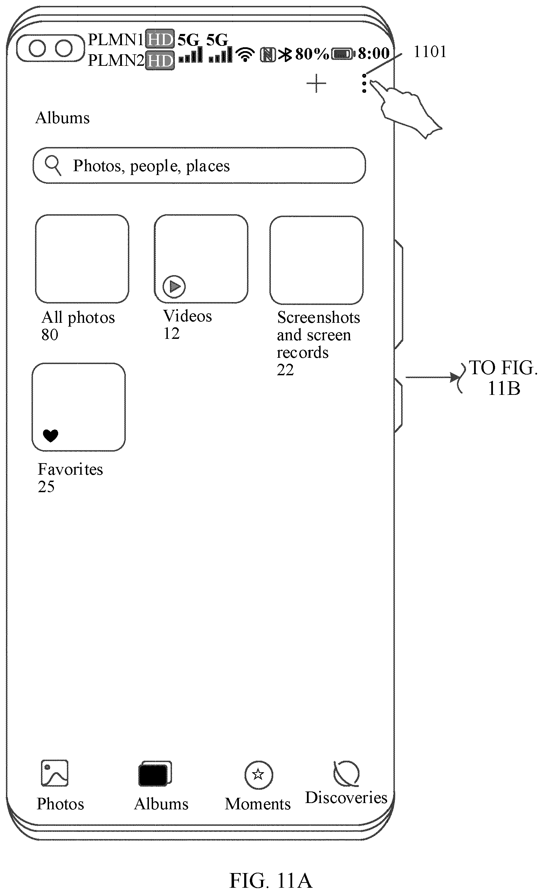

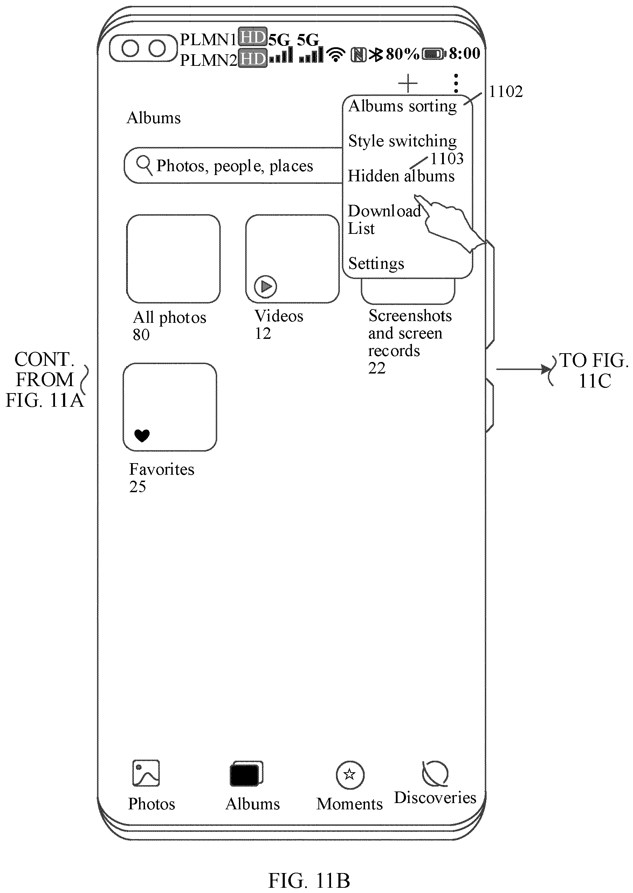

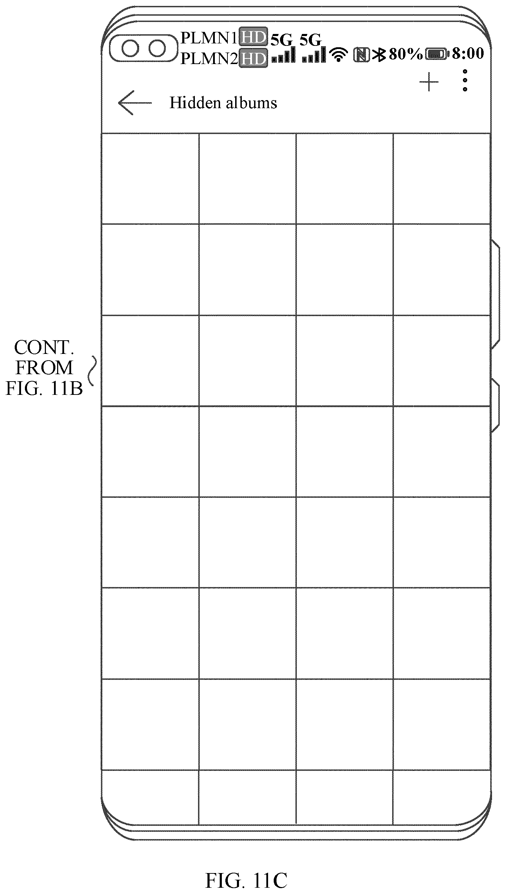

The tenth button for viewing the more functions in the albums may alternatively be a button 1101 in the upper right corner of an interface shown in FIG. 11A for viewing more functions in albums (or a button in the upper right corner of the interface shown in FIG. 10A for viewing more functions in albums). In the interface shown in FIG. 11A, the twentieth operation on the tenth button may be a tap operation on the button 1101. The fifth pop-up window may be a menu pop-up window 1102 in albums shown in FIG. 11B, or is referred to as a pop-up window 1102. The third option for viewing the hidden album may be a hidden album option 1103 in the pop-up window 1102. The twelfth interface may be an interface shown in FIG. 11C, and the interface includes photos displayed in an album dimension.

In a possible implementation, the twelfth interface further includes a fourth image, and the method further includes: The terminal device displays a thirteenth interface in response to a twenty-second operation of selecting the third image in the twelfth interface, where the thirteenth interface displays an eleventh button for unhiding the photo. In response to a twenty-third operation on the eleventh button, the terminal device skips displaying the third image, and displays the fourth image in the twelfth interface. This can enable the terminal device to provide a function for hiding the photo in a photo dimension, and provide a function for unhiding the photo in the photo dimension, simplify the method for hiding the photo, and improve user experience for the function for hiding the photo.

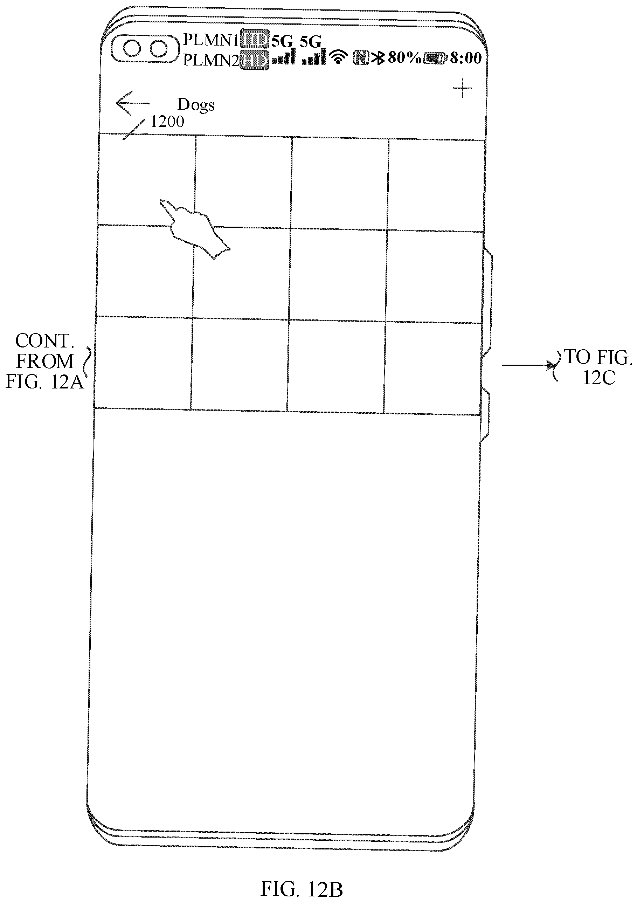

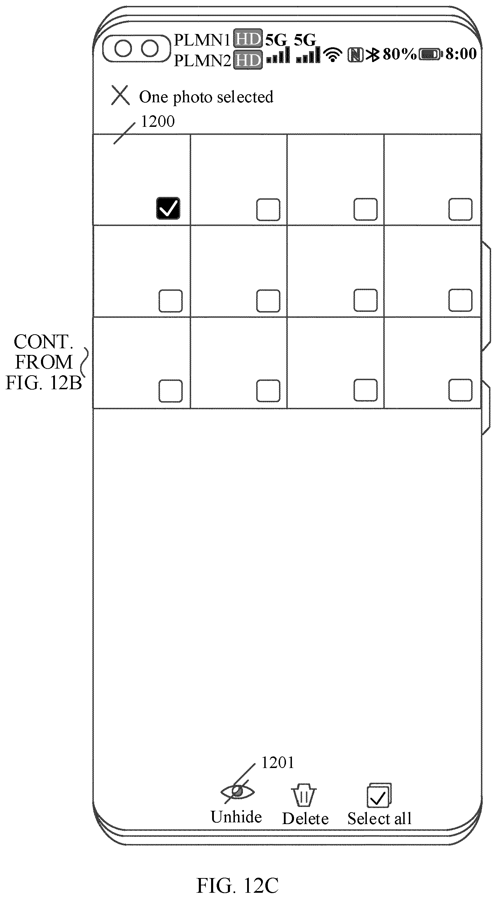

The twelfth interface may alternatively be an interface shown in FIG. 12B, and the third image may be a photo 1200 (or the twelfth interface may be the interface shown in FIG. 11C, and in this case, the third image may be any image in the interface shown in FIG. 11C). The thirteenth interface may be an interface shown in FIG. 12C. The eleventh button for unhiding the photo may be an unhide button 1201 in the interface shown in FIG. 12C.

It can be understood that the fifth aspect may be combined with at least one possible implementation of the first aspect, at least one possible implementation of the second aspect, at least one possible implementation of the third aspect, and/or at least one possible implementation of the fourth aspect to form a new solution.

According to a sixth aspect, an embodiment of this application provides an apparatus for hiding a photo, a display unit, configured to display a first interface, where the first interface displays an icon of a first album and an icon of a second album, the display unit is further configured to display a second interface in response to a first operation of selecting the first album, the second interface displays a first button for hiding the album, the display unit is further configured to display the first interface in response to a second operation on the first button, and after the second operation, the display unit is configured to display the icon of the second album in the first interface; and a processing unit, configured to skip displaying the icon of the first album.

In a possible implementation, the display unit is configured to display a first pop-up window in response to the second operation, and the first pop-up window displays text information prompting whether to hide the album and a second button for determining to hide the first album. The display unit is further configured to display the first interface in response to a third operation on the second button.

In a possible implementation, after the first operation, in response to the first operation, the processing unit is configured to determine whether the first album satisfies a preset condition, and when the preset condition is not satisfied, the first button is in a disabled state, or when the preset condition is satisfied, the first button is in an available state.

In a possible implementation, the first interface further displays a third button for viewing more functions in albums, the display unit is configured to display a second pop-up window in response to a fourth operation on the third button, and the second pop-up window displays a first option for viewing a hidden album. The display unit is configured to display a third interface in response to a fifth operation on the first option, and the third interface displays the icon of the first album.

In a possible implementation, the display unit is configured to display a fourth interface in response to a sixth operation of selecting the first album in the third interface, and the fourth interface displays a photo in the first album and a fourth button for adding a photo to the album. In response to a seventh operation on the fourth button, when a terminal device determines that there is a first album that is not hidden and has a same name as the first album, the display unit is configured to display a fifth interface, and the fifth interface displays a photo in the first album that is not hidden. Alternatively, in response to an eighth operation on the fourth button, when a terminal device determines that there is no album that is not hidden and has a same name as the first album, the display unit is configured to display a sixth interface, the sixth interface displays a photo that is not hidden, and the photo that is not hidden does not include the photo in the first album.

In a possible implementation, the fifth interface further displays a fifth button for viewing the album, the display unit is configured to display a seventh interface in response to a ninth operation on the fifth option, and the seventh interface displays an icon of a third album. The display unit is configured to display an eighth interface in response to a tenth operation of selecting the third album, and the eighth interface displays a first image in the third album and a sixth button indicating completion of adding the photo. When the first image is in a selected state, the display unit is further configured to display the first image in the third interface in response to an eleventh operation on the sixth button.

In a possible implementation, the display unit is configured to display a third pop-up window in response to the eleventh operation, the third pop-up window displays text information prompting to add a to-be-hidden photo across albums, and a seventh button for determining to hide the photo across albums. The display unit is further configured to display the first image in the third interface in response to a twelfth operation on the seventh button.

In a possible implementation, the third interface includes an icon of a fourth album, the display unit is configured to display a ninth interface in response to a thirteenth operation of selecting the first album in the third interface, and the ninth interface displays an eighth button for unhiding the album. In response to a fourteenth operation on the eighth button, the processing unit is further configured to skip displaying the icon of the first album in the third interface, and the display unit is further configured to display the icon of the fourth album.

In a possible implementation, when the terminal device obtains a second image, and the second image belongs to the first album, the terminal device displays the icon of the first album in the first interface. The display unit is configured to display a tenth interface in response to a fifteenth operation of selecting the first album, and the tenth interface displays the second image in the first album.

In a possible implementation, the first interface further displays an icon of a fifth album, in response to a sixteenth operation of selecting the fifth album, the display unit is configured to display a tenth interface, and the tenth interface displays a third image. The display unit is configured to display an eleventh interface in response to a seventeenth operation of selecting the third image, and the eleventh interface displays a ninth button for viewing more functions of the image. The display unit is configured to display a fourth pop-up window in response to an eighteenth operation on the ninth button, and the fourth pop-up window displays a second option for hiding the photo. The processing unit is configured to skip displaying the third image in the tenth interface in response to a nineteenth operation on the second option.

In a possible implementation, the first interface further displays a tenth button for viewing more functions in the albums, the display unit is configured to display a fifth pop-up window in response to a twentieth operation on the tenth button, and the fifth pop-up window displays a third option for viewing a hidden album. The display unit is configured to display a twelfth interface in response to a twenty-first operation on the third option, and the twelfth interface displays the third image.

In a possible implementation, the display unit is configured to display a thirteenth interface in response to a twenty-second operation of selecting the third image in the twelfth interface, and the thirteenth interface displays an eleventh button for unhiding the photo. In response to a twenty-third operation on the eleventh button, the processing unit is configured to skip displaying the third image in the twelfth interface, and display the fourth image.

In a possible implementation, the twelfth interface further displays a twelfth button for adding a photo in the hidden album, the display unit is configured to display a fourteenth interface in response to a twenty-fourth operation on the twelfth button, the fourteenth interface displays a thirteenth button for viewing the album, and the fourteenth interface further includes a fifth image and a fourteenth button indicating completion of adding the photo. In response to a twenty-fifth operation on the thirteenth button, the display unit is configured to display a fifteenth interface, and the fifteenth interface displays an album that is not hidden. The method further includes: When the fifth image is in a selected state, the processing unit is configured to add the fifth image to the hidden album in response to a twenty-sixth operation on the fourteenth button.

In a possible implementation, the display unit is configured to display the third interface in response to a twenty-seventh operation of opening the third interface, and the third interface includes a sixth album to which the fifth image belongs. The display unit is configured to display the fifth image in response to a twenty-eighth operation on the sixth album.

In a possible implementation, the twelfth interface further displays a fifteenth button for adding a photo in the hidden album, the display unit is configured to display a sixteenth interface in response to a twenty-ninth operation on the fifteenth button, and the sixteenth interface displays a sixteenth button for switching the album. The display unit is configured to display a seventeenth interface in response to a thirtieth operation on the sixteenth button, and the seventeenth interface displays a drop-down menu, and the drop-down menu displays the album that is not hidden.

In a possible implementation, a display style of the third interface is consistent with a display style of the first interface, the third interface further displays a seventeenth button for switching a display manner of a photo in the hidden album, when the hidden album satisfies a first view, the display unit is configured to display a sixth pop-up window in response to a thirty-first operation on the seventeenth button, and the sixth pop-up window displays a fourth option for switching to a second view. The terminal device displays the photo in the hidden album in the third interface in the second view in response to a thirty-second operation on the fourth option.

In a possible implementation, when the first view is an album view, the second view is a photo view; or when the first view is the photo view, the second view is the album view.

According to a seventh aspect, an embodiment of this application provides a terminal device, including a memory, a processor, and a computer program that is stored in the memory and that can be run on the processor. When the processor executes the computer program, the terminal device is enabled to perform the method according to any one of the first aspect or the implementations of the first aspect, or the method according to any one of the second aspect or the implementations of the second aspect, or the method according to any one of the third aspect or the implementations of the third aspect, or the method according to any one of the fourth aspect or the implementations of the fourth aspect, or the method according to any one of the fifth aspect or the implementations of the fifth aspect.

According to an eighth aspect, an embodiment of this application provides a computer-readable storage medium. The computer-readable storage medium stores instructions, and when the instructions are executed, a computer is enabled to perform the method according to any one of the first aspect or the implementations of the first aspect, or the method according to any one of the second aspect or the implementations of the second aspect, or the method according to any one of the third aspect or the implementations of the third aspect, or the method according to any one of the fourth aspect or the implementations of the fourth aspect, or the method according to any one of the fifth aspect or the implementations of the fifth aspect.

According to a ninth aspect, a computer program product is provided and includes a computer program. When the computer program is run, a computer is enabled to perform the method according to any one of the first aspect or the implementations of the first aspect, or the method according to any one of the second aspect or the implementations of the second aspect, or the method according to any one of the third aspect or the implementations of the third aspect, or the method according to any one of the fourth aspect or the implementations of the fourth aspect, or the method according to any one of the fifth aspect or the implementations of the fifth aspect.

It should be understood that the sixth aspect to the eighth aspect of this application correspond to technical solutions of the first aspect to the fifth aspect of this application, and beneficial effect obtained by each aspect and the corresponding feasible implementations is similar. Details are not described herein again.

### BRIEF DESCRIPTION OF DRAWINGS

FIG. 1 is a schematic diagram of a hardware structure of a terminal device according to an embodiment of this application;
FIG. 2A to FIG. 2C are a schematic diagram of interfaces in a first display style according to an embodiment of this application;
FIG. 3A to FIG. 3C are a schematic diagram of interfaces in a second display style according to an embodiment of this application;
FIG. 4A to FIG. 4C are a schematic diagram of interfaces in which an album view is switched to a photo view according to an embodiment of this application;
FIG. 5A to FIG. 5C are a schematic diagram of interfaces in which a photo view is switched to an album view according to an embodiment of this application;
FIG. 6A to FIG. 6E are a schematic diagram of interfaces of hiding photos according to an embodiment of this application;
FIG. 7A to FIG. 7F are a schematic diagram of interfaces of adding a photo according to an embodiment of this application;
FIG. 8A to FIG. 8C are a schematic diagram of interfaces of unhiding an album according to an embodiment of this application;
FIG. 9A and FIG. 9B are a schematic diagram of interfaces of hiding a photo in a photo dimension according to an embodiment of this application;
FIG. 10A to FIG. 10F are a schematic diagram of interfaces of hiding a photo in another photo dimension according to an embodiment of this application;
FIG. 11A to FIG. 11C are a schematic diagram of interfaces of viewing hidden albums according to an embodiment of this application;
FIG. 12A to FIG. 12C are a schematic diagram of other interfaces of unhiding an album according to an embodiment of this application;
FIG. 13A to FIG. 13C are a schematic diagram of interfaces of adding a photo to hidden albums in a photo view according to an embodiment of this application;
FIG. 14A to FIG. 14C are a schematic diagram of other interfaces of adding a photo to hidden albums in a photo view according to an embodiment of this application;
FIG. 15A to FIG. 15D are a schematic diagram of interfaces of adding a photo to a hidden album according to an embodiment of this application;
FIG. 16A to FIG. 16H are a schematic diagram of other interfaces of adding a photo to a hidden album according to an embodiment of this application;
FIG. 17A to FIG. 17C are a schematic diagram of interfaces of renaming a hidden album according to an embodiment of this application;
FIG. 18 is a schematic flowchart of a method for hiding a photo according to an embodiment of this application;
FIG. 19 is a schematic diagram of a structure of an apparatus for hiding a photo according to an embodiment of this application; and
FIG. 20 is a schematic diagram of a hardware structure of another terminal device according to an embodiment of this application.

### DETAILED DESCRIPTION

For ease of describing the technical solutions in embodiments of this application clearly, in embodiments of this application, words such as "first" and "second" are used to distinguish same or similar items with a basically same function and role. For example, a first value and a second value are merely used to distinguish between different values, and are not intended to limit a sequence thereof. A person skilled in the art may understand that the terms "first", "second", and the like, and do not limit a quantity and an execution order, and the terms "first", "second", and the like are not limited to be necessarily different.

It should be noted that, in this application, the term "example" or "for example" is used to represent giving an example, an illustration, or a description. Any embodiment or design scheme described as an "example" or "for example" in this application should not be explained as being more preferred or having more advantages than another embodiment or design scheme. In particular, the terms such as "example" and "example" as used herein are intended to present the related concept in a specific implementation.

In this application, "at least one" refers to one or more, and "a plurality of" refers to two or more. The term "and/or" describes an association relationship for associated objects and represents that three relationships may exist. For example, A and/or B may represent: Only A exists, both A and B exist, and only B exists, where A and B may be singular or plural. The character "/" in this specification generally indicates an "or" relationship between the associated objects. "At least one of the following items (pieces)" or a similar expression means any combination of these items, including a single item (piece) or any combination of a plurality of items (pieces). For example, at least one of a, b, or c may represent: a, b, c, a-b, a-c, b-c, or a-b-c, where a, b, and c may be single or multiple.

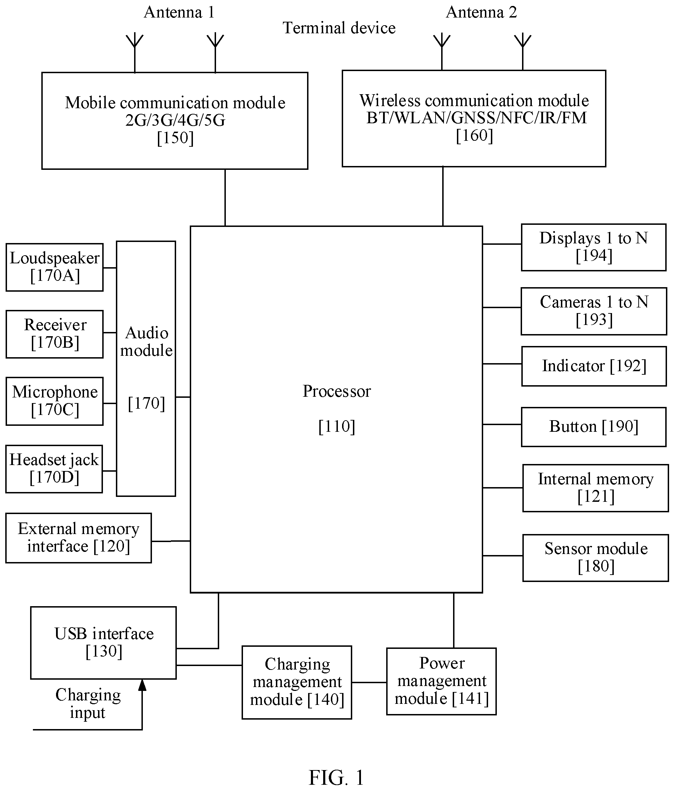

To better understand embodiments of this application, the following describes a structure of a terminal device in embodiments of this application. For example, FIG. 1 is a schematic diagram of a structure of a terminal device according to an embodiment of this application.

It may be understood that, the terminal device may alternatively be referred to as a terminal (terminal), user equipment (user equipment, UE), a mobile station (mobile station, MS), a mobile terminal (mobile terminal, MT), or the like. The terminal device may be a mobile phone (mobile phone) having a display, a smart television, a wearable device, a tablet computer (Pad), a computer having a wireless transmission and receiving function, a virtual reality (Virtual Reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Embodiments of this application impose no limitation on a specific technology and a specific device form used by the electronic device.

As shown in FIG. 1, the terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a button 190, an indicator 192, a camera 193, a display 194, and the like.

It may be understood that an example structure in this embodiment of this application does not constitute a specific limitation on the terminal device. In some other embodiments of this application, the terminal device may include more or fewer components than those shown in the figure, or combine some components, or split some components, or have different component arrangements. The components in the figure may be implemented by hardware, software, or a combination of software and hardware.

The processor 110 may include one or more processing units. Different processing units may be separate devices, or may be integrated into one or more processors. A memory may alternatively be disposed in the processor 110, and is configured to store instructions and data.

The USB interface 130 is an interface that complies with the USB standard specification, and may be specifically a mini-USB interface, a micro-USB interface, a USB type-c interface, and the like. The USB interface 130 may be configured to connect to a charger to charge the terminal device, or may be used for data transmission between the terminal device and a peripheral device, The USB interface 130 may alternatively be configured to connect to a headset to play audio through the headset. The interface may alternatively be configured to be connected to another electronic device like an AR device.

The charging management module 140 is configured to receive charging input from the charger. The charger may be a wireless charger or a wired charger. The power management module 141 is configured to connect to the charging management module 140 and the processor 110.

A wireless communication function of the terminal device may be implemented through the antenna 1, the antenna 2, the mobile communication module 150, the wireless communication module 160, the modem processor, the baseband processor, and the like.

The antenna 1 and the antenna 2 are configured to receive and transmit electromagnetic wave signals. An antenna in the terminal device may be configured to cover a single communication frequency band or a plurality of communication frequency bands. Different antennas may alternatively be multiplexed to improve utilization of the antennas.

The mobile communication module 150 may provide a solution for wireless communication such 2G/ 3G/ 4G/ 5G to be applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and send a processed electromagnetic wave to the modem processor for demodulation.

The wireless communication module 160 may provide a solution for wireless communication including wireless local area networks (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), and the like to be applied to the terminal device.

The terminal device implements a display function by using a GPU, the display 194, the application processor, and the like. The GPU is a microprocessor for image processing and connects the display 194 and the application processor. The GPU is configured to perform mathematical and geometric calculations, and is configured to render graphics.

The display 194 is configured to display an image, a video, and the like. The display 194 includes a display panel. In some embodiments, the terminal device may include 1 or N displays 194. N is a positive integer greater than 1.

In a possible implementation, when the terminal device is a device having a touch function, the display 194 may be combined with a touchscreen. When a user presses a corresponding location of the display 194, it is equivalent to a user pressing a corresponding location of the touchscreen.

The press operation may include a tap operation, a touch and hold operation, and the like. The tap operation may be an operation that is pressed at the corresponding location of the display 194 and lifted within a preset time threshold. The touch and hold operation may be an operation that is pressed at the corresponding location of the display 194 and lifted after continuously pressed for a preset time threshold. It may be understood that both the tap operation and the touch and hold operation described in embodiments of this application may be used in the terminal device on which the display 194 is combined with the touchscreen. Details are not described below.

In a possible implementation, the display 194 may not be combined with a touchscreen. The tap operation and the touch and hold operation in embodiments of this application may be replaced with other operations. This is not limited in embodiments of this application.

The terminal device may implement a photographing function by using the ISP, the camera 193, a video codec, the GPU, the display 194, the application processor, and the like.

The camera 193 is configured to capture a still image or video. In some embodiments, the terminal device may include one or N cameras 193, where N is a positive integer greater than 1.

The external memory interface 120 may be configured to connect to an external storage card like a micro SD card, to extend a storage capability of the terminal device. The external storage card communicates with the processor 110 by using the external memory interface 120, to implement a data storage function, for example, store files such as music and a video into the external storage card.

The internal memory 121 may be configured to store computer-executable program code, where the executable program code includes instructions. The internal memory 121 may include a program storage area and a data storage area.

The terminal device may implement an audio function, for example, music playback and recording, by using the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The speaker 170A, also referred to as a "loudspeaker", is configured to convert an audio electrical signal into a sound signal. Music can be listened to or a hands-free call can be answered by using the speaker 170A in the terminal device. The receiver 170B, also referred to as a "handset", is configured to convert an audio electrical signal into a sound signal. When a call is answered or voice information is listened to by using the terminal device, the receiver 170B may be put close to a human ear to listen to a voice. The headset jack 170D is configured to be connected to a wired headset.

The microphone 170C, also referred to as a "mike" or "mic", is configured to convert a sound signal into an electrical signal. In this embodiment of this application, the terminal device may receive a sound signal for waking up the terminal device based on the microphone 170C, and convert the sound signal into an electrical signal that can be subsequently processed, and the terminal device may have at least one microphone 170C.

The sensor module 180 may include one or more following types of sensors: a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like (not shown in FIG. 1).

The button 190 includes a power button, a volume button, and the like. The button 190 may be a mechanical button, or a touch-type button. The terminal device may receive button input, and generate button signal input related to user setting and function control of the terminal device. The indicator 192 may be an indicator light that may be configured to indicate a charging status and a power change, or may be configured to indicate a message, a missed call, a notification, and the like.

A software system of the terminal device may use a layered architecture, an event-driven architecture, a microkernel architecture, a micro service architecture, a cloud architecture, or the like. Details are not described herein again.

The following describes, in detail by using specific embodiments, the technical solutions of this application and how to resolve the foregoing technical problems according to the technical solutions of this application. The following several specific embodiments may be independently implemented, and may also be combined with each other, and the same or similar concepts or processes may not be described repeatedly in some embodiments.

In embodiments of this application, descriptions are provided by using an example in which the terminal device is a mobile phone, and the example does not constitute a limitation on embodiments of this application.

In embodiments of this application, a gallery application on the terminal device may support display styles in two album dimensions, such as a first display style and a second display style. In the first display style, each album can be of a same size, and three albums can be displayed in a column in an ordinary album interface. In the second display style, the terminal device can display albums in different sizes, and display one album in one column or two albums in one column in an ordinary album interface. In addition, the first display style and the second display style may be switched based on user's operations.

The ordinary album interface may be understood as an interface that displays an album that is not hidden or an interface that displays a photo that is not hidden, and the ordinary interface may also be referred to an non-hidden album interface, or the like. Details are not described below.

In a possible implementation, the ordinary album interface can further support a list display style of displaying albums in a list, so that the user can switch between the first display style, the second display style, and the list display style.

Hiding an album may be understood as modifying a label (or an identifier) of the album, so that the album cannot be displayed in an ordinary album interface, and a storage path of the album is not changed. Hiding an album may alternatively be understood as adding the album to a hidden album interface displayed in an album view.

Hiding a photo may be understood as modifying the label (or an identifier) of the photo, so that the photo cannot be displayed in a multi-grid displayed ordinary album interface, and a storage path of the photo is not changed. Hiding a photo may alternatively be understood as adding the photo to a hidden album interface displayed in a photo view.

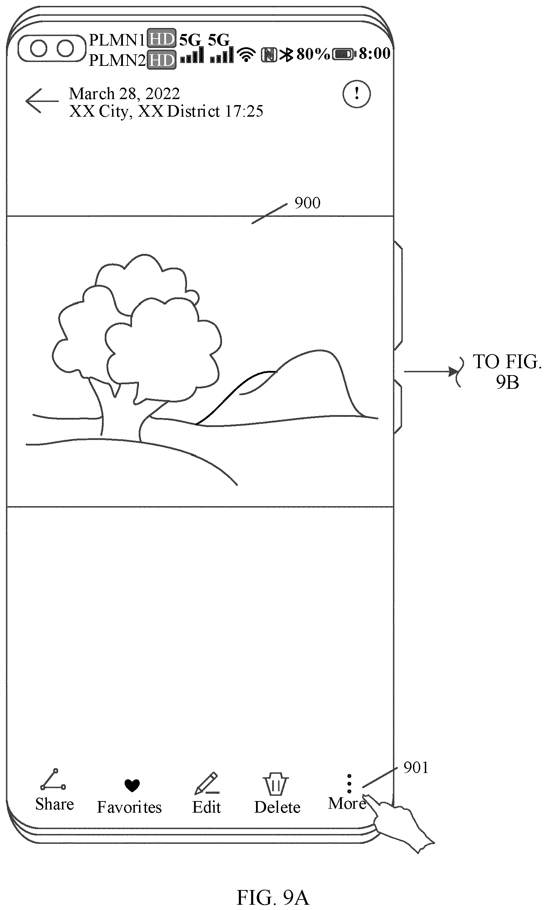

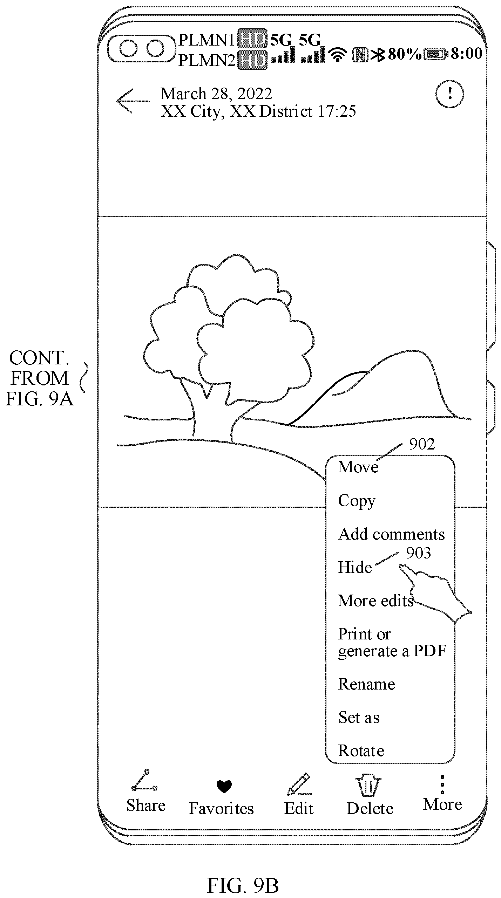

A hidden album is not a physical album, or may be understood as a virtual album. A storage location of any album in the hidden album is the same as a storage location of the album when the album is not hidden. A function for hiding an album may be used to hide a photo or an album in an ordinary album interface. For example, a user may implement the function for hiding the photo in an album dimension, for example, hide all photos in an album in the ordinary album interface through a specific interface (as shown in an embodiment corresponding to FIG. 6A to FIG. 6E); or implement the function for hiding the photo in an photo dimension (an embodiment corresponding to FIG. 9A and FIG. 9B and an embodiment corresponding to FIG. 10A to FIG. 10F). However, when the user needs to view the hidden album, the user may open the hidden album interface through a specific interface, to view the hidden album in the hidden album interface, or view the photo in the hidden album interface.

It may be understood that when an album is hidden, the album that is hidden and the photo in the album that is hidden cannot be viewed when the user views the album from another application or another functional interface.

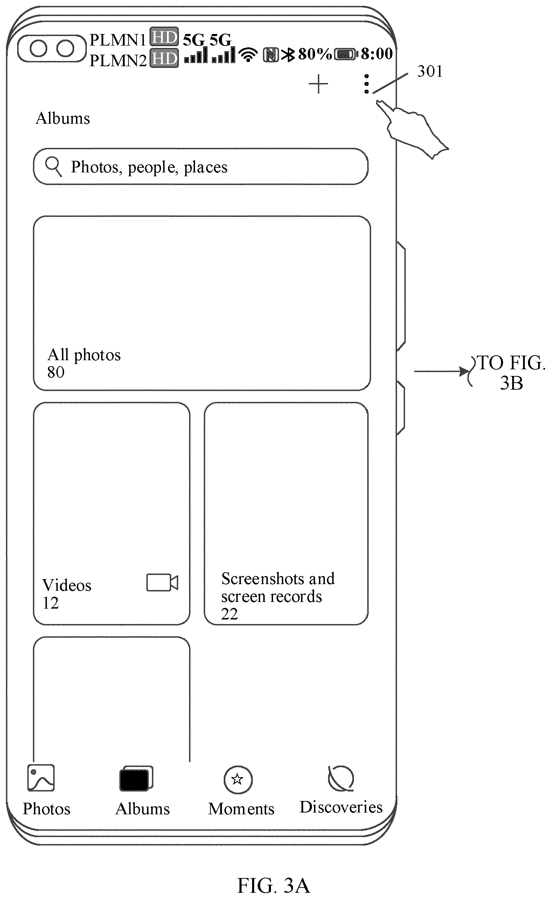

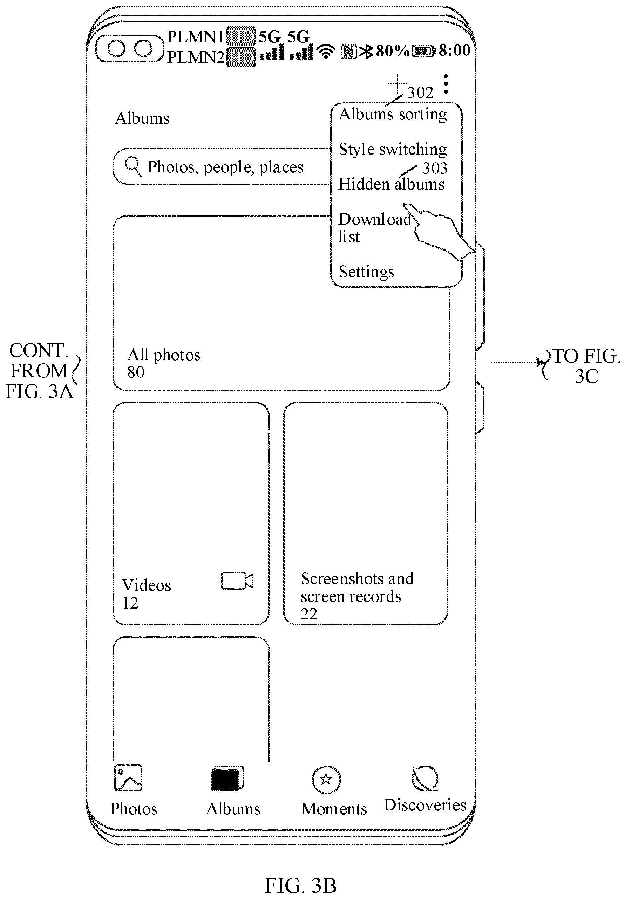

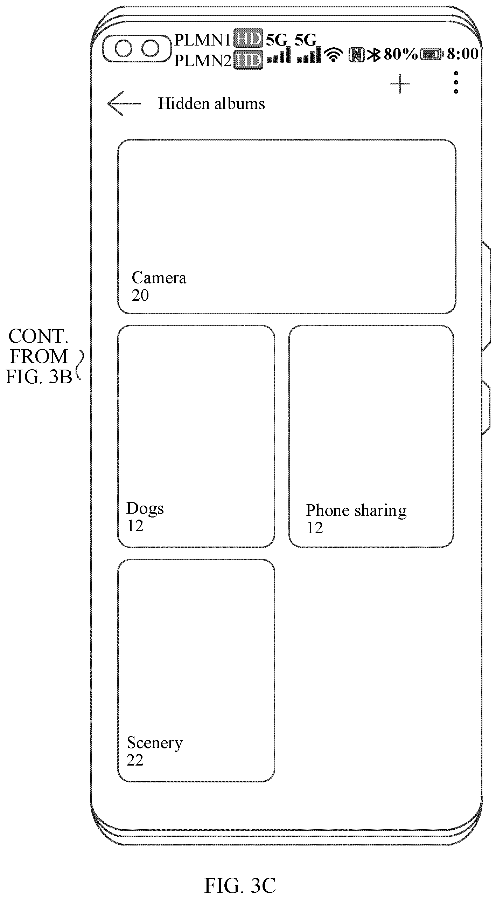

It may be understood that the two album display styles can be used not only to the ordinary album interface, but also to the hidden album interface, and a display style in the hidden album interface may be similar to a display style in the ordinary album interface. For example, when the ordinary album interface of the terminal device satisfies the first display style, and the terminal device detects an operation that the user opens the hidden album, the terminal device displays the hidden album interface, and the hidden album interface satisfies the first display style (refer to an embodiment corresponding to FIG. 2A to FIG. 2C). Alternatively, when the ordinary album interface of the terminal device satisfies the second display style, and the terminal device detects an operation that the user opens the hidden album, the terminal device displays the hidden album interface, and the hidden album interface satisfies the second display style (refer to an embodiment corresponding to FIG. 3A to FIG. 3C). For the operation of opening the hidden album, refer to descriptions in the embodiment corresponding to FIG. 2A to FIG. 2C (or the embodiment corresponding to FIG. 3Ato FIG. 3C).

For example, FIG. 2A to FIG. 2C is a schematic diagram of interfaces in a first display style according to an embodiment of this application.

When a terminal device detects an operation in which a user opens a gallery application, the terminal device may display an interface shown in FIG. 2A. For example, when the terminal device detects a user's tap operation on a button for opening the gallery application, the terminal device may display the interface shown in FIG. 2A. The interface may be an ordinary album interface satisfying the first display style and satisfying three albums in one column, where each album in the interface has a same size. The button for opening the gallery application may be a button in a desktop of the terminal device. This is not limited in embodiments of this application.

As shown in the interface in FIG. 2A, the interface may include content, such as text labels of albums, a text box for searching for photos, people, places, a button 201 for adding an album (a button 201 corresponding to a plus icon shown in FIG. 2A), a button 202 for viewing more functions in the albums (a button 202 including three vertical points shown in FIG. 2A), a button 203 for viewing photos in a photo dimension (a photos button 203 shown in FIG. 2A), a button 204 for viewing photos in an album dimension (an albums button 204 shown in FIG. 2A), a button 205 for viewing photos in a time dimension (a moments button 205 shown in FIG. 2A), a button 206 for viewing photos in a form of photo types (a discoveries button 206 shown in FIG. 2A), and a plurality of albums. The plurality of albums may include an "all photos" album with 80 photos, a "videos" album with 12 videos, a "screenshots and screen records" album with 22 photos, and a "favorites" album with 25 photos.

The albums button 204 is in a selected state, and an icon indicating video content may be displayed on the "videos" album (or around the "videos" album). The gallery application is an image management application on the terminal device, and is also referred to as an "album" application, or the like. A name of the application is not limited in embodiments of this application. The gallery application can support the user to perform various operations on photos stored on the terminal device, such as browse, edit, delete, select, and hide operations.

In a possible implementation, when the terminal device detects the operation in which the user opens the gallery application, the terminal device may display in default, the interface satisfying the first display style shown in FIG. 2A. Alternatively, the terminal device may determine, based on a display style of an ordinary album interface before the user last exited the gallery application, for example, if the first display style is satisfied, when the terminal device detects the operation in which the user opens the gallery application, and the terminal device may display the interface shown in FIG. 2A.

It may be understood that the terminal device may display the interface shown in FIG. 2A based on another user operation. For example, the button 204 may represent viewing the photos in the album dimension. When the user taps the button 204, the terminal device displays the interface shown in FIG. 2A. This is not limited in embodiments of this application.

In the interface shown in FIG. 2A, when the terminal device detects a tap operation on the button 202, the terminal device may display a menu pop-up window 207 (also referred to as a pop-up window 207) for the albums. For example, the terminal device may display an interface shown in FIG. 2B. As shown in the interface in FIG. 2B, the interface may include the pop-up window 207. For other content displayed in the interface, refer to that in the interface shown in FIG. 2A. Details are not described herein again. The pop-up window 207 may be an interface superimposed in the interface shown in FIG. 2B.

The pop-up window 207 is used to display more functions in the gallery application. The pop-up window 207 may be an interactive pop-up window. This is not limited in embodiments of this application. Specifically, the pop-up window 207 may include an albums sorting option, a style switching option, a hidden albums option 208, a download list option, a settings option, and the like. The albums sorting option is used to reorder the albums, the style switching option is used to switch a display style of the albums, the hidden albums option 208 is used to view a hidden album, the download list option is used to view a downloaded album, and the settings option is used to set the albums in the gallery application.

In the interface shown in FIG. 2B, when the terminal device receives a tap operation on the hidden albums option 208, the terminal device may display an interface shown in FIG. 2C. As shown in the interface in FIG. 2C, the interface may be a hidden album interface that meets the first display style, and the interface may include a button for adding a photo to the hidden albums (a button with a plus sign in the upper right corner as shown in FIG. 2C), a button for exiting the hidden album interface (a button with a left arrow in the upper left corner as shown in FIG. 2C), text information indicating the hidden albums, a button for switching a display manner of photos in the hidden albums (a button including three vertical points in the upper right corner as shown in FIG. 2C), a plurality of hidden albums, and the like. The plurality of hidden albums may include albums, such as a "camera" album with 20 photos, a "dogs" album with 12 photos, a "phone sharing" album with 12 photos, and a "scenery" album with 22 photos.

It may be understood that a display style of the ordinary album interface shown in FIG. 2A is consistent with a display style of the hidden album interface shown in FIG. 2C, and both may be the first display style.

For example, FIG. 3A to FIG. 3C are a schematic diagram of interfaces in a second display style according to an embodiment of this application.

When a terminal device detects an operation in which a user opens a gallery application, the terminal device may display an interface shown in FIG. 3A. For example, when the terminal device detects a user's tap operation on a button for opening the gallery application, the terminal device may display the interface shown in FIG. 3A. The interface may be an ordinary album interface satisfying the second display style and satisfying one album in one column or two albums in one column, where each album in the interface may have a different size.

As shown in the interface in FIG. 3A, an "all photos" album with a largest size in the interface is in one column by the album. A size of a "videos" album and a size of a "screenshots and screen records" album in the interface are different from that of the "all photos" album, and the "videos" album and the "screenshots and screen records" album are displayed in one column. The interface shown in FIG. 3A includes content such as a button 301 for viewing more functions in albums. Other content displayed in the interface is similar to that in the interface shown in FIG. 2A. Details are not described herein again. An icon indicating video content may be displayed on the "videos" album (or around the "videos" album).

In the interface shown in FIG. 3A, when the terminal device detects a tap operation on the button 301, the terminal device may display a pop-up window 302. For example, the terminal device may display an interface shown in FIG. 3B. As shown in the interface in FIG. 3B, the interface may include the pop-up window 302. The pop-up window 302 may include a hidden albums option 303. For other content displayed in the interface, refer to that in the interface shown in FIG. 2B. Details are not described herein again.

In the interface shown in FIG. 3B, when the terminal device receives a tap operation on the hidden albums option 303, the terminal device may display an interface shown in FIG. 3C. As shown in the interface in FIG. 3C, the interface may be a hidden album interface that satisfies the second display style. Sizes of each album in this interface may be different, and the interface satisfies one album in one column or two albums in one column. A "camera" album in this interface has a largest size and is in one column by the album. A size of a "dogs" album and a size of a "phone sharing" album in this interface are different from that of the "camera" album, and the "dogs" album and the "phone sharing" album are displayed in one column. For other content displayed in this interface, refer to that in the interface shown in FIG. 2C. Details are not described herein again.

It may be understood that a display style of the ordinary album interface shown in FIG. 3A is consistent with a display style of the hidden album interface shown in FIG. 3C, and both may be the second display style.

In a possible implementation, the terminal device may further support switching between the two display styles in the ordinary album interface. For example, in the ordinary album interface that satisfies the first display style as shown in FIG. 2B, when the terminal device detects a user's tap operation on the style switching option in the pop-up window 207, the terminal device may switch from the interface shown in FIG. 2B to the ordinary album interface that satisfies the second display style as shown in FIG. 3A. Alternatively, in the ordinary album interface that satisfies the second display style as shown in FIG. 3B, when the terminal device detects a user's tap operation on the style switching option in the pop-up window 302, the terminal device may switch from the interface shown in FIG. 3B to the ordinary album interface that satisfies the first display style as shown in FIG. 2A.

It may be understood that in embodiments corresponding to FIG. 2A to FIG. 2C and FIG. 3A to FIG. 3C, the first display style and the second display style are only used to distinguish different display styles in the ordinary album interface and the hidden album interface respectively. Names of the first display style and the second display style are not limited in embodiments of this application.

Based on this, keeping a same display style in both the ordinary album interface and the hidden album interface of the terminal device can improve user experience on a function for hiding a photo and avoid discomfort caused by different display styles when the terminal device switches from the ordinary album interface to the hidden album interface.

On the basis of opening the hidden album interface in embodiments corresponding to FIG. 2A to FIG. 2C and FIG. 3A to FIG. 3C, the hidden album interface of the terminal device may include two display manners or views, such as an album view and a photo view. In addition, the album view and the photo view may be switched. In the album view, the terminal device displays at least one album, so that the user can directly view the album and view a photo in the album based on a tap operation on the album. In the photo view, the terminal device displays at least one photo, so that the user can directly view the photo, and the photo view satisfies multi-grid display.

It may be understood that when the terminal device detects an operation in which the user opens the hidden albums, the hidden albums can support the album view and the photo view, and the terminal device can also support switching from the album view to the photo view in the hidden albums and from the photo view to the album view in the hidden albums.

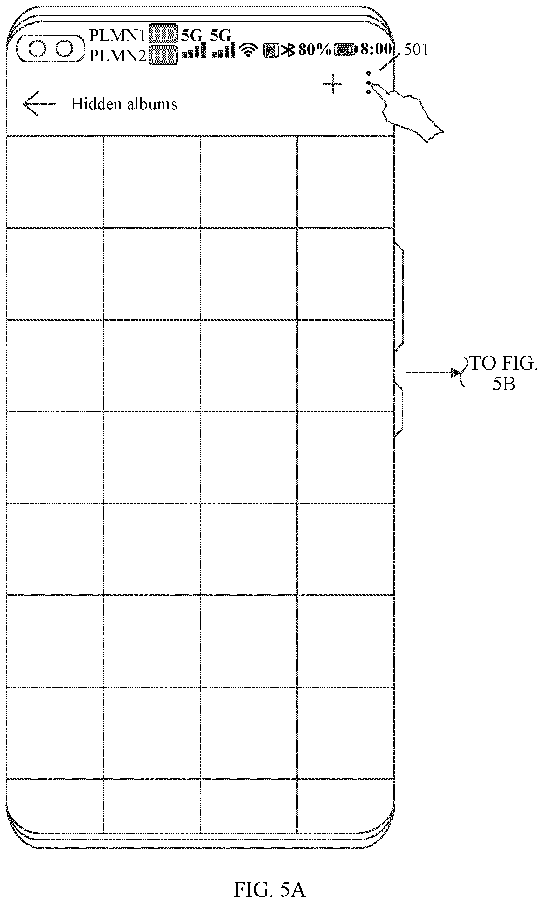

For example, a hidden album interface satisfying the first display style is used as an example to describe switching of the views in the hidden albums (refer to embodiments corresponding to FIG. 4A to FIG. 4C and FIG. 5A to FIG. 5C). It may be understood that for a switching method of the views in a hidden album interface with the second display style, refer to embodiments corresponding to FIG. 4A to FIG. 4C and FIG. 5A to FIG. 5C below. Details are not described herein again.

For example, FIG. 4A to FIG. 4C are a schematic diagram of interfaces in which an album view is switched to a photo view according to an embodiment of this application.

As shown in a hidden album interface displayed in the album view in FIG. 4A, the interface may include content such as a button 401 for switching a display manner of a photo in hidden albums. Other content displayed in the interface is similar to that in the interface shown in FIG. 2C. Details are not described herein again. In the interface shown in FIG. 4A, when the terminal device detects user's tap operation on the button 401, the terminal device may display a menu pop-up window 402 (may also referred to as a pop-up window 402) for the hidden albums. For example, the terminal device may display an interface shown in FIG. 4B.

As shown in the interface in FIG. 4B, the interface may include the pop-up window 402. For other content displayed in the interface, refer to that in the interface shown in FIG. 4A. Details are not described herein again.

The pop-up window 402 indicates a view to which the hidden albums may be switched, as shown in the interface FIG. 4B. The pop-up window 402 may include a photo view option, and the photo view option is used to switch to the photo view. The photo view option may be displayed as photo view or may be displayed as switch to a photo view. Content displayed in the pop-up window 402 is not limited in embodiments of this application.

In a possible implementation, the button 401 for switching the display manner of the photo in the hidden albums may be replaced with a text button or another icon button. For example, the text button may display as information such as switching views. This is not specifically limited in embodiments of this application.

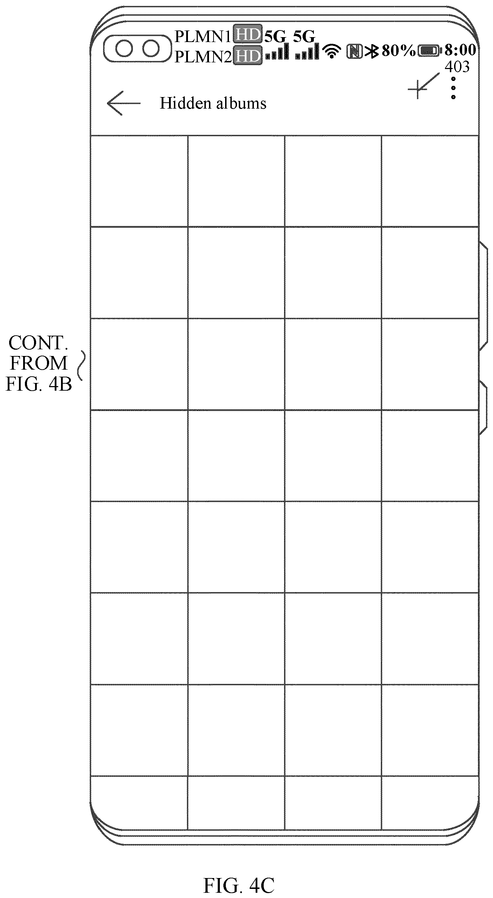

In the interface shown in FIG. 4B, when the terminal device detects a tap operation on the photo view option, the terminal device may display an interface shown in FIG. 4C. As shown in the interface in FIG. 4C, the interface may include hidden albums displayed in the photo view, and the interface may include a button 403 for adding a photo to the hidden albums. For other content displayed in the interface, refer to that in the interface shown in FIG. 4B. Details are not described herein again.

For example, FIG. 5A to FIG. 5C are a schematic diagram of interfaces in which a photo view is switched to an album view according to an embodiment of this application.

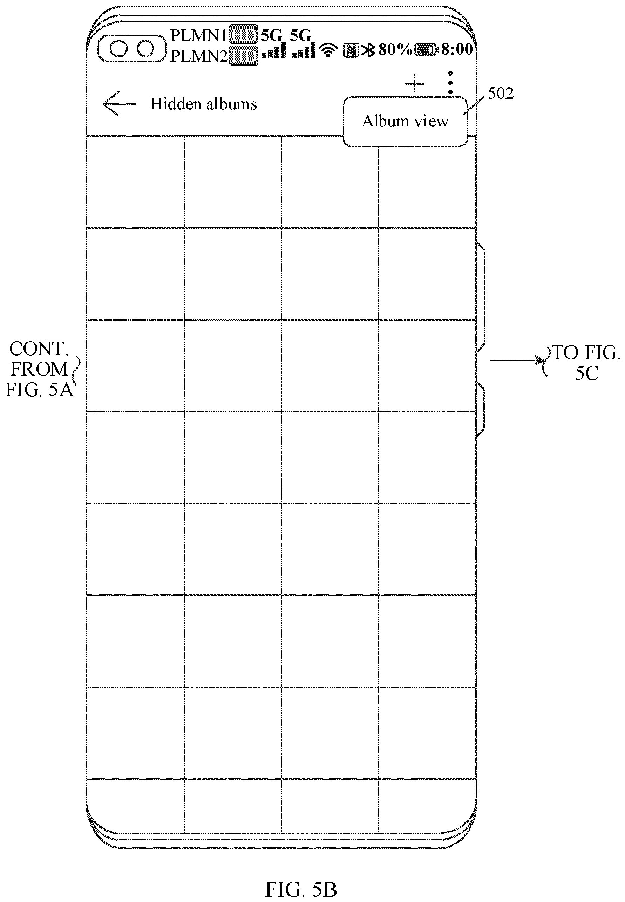

As shown in a hidden album interface displayed in the photo view in FIG. 5A, the interface may include content such as a button 501 for switching a display manner of a photo in hidden albums. Other content displayed in the interface may be similar to that in the interface shown in FIG. 4C. Details are not described herein again. In the interface shown in FIG. 5A, when the terminal device detects user's tap operation on the button 501, the terminal device may display a menu pop-up window 502 (or referred to as a pop-up window 502) for the hidden albums. For example, the terminal device may display an interface shown in FIG. 5B. As shown in the interface in FIG. 5B, the interface may include the pop-up window 502. For other content displayed in the interface, refer to that in the interface shown in FIG. 5A. Details are not described herein again.

The pop-up window 502 indicates a view to which the hidden albums may be switched. For example, the pop-up window 502 may include an album view option. For example, the album view option may be displayed as album view or may be displayed as switch to an album view. Content displayed in the pop-up window 502 is not limited in embodiments of this application.

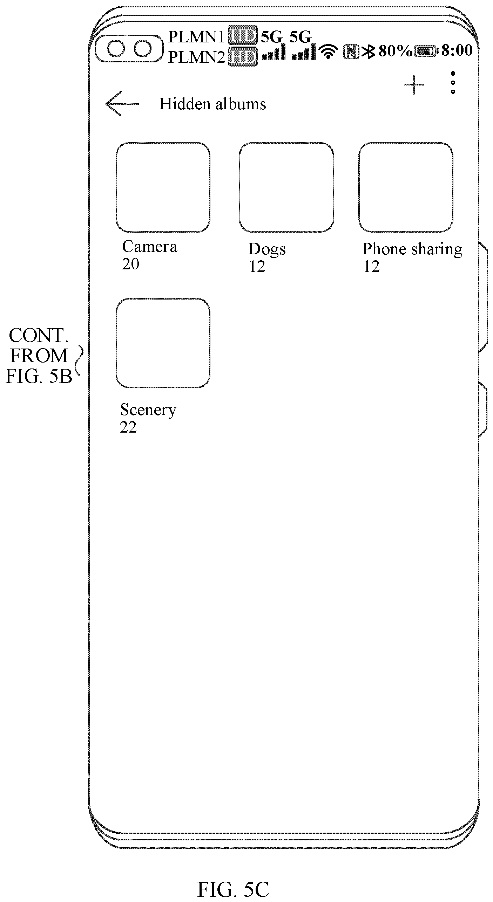

In the interface shown in FIG. 5B, when the terminal device detects a tap operation on the album view option, the terminal device may display an interface shown in FIG. 5C. As shown in the interface in FIG. 5C, the interface may include the hidden photos displayed in the album view. For other content displayed in the interface, refer to that in the interface shown in FIG. 4A. Details are not described herein again.

Based on this, the terminal device can provide a plurality of views in the hidden album interface, so that the user can flexibly adjust a display manner of hidden photos in the hidden albums based on user's requirement, thereby improving user experience on a function for hiding a photo.

Based on embodiments corresponding to FIG. 2A to FIG. 2C to FIG. 5A to FIG. 5C, to simplify a manner that the user hide a photo, the terminal device can provide the user with a function for hiding a photo in an album dimension and a function for hiding a photo in a photo dimension (refer to embodiments in Scenario 1). The terminal device may further support adding a photo in the function for hiding the photo (refer to embodiments in Scenario 2).

It may be understood that in the following embodiments in Scenario 1 and embodiments in Scenario 2, the function for hiding the photo is described by using a hidden album interface satisfying a first display style as an example. This example does not constitute a limitation on embodiments of this application.

Scenario 1 The terminal device can provide the user with the function for hiding the photo in the album dimension (refer to an embodiment in Method 1) and the function for hiding the photo in the photo dimension (refer to an embodiment in Method 2).

Method 1: The terminal device can provide the user with the function for hiding the photo in the album dimension.

It may be understood that albums in the terminal device may be divided into a physical album and a virtual album. The physical album may be an album that is actually stored in a file manager and has a real path. The virtual album may be an album that is not actually stored in a file manager and has no real path. The physical album is allowed to be hidden. For example, the physical album may have the function for hiding the photo in the camera dimension provided in this embodiment of this application, a function for unhiding a photo in the album dimension, and the like. The virtual album does not have the function. A photo in the physical album and a photo in the virtual album may overlap. For example, a physical album A includes photos 1 to 10, a physical album B includes photos 11 to 20, and a virtual album C may include photos 5 to 15. Compared with the physical album, the virtual album classifies photos in different dimensions.

In this embodiment of this application, the physical album in the terminal device may hide the photo in the album dimension based on the embodiment in FIG. 6A to FIG. 6E. For example, FIG. 6A to FIG. 6E are a schematic diagram of interfaces of hiding photos according to this embodiment of this application.

When the terminal device detects an operation in which a user opens a gallery application, the terminal device may display an interface shown in FIG. 6A. For example, when the terminal device detects a user's tap operation on a button for opening the gallery application, the terminal device may display the interface shown in FIG. 6A. The interface may include content such as a plurality of albums. The plurality of albums may include a "camera" album with 20 photos, an "all photos" album with 110 photos, a "videos" album with 12 videos, a "screenshots and screen records" album with 22 photos, a "favorites" album with 25 photos, a "dogs" album with 22 photos, a "phone sharing" album with 12 photos, a "scenery" album with 22 photos, and the like. For other content displayed in the interface, refer to that in the interface shown in FIG. 2A. Details are not described herein again.

In the interface shown in FIG. 6A, when the terminal device detects user's touch and hold operation on the "dogs" album, the terminal device may display an interface shown in FIG. 6B. As shown in the interface in FIG. 6B, the interface may include a button for closing album selection (a button corresponding to a cross sign icon in the upper left corner of the interface shown in FIG. 6B), text information indicating a quantity of selected albums, a text box for searching for photos, people, places, a share button, a rename button, a hide button 601, a delete button, and a download button.

The share button is used to share an album with another device or application, the rename button is used to rename an album, the hide button 601 is used to hide an album, the delete button is used to delete an album, and the download button is used to download an album.

As shown in the interface in FIG. 6B, a check button may be displayed on each album (or around each album) in the interface. For example, when the terminal device detects a user's touch and hold operation on the "dogs" album, a check button on the "dogs" album is in a selected state. Other content displayed in this interface is similar to that in the interface shown in FIG. 6A. Details are not described herein again. The text information indicating the quantity of selected albums may be displayed as one album selected.

In a possible implementation, when the terminal device detects the user's touch and hold operation on the "dogs" album, the check button on the "dogs" album is in the selected state. After that, the terminal device may cancel the selected state of the "dogs" album based on a user's tap operation on the "dogs" album. In this case, the terminal device may select another required album based on a user's tap operation on another album. For example, the terminal device may delete, share, or hide the selected album based on the user's tap operation on another album.

In the interface shown in FIG. 6B, when the "dogs" album is in the selected state, when the terminal device detects a tap operation on the hide button 601, the terminal device may display a pop-up window 602 (or referred to as a pop-up window 602) that prompts to hide the album, as shown in an interface in FIG. 6C. As shown in the interface in FIG. 6C, the interface may include the pop-up window 602. The user may select, based on the pop-up window 602, whether to hide the album.

It may be understood that the pop-up window 602 may be an interactive pop-up window, so that the user can perform an operation on the pop-up window 602. The pop-up window 602 may be in full screen or may not be in full screen. This is not limited in this embodiment of this application.

As shown in the interface in FIG. 6C, the pop-up window 602 may include text information prompting whether to hide the album, text information prompting how to view the hidden album, text information for no longer displaying the pop-up window, a check button for no longer displaying the pop-up window (the check button is in a selected state by default), a button for determining to hide the album, a button for canceling hiding the album, and the like.

The text information prompting whether to hide the album in the pop-up window 602 may be: Hide the album?. The text information prompting how to view the hidden album in the pop-up window 602 may be: All photos in this album will be hidden, but can be found in "Hidden albums" in the upper right corner ":" of "Albums". The button for determining to hide the album in the pop-up window 602 may be displayed as an "OK" button, or may be in a "Yes" button, or another form. The button for canceling hiding the album may be displayed as a "cancel" button, or may be in an "No" button, or another form.

":" may represent the button 301 shown in FIG. 3A for viewing more functions in albums, and "hidden albums" may represent the hidden albums option 303 shown in FIG. 3B.

It may be understood that content such as a display type of the pop-up window 602, and text information and buttons displayed in the pop-up window 602 are not specifically limited in this embodiment of this application.

In the interface shown in FIG. 6C, when the terminal device detects a user's tap operation on the button for determining to hide the album, the terminal device may hide the "dogs" album. For example, in the interface shown in FIG. 6C, when the terminal device detects a user's tap operation on an "OK" button, the terminal device may hide the "dogs" album.

Alternatively, in the interface shown in FIG. 6C, when the terminal device detects a user's tap operation on the button for canceling hiding the album, the terminal device cancels an operation of hiding the "dogs" album. For example, in the interface shown in FIG. 6C, when the terminal device detects a user's tap operation on a "cancel" button, the terminal device may cancel an operation of hiding the "dogs" album.

In a possible implementation, in the interface shown in FIG. 6B, when the "dogs" album is in the selected state, the terminal device may further directly add the "dogs" album to the hidden albums when the terminal device detects a tap operation on the hide button 601.

It may be understood that because the "dogs" album is a physical album, the "dogs" album may be hidden. For example, when the user hides, based on the interface shown in FIG. 6A and the interface shown in FIG. 6B, the "all photos" album, the "videos" album, and the "favorites" album in FIG. 6A, for example, when the terminal device detects that the user selects the "all photos" album, the "videos" album, and the "favorites" album, the terminal device may display an interface shown in FIG. 6D.

As shown in the interface in FIG. 6D, a check button on the "all photos" album is in a selected state, a check button on the "videos" album is in a selected state, and a check button on the "favorites" album is in a selected state. A rename button 603, a hide button 604, and a delete button 605 in this interface each may be displayed as a gray button, and the gray buttons indicate that the rename button 603, the hide button 604, and the delete button 605 cannot be selected. An unselectable state may be a disabled state.

It may be understood that because the "all photos" album, the "videos" album, and the "favorites" album may all be virtual albums, the user cannot perform rename, hide, and delete functions on at least one of the "all photos" album, the "videos" album, and the "favorites" album. When selected albums are physical albums, the user can perform rename, hide, and delete functions on at least one physical album.

As shown in the interface in FIG. 6D, the interface may further include a button for closing album selection (a button corresponding to a cross sign in the upper left corner shown in FIG. 6D), and text information indicating a quantity of selected albums. The text information indicating the quantity of selected albums may be displayed as three albums selected.

In a possible implementation, when the terminal device detects that the user selects an "all photos" album, a "videos" album, and a "favorites" album, a rename button 603, a hide button 604, and a delete button 605 may not be displayed in the interface shown in FIG. 6D, so that the user cannot rename, hide, and delete at least one of the "all photos" album, the "videos" album, and the "favorites" album.

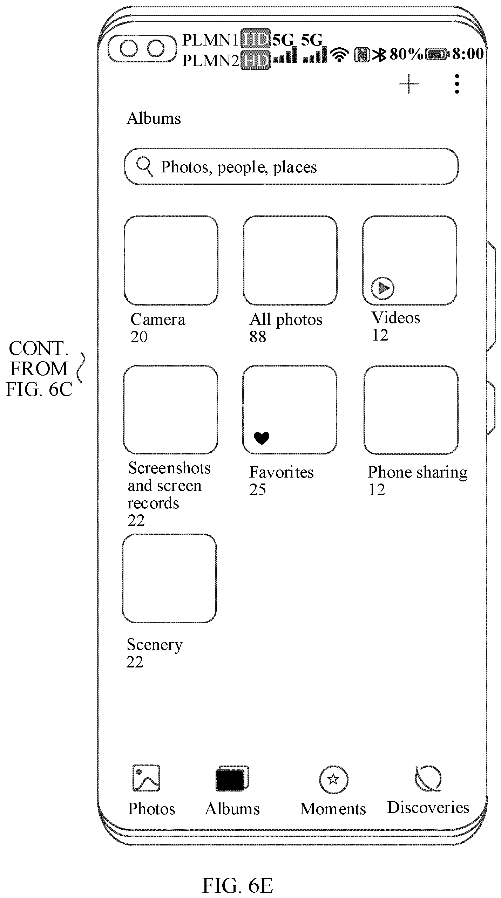

In a possible implementation, in the interface shown in FIG. 6C, when the terminal device detects the user's tap operation on the "OK" button, the terminal device may display an interface shown in FIG. 6E. Compared to the interface shown in FIG. 6A, the interface shown in FIG. 6E does not include the hidden "dogs" album. A quantity of photos in the "all photos" album in the interface shown in FIG. 6E is decreased from 110 in the interface shown in FIG. 6A to 88. Other content displayed in the interface shown in FIG. 6E is similar to that in the interface shown in FIG. 6A. Details are not described herein again.

Based on this, the user can hide the physical album in the album dimension in the embodiment in FIG. 6A to FIG. 6E, thereby simplifying the method for hiding the photo.

On the basis of the embodiment in FIG. 6A to FIG. 6E, when the user hides the photo in the album dimension, when the terminal device detects the operation in which the user opens the hidden albums, the terminal device displays the hidden photos in the album view in the hidden album interface in default. For example, the user may view the hidden photos in the hidden album interface in the embodiment in FIG. 2A to FIG. 2C.

In a possible implementation, the user can add a plurality of albums to the hidden albums based on the embodiment in FIG. 6A to FIG. 6E, and when the user shots a new photo, even if an album corresponding to the photo is hidden by the user, the terminal device can still recreate an album corresponding to the photo and display the album in an ordinary album interface.

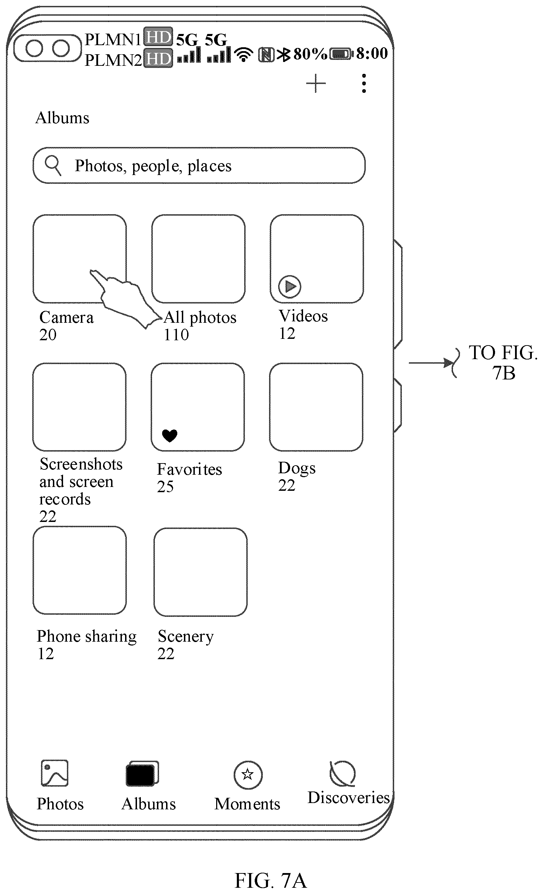

For example, FIG. 7A to FIG. 7F are a schematic diagram of interfaces of adding a photo according to an embodiment of this application.

In an ordinary album interface shown in FIG. 7A, when the terminal device detects user's touch and hold operation on a "camera" album, the terminal device may display an interface shown in FIG. 7B.

As shown in the interface in FIG. 7A, content displayed in the interface may be similar to that in the interface shown in FIG. 6A. Details are not described herein again. As shown in the interface in FIG. 7B, a check button may be displayed on each album (or around each album) in the interface. The interface further includes a hide button 701, a button for closing album selection, and text information indicating a quantity of selected albums. For example, when the terminal device detects a user's touch and hold operation on the "camera" album, a check button on the "camera" album in the interface shown in FIG. 7B is in a selected state. Other content displayed in this interface is similar to that in the interface shown in FIG. 7A. Details are not described herein again. The text information indicating the quantity of selected albums may be displayed as one album selected.

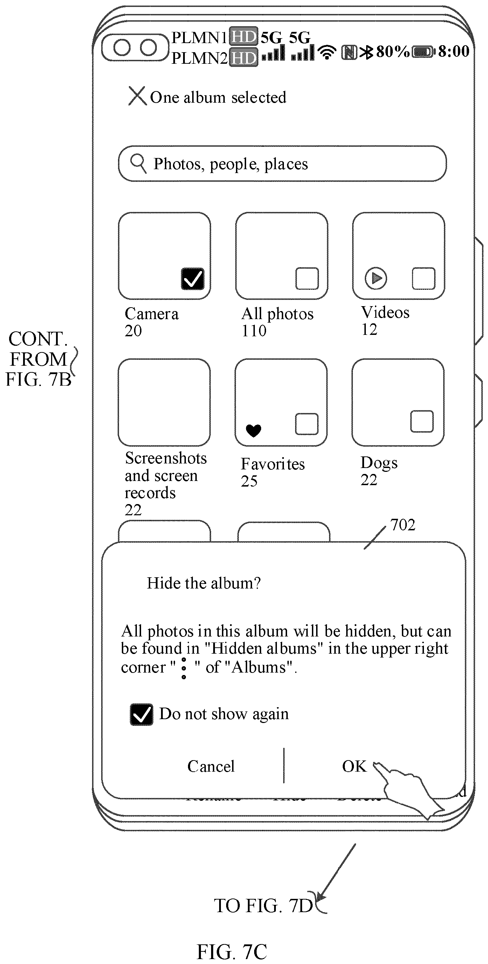

In the interface shown in FIG. 7B, when the "camera" album is in the selected state, when the terminal device detects a tap operation on the hide button 701, the terminal device may display a pop-up window 702, as shown in an interface in FIG. 7C. As shown in the interface in FIG. 7C, the interface may include the pop-up window 702 (or referred to as a pop-up window 702) for hiding the album. A user may choose, by using the pop-up window 702, whether to hide the "camera" album. Other content displayed in the interface is similar to that in the interface shown in FIG. 7B. Details are not described herein again.

As shown in the interface in FIG. 7C, the pop-up window 702 may include text information prompting whether to hide the album, text information prompting how to view the hidden album, text information for no longer displaying the pop-up window, a check button for no longer displaying the pop-up window (the check button is in a selected state by default), a button for determining to hide the album (or referred to as an OK button), a button for canceling hiding the album (or referred to as a cancel button), and the like.

The text information prompting whether to hide the album in the pop-up window 702 may be: Hide the album?. The text information prompting how to view the hidden album in the pop-up window 702 may be: All photos in this album will be hidden, but can be found in "Hidden albums" in the upper right corner ":" of "Albums". It may be understood that for a form of the pop-up window 702, refer to the descriptions about the pop-up window 602 in the embodiment in FIG. 6A to FIG. 6E. Details are not described herein again.

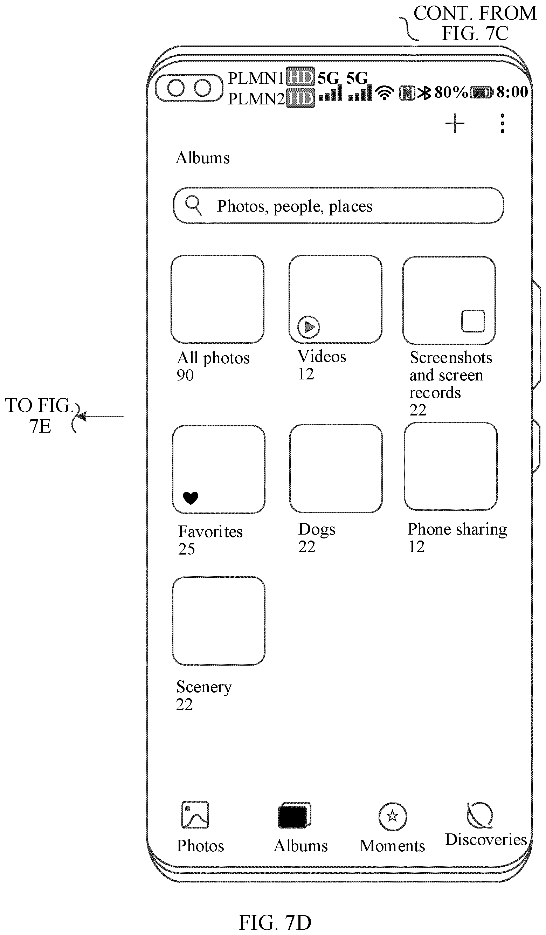

In the interface shown in FIG. 7C, when the terminal device detects user's tap operation on the OK button, the terminal device may add the "camera" album to the hidden albums, and the terminal device may display an interface shown in FIG. 7D. As shown in the interface in FIG. 7D, the interface does not include the "camera" album that is added to the hidden albums. Because an "all photos" album includes photos in all albums, a quantity of photos in the "all photos" album decreases from 110 to 90.

In a possible implementation, if the user already adds the "camera" album to the hidden albums, and the terminal device detects that the user shots a photo by using a photographing function of the terminal device (the photo belongs to the "camera" album), the terminal device may create a new album for the added photo and add the album to an ordinary album interface, or the terminal device may add the photo to the hidden albums based on the corresponding album.

In an implementation, the terminal device may create the new album for the added photo and add the album to the ordinary album interface. For example, when the terminal device detects that the user shots the photo by using the photographing function of the terminal device, the ordinary album interface of the terminal device may be displayed as an interface shown in FIG. 7E. As shown in the interface in FIG. 7E, the interface may include the added album displayed in a dashed box, for example, the added "camera" album with the photo, and the quantity of photos in the "all photos" album in the ordinary album interface increases from 90 to 91. For other content displayed in the interface, refer to the descriptions about the interface shown in FIG. 7A. Details are not described herein again.

In the interface shown in FIG. 7E, when the terminal device receives a tap operation on the "camera" album, the terminal device may display an interface shown in FIG. 7F. The interface shown in FIG. 7F includes a photo 703.

In another implementation, the terminal device may further add the photo to the hidden albums based on the corresponding album. For example, when the terminal device detects that the user shots the photo by using the photographing function of the terminal device, the terminal device may add the shot photo to the "camera" album in the hidden albums.

For example, on the basis of adding a "camera" album and a "screenshots and screen records" album to hidden albums, the terminal device may also support a function for unhiding photos in the album dimension. For example, FIG. 8A to FIG. 8C are a schematic diagram of interfaces of unhiding an album according to an embodiment of this application.

A hidden album interface shown in FIG. 8A may include a "camera" album with 20 photos and a "screenshots and screen records" album with 22 photos. For other content displayed in the interface, refer to the descriptions about the interface shown in FIG. 2C. Details are not described herein again. In the interface shown in FIG. 8A, when the terminal device detects user's touch and hold operation on the "screenshots and screen records" album, the terminal device may display an interface shown in FIG. 8B.

As shown in the interface in FIG. 8B, the interface may include an unhide button 801, a delete button, and a select all button. A check button may be displayed on each album (or around each album) in the interface. For example, when the terminal device detects the user's touch and hold operation on the "screenshots and screen records" album, a check button on the "screenshots and screen records" album is in a selected state. The interface further includes a button for exiting album selection, and text information indicating a quantity of selected albums. The text information indicating the quantity of selected albums may be displayed as one album selected. The unhide button 801 is used to unhide the album, the delete button is used to delete the album, and the select all button is used to select all albums in the interface.

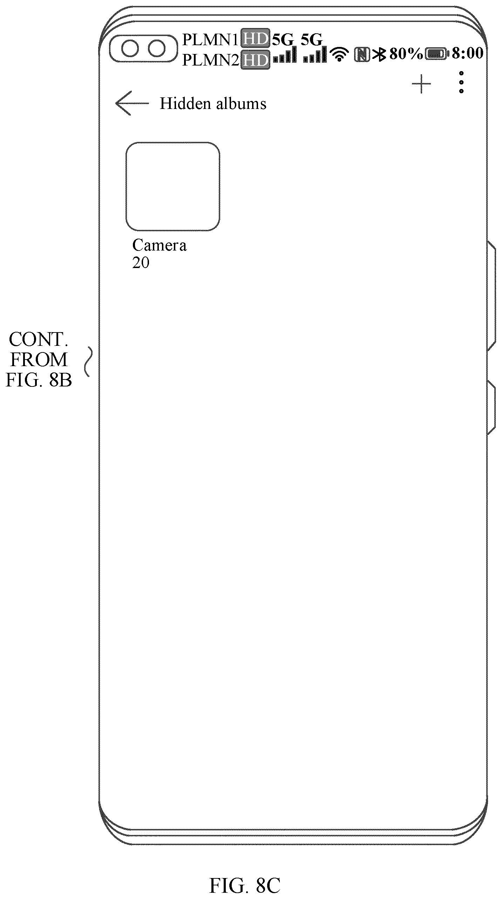

In the interface shown in FIG. 8B, when the "screenshots and screen records" album is in the selected state, when the terminal device detects user's tap operation on the unhide button 801, the terminal device may display an interface shown in FIG. 8C. Compared with the interface shown in FIG. 8A, the interface shown in FIG. 8C does not display the unhidden "screenshots and screen records" interface. It may be understood that the terminal device may unhide the "screenshots and screen records" album and restore the "screenshots and screen records" album to the ordinary album interface shown in FIG. 7A.

This can enable the terminal device to provide the function for hiding the photo in the album dimension, and provide a function for unhiding the photo in the album dimension, simplify the method for hiding the photo, and improve user experience for the function for hiding the photo.

Method 2: The terminal device can provide the user with the function for hiding the photo in the photo dimension.

In embodiments of this application, the terminal device may provide the method for hiding the photo in two photo dimensions, such as hiding a single photo from a full-screen display interface corresponding to the single photo (refer to an embodiment in FIG. 9A and FIG. 9B), or hiding at least one photo from a multi-grid display interface corresponding to a photo dimension (refer to an embodiment in FIG. 10A to FIG. 10F).

In an implementation, the terminal device may hide the single photo from the full-screen display interface corresponding to the single photo. For example, FIG. 9A and FIG. 9B are a schematic diagram of interfaces of hiding a photo in a photo dimension according to this embodiment of this application.

When a terminal device detects a user's tap operation on any photo in the photo dimension, the terminal device may display an interface shown in FIG. 9A. The interface may include a photo 900 displayed in full screen, text information indicating a shot date, shot time, and a shot address of the photo, a share button, a favorites button, an edit button, a delete button, a more button 901, a button for exiting photo preview (a left arrow in the upper left corner shown in FIG. 9A), and a button for viewing more information about the photo (a circular button in the upper right corner shown in FIG. 9A).

The shot date of the photo may be March 28, 2022, the shot time may be 17:15, and the text information of the shot address may be XX City, XX District.

The share button may be used to share a photo to another device or application. The favorites button may be used to collect a photo, so that the photo appears in a "favorites" album. The edit button may be used to crop, perform filter adjustment, and perform color adjustment on a photo. The delete button may be used to delete a photo. The more button 901 is used to view more functions of a photo.

In the interface shown in FIG. 9A, when the terminal device detects a tap operation on the more button 901, the terminal device may display a pop-up window 902 (also referred to as a pop-up window 902) prompting to hide the album. For example, the terminal device may display an interface shown in FIG. 9B. As shown in the interface in FIG. 9B, the interface may include the pop-up window 902. For other content displayed in the interface, refer to that in the interface shown in FIG. 9A. Details are not described herein again.

As shown in the interface in FIG. 9B, the pop-up window 902 may be used to display more functions of the photo. The pop-up window 902 may be an interactive pop-up window. This is not limited in embodiments of this application. Specifically, the pop-up window 902 may include a move option, a copy option, an add comments option, a hide option 903, a more edits option, a print or generate a PDF option, a rename option, a set as option, a rotate option, and the like.

The move option is used to move the photo to another album. The copy option is used to copy the photo to another album. The comments option is used to add comments information to the photo. The hide option 903 is used to hide the photo. The more edits option is used to make another edit on the photo. The print or generate a PDF option is used to print or generate the photo to a PDF version. The rename option is used to rename the photo. The set as option is used to set the photo as a contact photo or a wallpaper. The rotate option is used to rotate the photo.

As shown in the interface in FIG. 9B, when the terminal device receives a tap operation on the hide option 903, the terminal device may add the photo 900 to hidden albums.

In a possible implementation, when the hidden albums include an album to which the photo 900 belongs, the terminal device may add the photo 900 to the belonging album. For example, if the photo 900 belongs to a "scenery" album and the hidden albums also include a "scenery" album, the terminal device can add the photo 900 to the "scenery" album in the hidden albums based on user's operation of adding the photo 900 to the hidden albums. For the operation of adding the photo 900 to the hidden albums, refer to descriptions in the embodiment in FIG. 9A and FIG. 9B.

In a possible implementation, when the hidden albums do not include an album to which the photo 900 belongs, the terminal device may create an album for the photo 900 and add the album with the photo 900 to the hidden albums. For example, if the photo 900 belongs to a "scenery" album and the hidden albums do not include a "scenery" album, based on user's operation of adding the photo 900 to the hidden albums, the terminal device may create a "scenery" album in the hidden albums, and add the photo 900 to the "scenery" album in the hidden albums.

In another implementation, the terminal device may hide the at least one photo from the multi-grid display interface corresponding to the photo dimension. For example, FIG. 10A to FIG. 10F are a schematic diagram of interfaces of hiding a photo in another photo dimension according to this embodiment of this application.

When a terminal device detects an operation in which a user opens a gallery application, the terminal device may display an interface shown in FIG. 10A. For example, when the terminal device detects a user's tap operation on a button for opening the gallery application, the terminal device may display the interface shown in FIG. 10A. The interface may include an "all photos" album and a photos button 1000. Content displayed in the interface is similar to that in the interface shown in FIG. 6A. Details are not described herein again.

In the interface shown in FIG. 10A, when the terminal device detects user's tap operation on the "all photos" album, the terminal device may display an interface shown in FIG. 10B. The interface may be the multi-grid display interface corresponding to the photo dimension. The interface may include a button for exiting photo display, text information indicating which album photos on a current page belong to (such as displaying as albums (all)), a button for switching to another album, and the multi-grid displayed photos. The multi-grid displayed photos may include a photo 1001.

In a possible implementation, in the interface shown in FIG. 10A, when the terminal device detects a user's tap operation on the photos button 1000, the terminal device may also display an interface shown in FIG. 10B. In this case, the interface shown in FIG. 10B may not include text information indicating which album photos on a current page belong to, a button for exiting photo display, or a button for switching to another album.

In the interface shown in FIG. 10B, when the terminal device detects a touch and hold operation on any photo, like a photo 1001, the terminal device may display an interface shown in FIG. 10C. As shown in the interface in FIG. 10C, the interface may include photos such as the photo 1001, a photo 1002, and a photo 1003, a button for closing photo selection, text information indicating a quantity of selected photos, a share button, a select all button, an edit button, a delete button, a more button 1004, and the like. A check button may be separately displayed on the photos (or around the photos) in the interface. For example, when the terminal device detects a user's touch and hold operation on the photo 1001, a check button on photo 1001 is in a selected state. The text information indicating the quantity of selected photos may be displayed as one file selected.

In the interface shown in FIG. 10C, when the photo 1001 is in the selected state, when the terminal device detects user's tap operations on the photo 1002 and the photo 1003, the terminal device may display an interface shown in FIG. 10D. As shown in the interface in FIG. 10D, the photo 1001, the photo 1002, and the photo 1003 all be in a selected state. The text information indicating the quantity of selected photos in the interface may be displayed as three files selected. Other content displayed in the interface is similar to that in the interface shown in FIG. 10C. Details are not described herein again.

In the interface shown in FIG. 10D, when the terminal device detects user's tap operation on the more button 1004, the terminal device may display a photo menu pop-up window 1005 (or referred to as a pop-up window 1005). For example, the terminal device may display an interface shown in FIG. 10E. As shown in the interface in FIG. 10E, the interface may include the pop-up window 1005. For other content displayed in the interface, refer to that in the interface shown in FIG. 10D. Details are not described herein again.

As shown in the interface in FIG. 10E, the pop-up window 1005 may be used to display more functions of the photos. The pop-up window 1005 may be an interactive pop-up window. This is not limited in embodiments of this application. Specifically, the pop-up window 1005 may include a download option, a move option, a copy option, a hide option 1006, a print or generate a PDF option, a details option, and the like.

The download option is used to download the photos. The move option is used to move the photos to another album. The copy option is used to move the photos to another album. The hide option 1006 is used to hide the photos. The print or generate a PDF option is used to print or generate the photos to PDF versions. The details option is used to view details of the photos.

In the interface shown in FIG. 10E, when the photo 1001, the photo 1002, and the photo 1003 satisfy the selected state, and the terminal device detects user's tap operation on the hide option 1006, the terminal device can display a pop-up window 1007 (or referred to as a pop-up window 1007) prompting to hide the photos, as shown in an interface in FIG. 10F.

As shown in the interface in FIG. 10F, the interface may include a pop-up window 1007 prompting whether to hide the three photos. The user may select, based on the pop-up window 1007, whether to hide the photos.

As shown in the interface in FIG. 10F, the pop-up window 1007 may include text information prompting whether to hide the photos, text information prompting how to view the hidden album, text information for no longer displaying the pop-up window, a check button for no longer displaying the pop-up window (the check button is in a selected state by default), a button for determining to hide the photos (or referred to as an OK button), a button for canceling hiding the photos (or referred to as a cancel button), and the like.

The text information prompting whether to hide the photos in the pop-up window 1007 may be: Hide the three files?. The text information prompting how to view the hidden album in the pop-up window 1007 may be: The files can be found in "Hidden albums" in the upper right corner ":" of "Albums".

In the interface shown in FIG. 10F, when the terminal device detects user's tap operation on the OK button, the terminal device may hide the photo 1001, the photo 1002, and the photo 1003. Alternatively, when the terminal device detects user's tap operation on the cancel button, the terminal device cancels an operation of hiding the photo 1001, the photo 1002, and the photo 1003.

In a possible implementation, a method for determining an album to which the photo 1001, the photo 1002, and the photo 1003 belong in the hidden albums, refer to a method for determining an album to which the photo 900 belongs in the hidden albums in the embodiment in FIG. 9A and FIG. 9B. Details are not described herein again.

Based on this, the terminal device can add one or more photos to the hidden albums in the photo dimension in embodiments in FIG. 9A and FIG. 9B and FIG. 10A to FIG. 10F, and provide the user with a plurality of manners for hiding a photo.

On the basis of embodiments in FIG. 9A and FIG. 9B and FIG. 10A to FIG. 10F, when the user hides the photos in the photo dimension, when the terminal device detects the operation in which the user opens the hidden albums, the terminal device displays the hidden photos in the photo view in the hidden album interface in default. For example, FIG. 11A to FIG. 11C are a schematic diagram of interfaces of viewing hidden albums according to this embodiment of this application.

When a terminal device detects an operation in which a user opens a gallery application, the terminal device may display an interface shown in FIG. 11A. For example, when the terminal device detects a user's tap operation on a button for opening the gallery application, the terminal device may display the interface shown in FIG. 11A. The interface may include a button 1101 for viewing more functions in albums. Other content displayed in the interface is similar to that in the interface shown in FIG. 2A. Details are not described herein again.

In the interface shown in FIG. 11A, when the terminal device detects user's tap operation on the button 1101, the terminal device may display an album menu pop-up window 1102 (or referred to as a pop-up window 1102). For example, the terminal device may display an interface shown in FIG. 11B. As shown in the interface in FIG. 11B, the interface may include the pop-up window 1102. For other content displayed in the interface, refer to that in the interface shown in FIG. 2B. Details are not described herein again.

In the interface shown in FIG. 11B, when the terminal device detects a tap operation on a hidden albums option 1103, the terminal device may display an interface shown in FIG. 11C. As shown in the interface in FIG. 11C, the interface may display hidden photos in a photo view. Other content displayed in the interface may be similar to that in the interface shown in FIG. 5A. Details are not described herein again.

It may be understood that when the terminal device hides the albums in the photo dimension in embodiments in FIG. 9A and FIG. 9B and FIG. 10A to FIG. 10F, when the terminal device opens the hidden album interface, the interface may display the hidden photos in the photo view accordingly, so that a display style of an interface when the photos are hidden is consistent with a display style of the hidden album interface, thereby improving user experience of the function for hiding the photo.

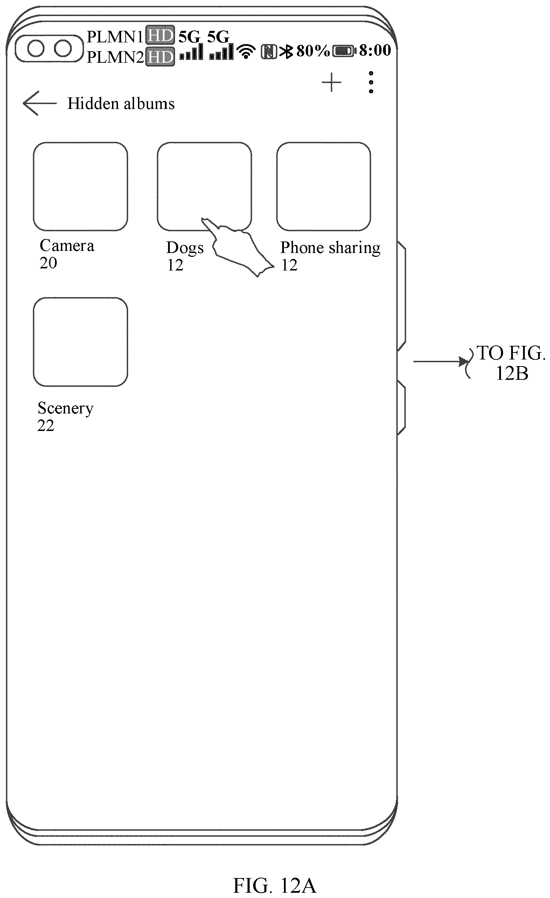

In the embodiment in FIG. 11A to FIG. 11C, some photos from "all photos" are added to the hidden albums, and the terminal device can also support the function of unhiding the photo in the photo dimension. For example, FIG. 12A to FIG. 12C are a schematic diagram of other interfaces of unhiding an album according to this embodiment of this application.

As shown in a hidden album interface in FIG. 12A, content displayed in the interface may be similar to that in the interface shown in FIG. 2C. Details are not described herein again. In the interface shown in FIG. 12A, when the terminal device detects user's tap operation on a "dogs" album, the terminal device may display an interface shown in FIG. 12B. As shown in the interface in FIG. 12B, the interface may include a plurality of photos such as a photo 1200, a button indicating exiting the album, text information indicating an album to which the photos belong, and a button for adding a photo to the album.

In the interface shown in FIG. 12B, when the terminal device detects a touch and hold operation on any photo, like the photo 1200, the terminal device may display an interface shown in FIG. 12C. As shown in the interface in FIG. 12C, the interface may include an unhide button 1201, a delete button, and a select all button. A check button may be displayed on each photo (or around each photo) in the interface. For example, as shown in the interface in FIG. 12C, when the terminal device detects the user's touch and hold operation on the photo 1200, a check button on the photo 1200 is in a selected state. The interface includes a button for exiting photo selection, and text information indicating a quantity of selected photos. Other content displayed in the interface is similar to that in the interface shown in FIG. 12B. Details are not described herein again. The text information indicating the quantity of selected photos may be displayed as one photo selected.

In the interface shown in FIG. 12C, when the photo 1200 is in a selected state, when the terminal device detects user's tap operation on the unhide button 1201, the terminal device may unhide the photo 1200 and restore the photo 1200 to the interface shown in FIG. 10B (or FIG. 11A).

This can enable the terminal device to provide the function for hiding the photo in the photo dimension, and provide the function for unhiding the photo in the photo dimension, simplify the method for hiding the photo, and improve user experience for the function for hiding the photo.

Scenario 2 The terminal device may provide the user with an ability of adding the photo in the function for hiding the photo.

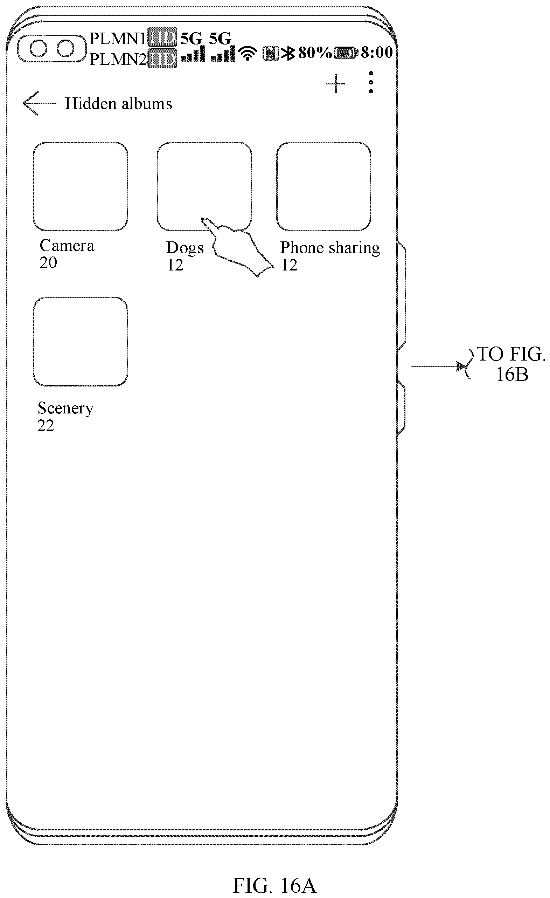

In embodiments of this application, the terminal device may provide a plurality of methods for adding the photo in the function for hiding the photo. For example, in Method A, the terminal device may add a photo to hidden albums in a photo view (refer to embodiments in FIG. 13A to FIG. 13C and FIG. 14A to FIG. 14C). Alternatively, in Method B, the terminal device may further add a photo to any hidden album (refer to embodiments in FIG. 15A to FIG. 15D and FIG. 16A to FIG. 16H).

Method A: The terminal device may add the photo to the hidden albums in the photo view.

In embodiments in FIG. 13A to FIG. 13C and FIG. 14A to FIG. 14C, descriptions are provided by using an example in which an ordinary album interface includes the following eight albums that are not hidden, and a hidden album interface includes the following four hidden albums. The eight albums that are not hidden may include a "camera" album with 10 photos, an "all photos" album with 110 photos, a "videos" album with 12 videos, a "screenshots and screen records" album with 22 photos, a "favorites" album with 25 photos, a "dogs" album with 10 photos, a "phone sharing" album with 10 photos, and a "scenery" album with 10 photos. The four hidden albums may include a "camera" album with 20 photos, a "dogs" album with 12 photos, a "phone sharing" album with 12 photos, and a "scenery" album with 22 photos.

In an implementation, the terminal device can add the photo based on a button for opening an album. For example, FIG. 13A to FIG. 13C are a schematic diagram of interfaces of adding a photo to hidden albums in a photo view according to this embodiment of this application.

When a terminal device detects an operation in which a user opens the hidden albums, the terminal device may display an interface shown in FIG. 13A. The interface may display hidden photos in the photo view. The interface may include a button 1301 for adding the photo to the hidden albums. Other content displayed in the interface may be similar to that in the interface shown in FIG. 11C. Details are not described herein again.

In the interface shown in FIG. 13A, when the terminal device detects a tap operation on the button 1301, the terminal device may display an interface shown in FIG. 13B. As shown in the interface in FIG. 13B, the interface may include text information indicating to select a to-be-hidden photo from an "all photos" album, a button for exiting adding the photo to the hidden albums (a button corresponding to a cross sign in the upper left corner in FIG. 13B), and a button 1302 for viewing albums. The interface includes all photos in the "all photos" album, and a check button may be displayed on each photo (or around each photo). The interface may include text information indicating addition of the photo, text information indicating a quantity of added photos, and a button (also referred to as a done button) indicating completion of adding the photo. The text information indicating addition of the photo may be displayed as: Select photos you want to add. The text information indicating the quantity of added photos may be displayed as 0.

In the interface shown in FIG. 13B, when the terminal device detects a tap operation on the button 1302, the terminal device may display an ordinary album interface shown in FIG. 13C. The ordinary album interface shown in FIG. 13C may include a "camera" album with 10 photos, an "all photos" album with 110 photos, a "videos" album with 12 videos, a "screenshots and screen records" album with 22 photos, a "favorites" album with 25 photos, a "dogs" album with 10 photos, a "phone sharing" album with 10 photos, and a "scenery" album with 10 photos.

It may be understood that because the photos in the "all photos" album are displayed by default in the interface shown in FIG. 13B, and there is large quantity of photos in the "all photos" album, which does not facilitate view of the user, the user can flexibly select the photo to be added to the hidden albums from the albums in the ordinary album interface shown in FIG. 13B.

In another implementation, the terminal device can add the photo based on a drop-down menu for opening an album. For example, FIG. 14A to FIG. 14C are a schematic diagram of other interfaces of adding a photo to hidden albums in a photo view according to this embodiment of this application.

When a terminal device detects an operation in which a user opens the hidden albums, the terminal device may display an interface shown in FIG. 14A. The interface may display hidden photos in the photo view. The interface may include a button 1401 for adding the photo to the hidden albums. Other content displayed in the interface may be similar to that in the interface shown in FIG. 11C. Details are not described herein again.

In the interface shown in FIG. 14A, when the terminal device detects a tap operation on the button 1401, the terminal device may display an interface shown in FIG. 14B. As shown in the interface in FIG. 14B, the interface may include text information indicating to select a to-be-hidden photo from an "all photos" album, a button for exiting adding the photo to the hidden albums, and a button 1402 for switching albums. The interface includes all photos in the "all photos" album, and a check button may be displayed on each photo (or around each photo). The interface may include text information indicating addition of the photo, text information indicating a quantity of added photos, and a button (also referred to as a done button) indicating completion of adding the photo. The text information indicating addition of the photo may be displayed as: Select photos you want to add. The text information indicating the quantity of added photos may be displayed as 0.

In the interface shown in FIG. 14B, when the terminal device detects a tap operation on the button 1402, the terminal device may display a drop-down menu 1403, for example, as shown in an ordinary album interface in FIG. 14C. As shown in the interface in FIG. 14C, the interface may include a button for canceling viewing of albums that are not hidden in the gallery application, and the drop-down menu 1403, where the drop-down menu 1403 may be used to display the albums that are not hidden in the gallery application. For example, the drop-down menu 1403 may include an option for viewing a "camera" album with 10 photos, an option for viewing an "all photos" album with 110 photos, an option for viewing a "videos" album with 12 videos, an option for viewing a "screenshots and screen records" album with 22 photos, an option for viewing a "favorites" album with 25 photos, an option for viewing a "dogs" album with 10 photos, an option for viewing a "phone sharing" album with 10 photos, an option for viewing a "scenery" album with 10 photos, and the like.

It may be understood that because the photos in the "all photos" album are displayed by default in the interface shown in FIG. 14B, and there is large quantity of photos in the "all photos" album, which does not facilitate view of the user, the user can flexibly select a photo to be added to the hidden albums from the albums in albums in the drop-down menu 1403 shown in FIG. 14C.

Method B: The terminal device can add the photo in any hidden album.

In an implementation, the terminal device may determine, based on a case whether the hidden album has a photo that is not hidden in an ordinary album interface, a default interface displayed when the photo is added to the hidden album. For example, FIG. 15A to FIG. 15D are a schematic diagram of interfaces of adding a photo to a hidden album according to this embodiment of this application.

As shown in a hidden album interface in FIG. 15A, content displayed in the interface may be similar to that in the interface shown in FIG. 12A. Details are not described herein again. In the interface shown in FIG. 15A, when the terminal device detects user's tap operation on a "dogs" album, the terminal device may display an interface shown in FIG. 15B. As shown in the interface in FIG. 15B, the interface may include a plurality of photos from the "dogs" album, and a button 1501 for adding a photo to the album. Other content displayed in the interface may be similar to that in the interface shown in FIG. 12B. Details are not described herein again.

In the interface shown in FIG. 15B, when the terminal device detects a tap operation on the button 1501, the terminal device may determine, based on a case whether the "dogs" album has a photo that is not hidden in the ordinary album interface, an interface displayed by the terminal device in response to the button 1501 for adding the photo to the album.

In a possible implementation, in the interface shown in FIG. 15B, when the terminal device detects the tap operation on the button 1501 and the "dogs" album has the photo that is not hidden in the ordinary album interface, the terminal device may display, in default, an interface shown in FIG. 15C. As shown in the interface in FIG. 15C, the "dogs" album still has ten photos that are not hidden in the ordinary album interface. The interface may include text information indicating addition of the photo, text information indicating a quantity of added photos, and a button (also referred to as a done button) indicating completion of adding the photo. The text information indicating addition of the photo may be displayed as: Select photos you want to add. The text information indicating the quantity of added photos may be displayed as 0.

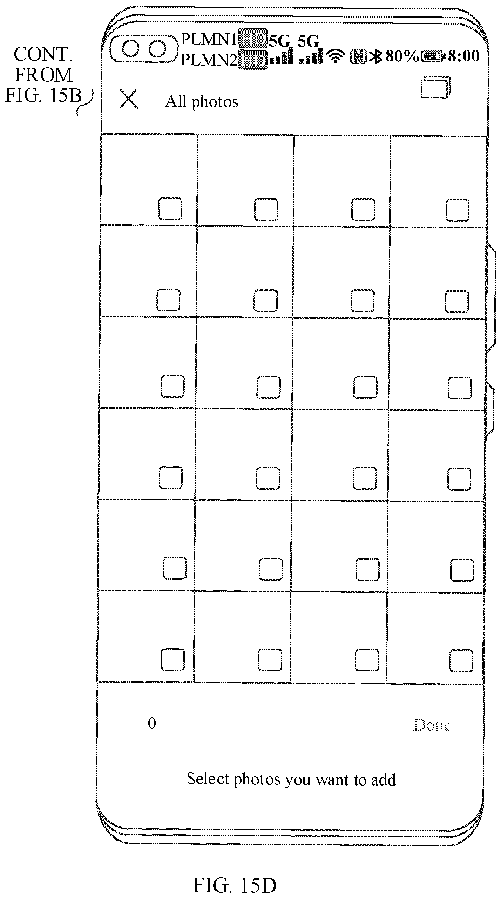

In a possible implementation, in the interface shown in FIG. 15B, when the terminal device detects the tap operation on the button 1501 and the "dogs" album does not have the photo that is not hidden in the ordinary album interface, the terminal device may display, in default, an interface shown in FIG. 15D. It may be understood that as shown in the interface in FIG. 15D, the "dogs" album does not have an photo that is not hidden in the ordinary album interface. Therefore, the terminal device can display photos from an "all photos" album in default. The interface may further include text information indicating addition of the photo, text information indicating a quantity of added photos, and a button (also referred to as a done button) indicating completion of adding the photo. The text information indicating addition of the photo may be displayed as: Select photos you want to add. The text information indicating the quantity of added photos may be displayed as 0.

It may be understood that when the photo is added to any hidden album, the terminal device can locate, by default, the photo that is not hidden and has a same album name as the hidden album, which is convenient for the user to select a appropriate to-be-hidden photo in the same album. When the terminal device determines that there is no album that has the same name as the hidden album, the terminal device locates the "all photos" album by default, so that the user can select a to-be-hidden photo in the "all photos" album.

In another implementation, the terminal device can add a photo across hidden albums. For example, FIG. 16A to FIG. 16H are a schematic diagram of other interfaces of adding a photo to a hidden album according to this embodiment of this application.

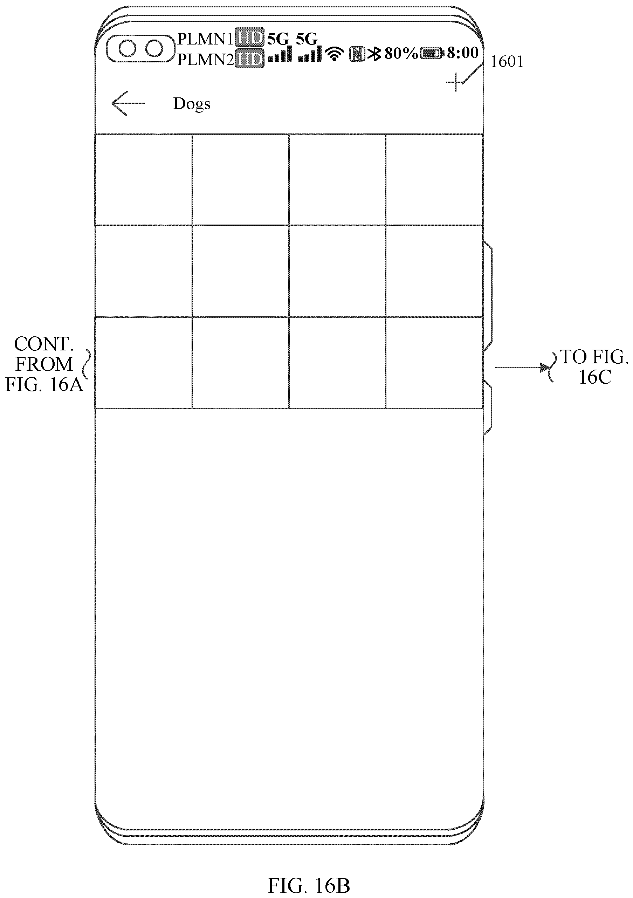

As shown in a hidden album interface in FIG. 16A, content displayed in the interface may be similar to that in the interface shown in FIG. 12A. Details are not described herein again. In the interface shown in FIG. 16A, when a terminal device detects user's tap operation on a "dogs" album, the terminal device may display an interface shown in FIG. 16B. As shown in the interface in FIG. 16B, the interface may include a plurality of photos, and a button 1601 for adding a photo to the album. Other content displayed in the interface may be similar to that in the interface shown in FIG. 12B. Details are not described herein again.

In the interface shown in FIG. 16B, when the terminal device detects a tap operation on the button 1601, the terminal device can display, in default, photos that are not hidden in the "dogs" album, for example, as shown in an interface in FIG. 16C. As shown in the interface in FIG. 16C, content displayed in the interface may be similar to that in the interface shown in FIG. 15C. Details are not described herein again.

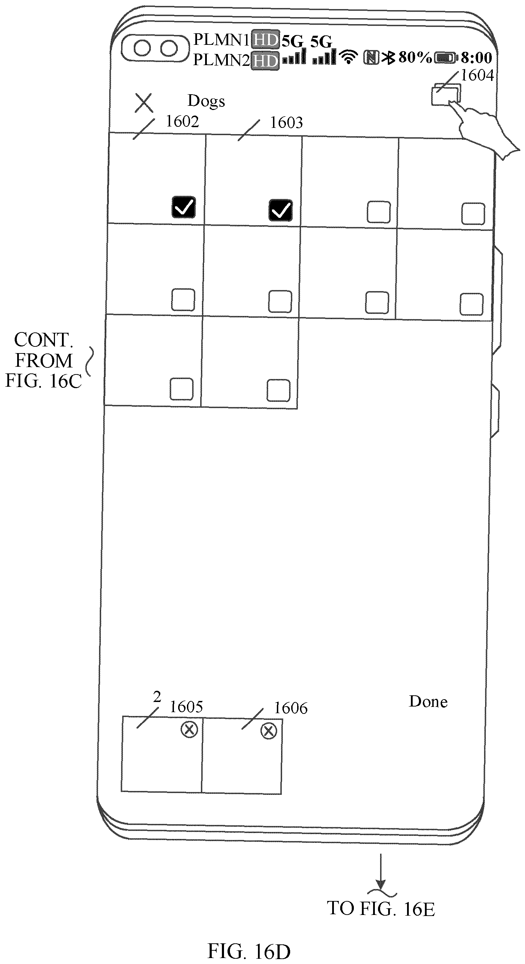

In the interface shown in FIG. 16C, when the terminal device detects user's tap operation on at least one photo, like a photo 1602 and a photo 1603, the terminal device may display an interface shown in FIG. 16D. As shown in the interface in FIG. 16D, the interface may include a thumbnail 1605 corresponding to the photo 1602, where the thumbnail 1605 may display a button for canceling adding the photo 1602; and a thumbnail 1606 corresponding to the photo 1603, where the thumbnail 1606 may display a button for canceling adding the photo 1603. The interface may further include a button 1604 and text information indicating a quantity of added photos. The text information indicating the quantity of added photos may be displayed as 2.

In the interface shown in FIG. 16D, when the terminal device detects a tap operation on the button 1604, the terminal device may display an interface shown in FIG. 16E. As shown in the interface in FIG. 16E, the interface may include physical albums for adding to the hidden photos. For content displayed in the interface shown in FIG. 16E, refer to that in the interface shown in FIG. 13C. Details are not described herein again.

In the interface shown in FIG. 16E, when the terminal device detects a tap operation on any album, for example, detects a tap operation on a "screenshots and screen records" album, the terminal device may display an interface shown in FIG. 16F. As shown in the interface in FIG. 16F, the interface may include photos in the "screenshots and screen records" album, such as a photo 1607 and a photo 1608, and a check button may be displayed on each photo (or around each photo) in the interface. The interface may further include a button for exiting the "screenshots and screen records" album and text information for indicating a belonging album. For other content displayed in the interface, refer to that in the interface shown in FIG. 16D. Details are not described herein again.

In a possible implementation, in the interface shown in FIG. 6C, when the terminal device detects an operation on the button in the upper right corner to add photos to the albums, the terminal device may also display an interface shown in FIG. 16E. It may be understood that when a user does not select photos from the "dogs" album that is not hidden as shown in FIG. 16D, the terminal device may directly display the interface showing albums that are not hidden as shown in FIG. 16E.

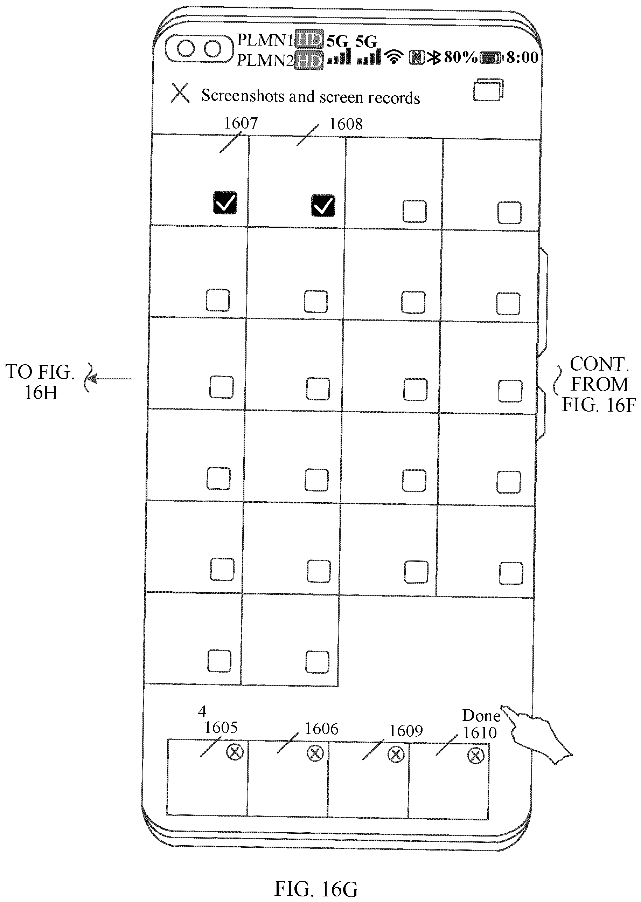

In the interface shown in FIG. 16F, when the terminal device detects tap operations on the photo 1607 and the photo 1608, the terminal device may display an interface shown in FIG. 16G. As shown in the interface in FIG. 16G, the photo 1607 and the photo 1608 in the interface may be in a selected state. Text information indicating a quantity of added photos in this interface may be displayed as 4. The interface may further include a thumbnail 1609 corresponding to the photo 1607, where the thumbnail 1609 may display a button for canceling adding the photo 1607; and a thumbnail 1610 corresponding to the photo 1608, where the thumbnail 1610 may display a button for canceling adding the photo 1608. For other content displayed in the interface, refer to that in the interface shown in FIG. 16F. Details are not described herein again.

In the interface shown in FIG. 16G, when the terminal device detects user's tap operation on a done button, the terminal device may display a pop-up window 1611 (or referred to as a pop-up window 1611) prompting across albums. For example, the terminal device may display an interface shown in FIG. 16H. As shown in the interface in FIG. 16H, the interface may include the pop-up window 1611. For other content displayed in the interface, refer to that in the interface shown in FIG. 16G. Details are not described herein again.

The pop-up window 1611 may be used to determine whether to add the to-be-hidden photo across albums. The pop-up window 1611 may be an interactive pop-up window. This is not limited in embodiments of this application. Specifically, the pop-up window 1611 may include text information prompting adding the to-be-hidden photo across albums, text information for no longer displaying the pop-up window, a check button for no longer displaying the pop-up window (the check button is in a selected state by default), a button for determining to hide the photos (or referred to as an OK button) across albums, a button for canceling hiding the photos (or referred to as a cancel button) across albums, and the like.

In the pop-up window 1611, the text information prompting adding the to-be-hidden photo across albums may be: The two files from other albums will be moved to the current hidden album (dogs). It may be understood that content such as a display type of the pop-up window 1611, and text information and buttons displayed in the pop-up window 1611 are not specifically limited in this embodiment of this application.

In a possible implementation, in the interface shown in FIG. 16H, when the terminal device detects a tap operation on the OK button, the terminal device may add the photo 1602, the photo 1603, the photo 1607, and the photo 1608 to the hidden album. Alternatively, when the terminal device detects a tap operation on the cancel button, the terminal device cancels adding the photo 1602, the photo 1603, the photo 1607, and the photo 1608 to the hidden album.

It may be understood that when the terminal device adds the photo across albums in the hidden album, the terminal device can initiate a prompt, so that the user can determine, based on the prompt, whether to continue adding the photo across albums.

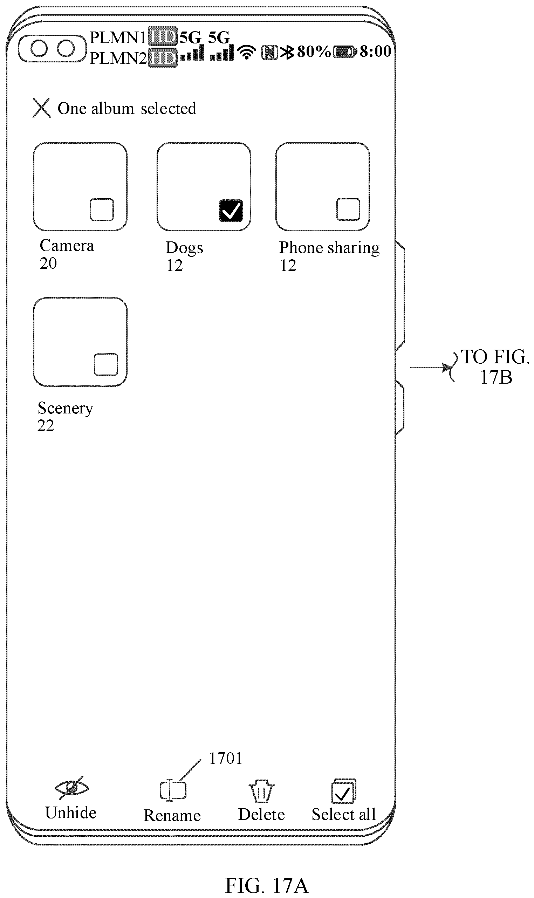

In possible implementations, based on the above embodiments, the terminal device may further provide a function for renaming a hidden album. For example, FIG. 17A to FIG. 17C are a schematic diagram of interfaces of renaming a hidden album according to this embodiment of this application.

When a terminal device detects user's touch and hold operation on any album in hidden albums, for example, a touch and hold operation on a "dogs" album, the terminal device may display an interface shown in FIG. 17A. The "dogs" album in the interface is in a selected state. The interface further includes a rename button 1701, a "camera" album with 20 photos, a "phone sharing" album with 12 photos, and a "scenery" album with 22 photos. The interface further includes a button for closing album selection, and text information indicating a quantity of selected albums. Other content displayed in the interface is similar to that in the interface shown in FIG. 8B. Details are not described herein again. The text information indicating the quantity of selected albums may be displayed as one album selected.

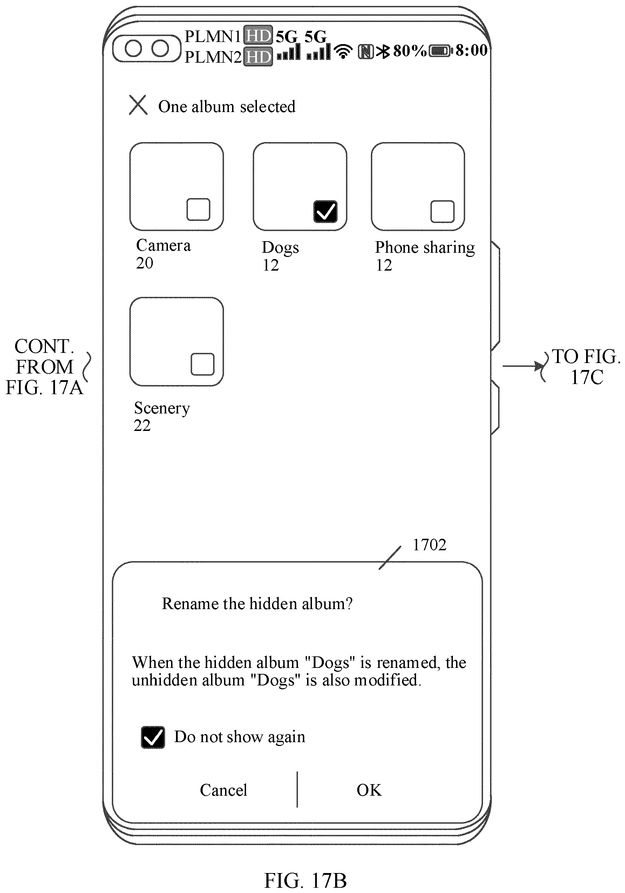

In the interface shown in FIG. 17A, the "dogs" album satisfies the selected state. When the terminal device detects a tap operation on the rename button 1701, the terminal device may display a pop-up window 1702 (also referred to as a pop-up window 1702) prompting renaming. For example, the terminal device displays an interface shown in FIG. 17B. As shown in the interface in FIG. 17B, the interface may include the pop-up window 1702 prompting whether to rename the hidden album. The user may select, based on the pop-up window 1702, whether to rename the hidden album.

As shown in the interface in FIG. 17B, the pop-up window 1702 may include the text information prompting whether to rename the hidden album, text information for no longer displaying the pop-up window, a check button for no longer displaying the pop-up window (the check button is in a selected state by default), a button for determining to rename the album (or referred to as an OK button), a button for canceling renaming the album (or referred to as a cancel button), and the like.

The text information prompting whether to rename the hidden album in the pop-up window 1702 may be: Rename the hidden album? When the album "dogs" in the hidden albums is renamed, an album "dogs" in albums that are not hidden is also modified. It may be understood that a display form of the pop-up window 1702 and content displayed in the pop-up window 1702 are not limited in embodiments of the application.

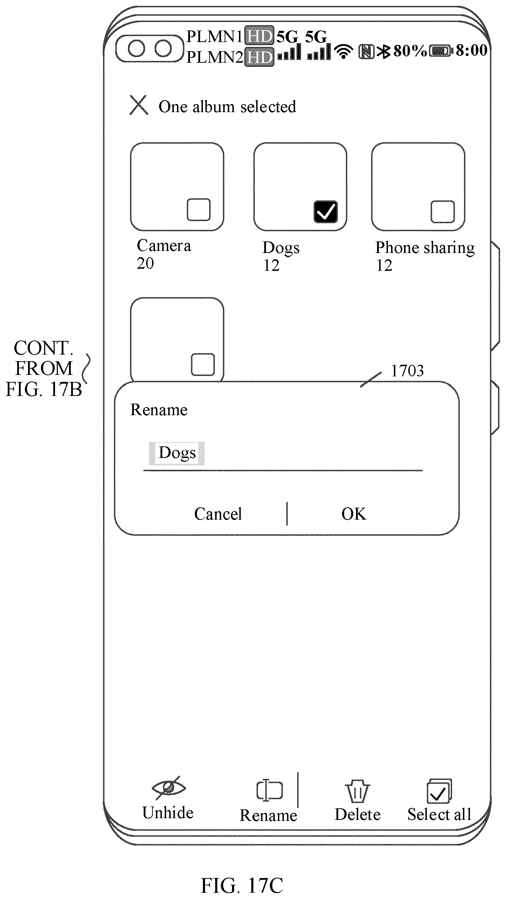

In a possible implementation, in the interface shown in FIG. 17B, when the terminal device detects a tap operation on the OK button, the terminal device may display an interface shown in FIG. 17C. As shown in the interface in FIG. 17C, the interface may include a rename pop-up window 1703 (or referred to as a pop-up window 1703). The pop-up window 1703 includes a text box for renaming the album, a button for determining renaming (or referred to as an OK button), and a button for canceling renaming (or referred to as a cancel button). The text box may display text information of "dogs".

It may be understood that in the interface shown in FIG. 17C, when the terminal device receives a tap operation on the OK button, the terminal device may rename the "dogs" album in the hidden albums and accordingly the "dogs" album in the albums that are not hidden. Alternatively, when the terminal device detects a tap operation on the cancel album, the terminal device may cancel an operation of renaming the "dogs" album in the hidden albums.

This enables the terminal device to rename the hidden album, and rename accordingly the album that is not hidden and that has a same name as the hidden album when the hidden album is renamed, thereby ensuring the consistency of album names.

It may be understood that, the interfaces provided in embodiments of this application are merely examples, and constitute no limitation on embodiments of this application.

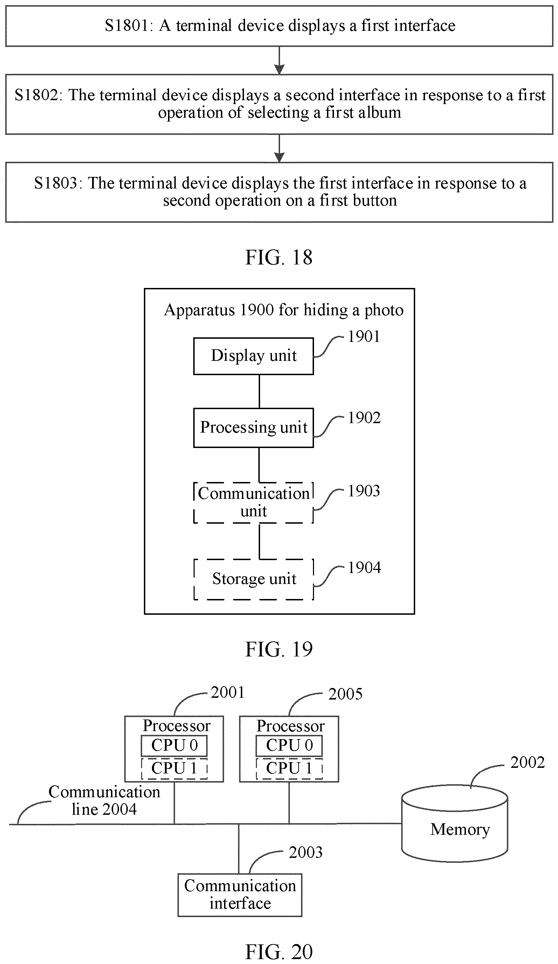

On the basis of the above embodiments, an embodiment of this application provides a method for hiding a photo. For example, FIG. 18 is a schematic flowchart of the method for hiding the photo according to this embodiment of this application.

As shown in FIG. 18, the method for hiding the photo may include the following steps.

S1801: A terminal device displays a first interface, where the first interface displays an icon of a first album and an icon of a second album.

For example, the interface described in this embodiment of this application may be understood as a user interface (user interface, UI) interface. The UI interface refers to a layout design of man-machine interaction, operation logic, and interface beauty of software.

An Android system is used as an example. The interface described in this embodiment of this application may be understood as an activity interface, and the activity interface may be an interface without a jump. A pop-up window may also be understood as an activity interface.

It may be understood that a change in a layout design of the interface brings a new interface. For example, the first interface may be an ordinary album interface described in this embodiment of this application, or may be understood as a non-hidden album interface. For example, the first interface may be an interface shown in FIG. 6A. The first interface displays an album that is not hidden. The first album may be any album in the interface shown in FIG. 6A, such as the "dogs" album. The second album may be an album shown in FIG. 6A except the "dogs" album, such as the "screenshots and screen records" album. A layout of the first interface is different from that of a second interface, so that different interface names can be used to distinguish the interfaces.

S 1802: The terminal device displays the second interface in response to a first operation of selecting the first album.

The first operation on the first album may be a touch and hold operation on the "dogs" album. The second interface may be the interface shown in FIG. 6B. The second interface may be referred to as an album selection interface, or may be referred to as an interface for hiding an album in the first interface. The second interface displays a first button for hiding an album, and the first button for hiding the album may be the hide button 601 shown in FIG. 6B.

It may be understood that the first button may alternatively be referred to as a hide button, a button for hiding the album, or the like. This is not limited in this embodiment of this application.

S 1803: The terminal device displays the first interface in response to a second operation on the first button, where after the second operation, the first interface displays the icon of the second album, and skips displaying the icon of the first album.

The second operation on the first button may be a tap operation on the hide button 601. For a case in which the terminal device does not display the icon of the first album in the first interface, refer to the interface shown in FIG. 6E. An icon of the "dogs" album is not displayed in this interface, and an icon of the "screenshots and screen records" album is displayed in this interface.

Based on this, the terminal device can hide a physical album in an album dimension, thereby simplifying the method for hiding the photo.

Optionally, S 1803 may include: The terminal device displays a first pop-up window in response to a second operation, where the first pop-up window displays text information prompting whether to hide the album and a second button for determining to hide the first album; and displays the first interface in response to a third operation on the second button.

The first pop-up window may be the pop-up window 602 in the interface shown in FIG. 6C for prompting to hide the album, or may also be referred to as a pop-up window 602, or the like. The second button for determining to hide the first album may be the button for determining to hide the album in the pop-up window 602, or referred to as the OK button. The third operation on the second button may be a tap operation on the OK button.

Optionally, the method further includes: After the first operation, the terminal device determines, in response to the first operation, whether the first album satisfies a preset condition, where when the preset condition is not satisfied, the first button is in a disabled state, or when the preset condition is satisfied, the first button is in an available state.

The available state can be a state in which the button can be triggered. The disabled state may be a state in which the button cannot be triggered and the disabled state may be unselected described in embodiments of this application. Specifically, for the available state, refer to the state in which the hide album button 601 shown in FIG. 6B, and for the disabled state, refer to the state in which the hide button 604 in the interface shown in FIG. 6D, where the hide button 604 is displayed as a gray icon.

It may be understood that when the first album is a virtual album, the first button may be gray and in the disabled state; or when the first album is a physical album, the first button is in the available state.

Optionally, the first interface further displays a third button for viewing more functions in albums, and the method further includes: The terminal device displays a second pop-up window in response to a fourth operation on the third button, where the second pop-up window displays a first option for viewing a hidden album. The terminal device displays a third interface in response to a fifth operation on the first option, where the third interface displays the icon of the first album.

The first interface may be an ordinary album interface, for example, the first interface may be the interface shown in FIG. 2A. The third button for viewing the more functions in the albums may be the button 202 in the upper right corner of the interface shown in FIG. 2A for viewing more functions in albums. The fourth operation on the third button may be a tap operation on the button 202.

The second pop-up window may be a menu pop-up window 207 in the albums shown in FIG. 2B, or may also be referred to as a pop-up window 207, or the like. The first option for viewing the hidden album may be a hidden album option 208 in the pop-up window 207. The fifth operation on the first option may be a tap operation on the hidden album option 208. The third interface may be a hidden album interface, and the third interface is for viewing a hidden album or a hidden photo, for example, the third interface may be the interface shown in FIG. 2C. The interface includes the "dogs" album displayed in an album dimension.

Optionally, the method further includes: The terminal device displays a fourth interface in response to a sixth operation on the first album in the third interface, where the fourth interface displays a photo in the first album and a fourth button for adding a photo to the album. In response to a seventh operation on the fourth button, when the terminal device determines that there is a first album that is not hidden and has a same name as the first album, the terminal device displays a fifth interface, where the fifth interface displays a photo in the first album that is not hidden. Alternatively, in response to an eighth operation on the fourth button, when the terminal device determines that there is no album that is not hidden and has a same name as the first album, the terminal device displays a sixth interface, where the sixth interface includes a photo that is not hidden, and the photo that is not hidden does not include the photo in the first album.

The third interface may be a hidden album interface, for example, the third interface may be an interface shown in FIG. 15A. The sixth operation on the first album in the third interface may be a tap operation on the "dogs" album in the interface shown in FIG. 15A. The fourth interface is a photo interface corresponding to the hidden albums. The fourth interface is used to view photos in any hidden album. For example, the fourth interface may be the interface shown in FIG. 15B. The fourth button, for adding the photo to the album, in the fourth interface may be a button 1501 in the interface shown in FIG. 15B for adding a photo to an album. The seventh operation on the fourth button may be a tap operation on the button 1501. The fifth interface is an interface for adding a photo to the hidden album. The fifth interface is used to add a photo, to the hidden album, from an album that is not hidden. For example, the fifth interface may be the interface shown in FIG. 15C. The photo in the first album that is not hidden may be a photo in a "dogs" album that is not hidden.

It may be understood that in the interface shown in FIG. 15B, when the terminal device detects a tap operation on the button 1501 and the terminal device determines that there is an album that is not hidden and has a same name as the "dogs" album, the terminal device displays the interface shown in FIG. 15C. As shown in the interface in FIG. 15C, the interface includes photos in the "dogs" album that is not hidden.

The eighth operation on the fourth button may be a tap operation on the button 1501. The seventh operation may be the same as the eighth operation. The sixth interface is an interface for adding a photo to the hidden album. The sixth interface is used to add all photos, to the hidden album, from an album that is not hidden. For example, the sixth interface may be the interface shown in FIG. 15D. A photo that is not hidden may be all photos that are not hidden, and there are no photos belonging to the "dogs" album in the interface shown in FIG. 15D.

It may be understood that in the interface shown in FIG. 15B, when the terminal device detects a tap operation on the button 1501 and the terminal device determines that there is no album that is not hidden and has a same name as the "dogs" album, the terminal device displays the interface shown in FIG. 15D. As shown in the interface in FIG. 15D, the interface includes photos that are not hidden, and there are no photos belonging to the "dogs" album in the interface.

Optionally, the fifth interface further displays a fifth button for viewing the album, and the method further includes: The terminal device displays a seventh interface in response to a ninth operation on the fifth button, where the seventh interface displays an icon of a third album. The terminal device displays an eighth interface in response to a tenth operation of selecting the third album, where the eighth interface displays a first image in the third album and a sixth button indicating completion of adding the photo. When the first image is in a selected state, the terminal device displays the first image in the third interface in response to an eleventh operation on the sixth button.

The fifth interface may be an interface shown in FIG. 16C. The fifth button for viewing the album may be a button in the upper right corner of the interface shown in FIG. 16C for viewing an album. The ninth operation on the fifth button may be a tap operation on the button for viewing the album in the upper right corner in the interface shown in FIG. 16C. The seventh interface is an interface for viewing, in the hidden album, an album that is not hidden. The seventh interface is used to view, in the hidden album, an album that is not hidden. For example, the seventh interface may be the interface shown in FIG. 16E. The third interface may be a "screenshots and screen records" album in the interface shown in FIG. 16E. The tenth operation on the third album may be a tap operation on the "screenshots and screen records" album. The eighth interface is an interface for adding photos across albums. The eighth album is used to add photos across albums in the hidden album, as shown in the interface shown in FIG. 16F. The first image may be the photo 1607 (or the photo 1608) in the interface shown in FIG. 16F. The sixth button indicating completion of adding the photo may be a done button in the interface shown in FIG. 16F. The eleventh operation on the sixth button may be a tap operation on the done button.

It may be understood that in the interface shown in FIG. 16F, the photo 1607 is in the selected state. When the terminal device detects a tap operation on the done button, the terminal device may add the photo 1607 to the "dogs" album, and implements adding the photos across albums. In this case, the interface shown in FIG. 16C may display the photo 1607.

Optionally, the terminal device displays a third pop-up window in response to the eleventh operation, where the third pop-up window displays text information prompting to add a to-be-hidden photo across albums, and a seventh button for determining to hide the photo across albums. The electronic device displays the first image in the third interface in response to a twelfth operation on the seventh button.

The third pop-up window may be a pop-up window 1611 in the interface shown in FIG. 16H for prompting across albums, or may also be referred to as the pop-up window 1611, or the like. The seventh button for determining to hide the photo across albums may be the OK button in the pop-up window 1611. The twelfth operation on the seventh button may be a tap operation on the OK button in the pop-up window 1611.

Optionally, the third interface includes an icon of a fourth album, and the method further includes: The terminal device displays a ninth interface in response to a thirteenth operation of selecting the first album in the third interface, where the ninth interface displays an eighth button for unhiding the album. In response to a fourteenth operation on the eighth button, the terminal device skips displaying the icon of the first album, and displays the icon of the fourth album in the third interface.

The third interface may be a hidden album interface, for example, the third interface may be an interface shown in FIG. 8A. The first album may be any hidden album in the interface shown in FIG. 8A, like a "screenshots and screen records" album. The fourth album may be an album other than the "screenshots and screen records" album shown in FIG. 8A, like a "camera" album. The thirteenth operation on the first album in the third interface may be a touch and hold operation on the "screenshots and screen records" album in the interface shown in FIG. 8A. The ninth interface is a function interface of a hidden album, and the ninth interface is used to unhide, delete, or select all on the hidden album, for example, the ninth interface may be the interface shown in FIG. 8B. The eighth button for unhiding the album may be an unhide button 801 in the interface shown in FIG. 8B. The fourteenth operation on the eighth button may be a tap operation on the unhide button 801.

It may be understood that skipping displaying the first album in the third interface may be understood as skipping displaying the "screenshots and screen records" album in the interface shown in FIG. 8C.

Optionally, the method further includes: When the terminal device obtains a second image, and the second image belongs to the first album, the terminal device displays the icon of the first album in the first interface. The terminal device displays a tenth interface in response to a fifteenth operation of selecting the first album, where the tenth interface displays the second image in the first album.

The obtained second image may be shot by the user, may be a screenshot taken by the user in the terminal device, or may be shared by a mobile phone of another device. A method for obtaining the second image is not limited in this embodiment of the application.

The first album may be a "camera" album shown in FIG. 7B. When the terminal device hides the "camera" album, the second image may be a new image shot by the terminal device based on a shooting function of the terminal device. The third album may be the "camera" album in the interface shown in FIG. 7E. The fifteenth operation may be a tap operation on the "camera" album shown in FIG. 7E. The tenth interface may be an interface for viewing a photo in an album, and the tenth interface is used to view a photo in any ordinary album. For example, the tenth interface may be the interface shown in FIG. 7F, and the second image may be the photo 703 shown in FIG. 7F.

It may be understood that when the terminal device shoots a new image and a name of a "camera" album to which the image belongs is the same as a name of a "camera" album in a hidden album, the terminal device can create a "camera" album for the new image, and the "camera" album includes the new image.

Optionally, the first interface further displays an icon of a fifth album, and the method further includes: The terminal device displays a tenth interface in response to a sixteenth operation of selecting the fifth album, where the tenth interface displays a third image. The terminal device displays an eleventh interface in response to a seventeenth operation of selecting the third image, where the eleventh interface displays a ninth button for viewing more functions of the image. The terminal device displays a fourth pop-up window in response to an eighteenth operation on the ninth button, where the fourth pop-up window displays a second option for hiding the photo. The terminal device skips displaying the third image in the tenth interface in response to a nineteenth operation on the second option.

The first interface may alternatively be the interface shown in FIG. 10A. The fifth album may be an "all photos" album shown in FIG. 10A to FIG. 10F. The sixteenth operation on the fifth album may be a tap operation on the "all photos" album in the interface shown in FIG. 10A. The tenth interface may be the interface shown in FIG. 10B. The third image may be the photo 1001 shown in FIG. 10B. The seventeenth operation on the third image may be a touch and hold operation on the photo 1001. The eleventh interface may be an interface for selecting a photo, and the eleventh interface is used to share, select all, edit, delete, and perform more functions on a selected photo. The eleventh interface may be the interface shown in FIG. 10C. The ninth button for viewing the more functions of the image may be a more button 1004 in the interface shown in c in FIG 10. The eighteenth operation on the ninth button may be a tap operation on the more button 1004. The fourth pop-up window may be a menu pop-up window 1005 in photos shown in FIG. 10E, or may also be referred to as a pop-up window 1005. The second option for hiding the photo may be a hide option 1006 in the pop-up window 1005. The nineteenth operation on the second option may be a tap operation on the hide option 1006.

It may be understood that the photo 1001 is in a selected state and when the terminal device receives the tap operation on the hide option 1006, the interface shown in FIG. 10B may skip displaying the photo 1001, or it may be understood that the photo 1001 is hidden.

In a possible implementation, in the interface shown in FIG. 10B, when the terminal device detects the tap operation on the photo 1001, the terminal device may also display the interface shown in FIG. 9A, and hide the photo 1001 based on the embodiment in FIG. 9A and FIG. 9B. An operation for hiding a photo is not limited in this embodiment of this application.

Optionally, the first interface further displays a tenth button for viewing more functions in albums, and the method further includes: The terminal device displays a fifth pop-up window in response to a twentieth operation on the tenth button, where the fifth pop-up window displays a third option for viewing a hidden album. The terminal device displays a twelfth interface in response to a twenty-first operation on the third option, where the twelfth interface displays the third image.

The first interface may alternatively be the interface shown in FIG. 11A (or the interface shown in FIG. 10A). The tenth button for viewing the more functions in the albums may alternatively be the button 1101 in the upper right corner of the interface shown in FIG. 11A for viewing more functions in albums (or the button in the upper right corner of the interface shown in FIG. 10A for viewing more functions in albums). In the interface shown in FIG. 11A, the twentieth operation on the tenth button may be a tap operation on the button 1101. The fourth pop-up window may be a menu pop-up window 1102 in albums shown in FIG. 11B, or is referred to as a pop-up window 1102. The third option for viewing the hidden album may be a hidden album option 1103 in the pop-up window 1102. The twenty-first operation on the third option may be a tap operation on the hidden album option 1103. The twelfth interface may be a interface for viewing hidden photos in a photo view, and the twelfth interface is used to view the hidden photos in the photo view, for example, the twelfth interface is the interface shown in FIG. 11C. The interface may include photos displayed in an album dimension, such as the third image. For example, the third image may include the photo 1001 in the embodiment in FIG. 10A to FIG. 10F.

Optionally, the method further includes: The terminal device displays a thirteenth interface in response to a twenty-second operation of selecting the third image in the twelfth interface, where the thirteenth interface displays an eleventh button for unhiding the photo. In response to a twenty-third operation on the eleventh button, the terminal device skips displaying the third image, and displays the fourth image in the twelfth interface.

The twelfth interface may alternatively be an interface shown in FIG. 12B, and the third image may be a photo 1200 (or the twelfth interface may be the interface shown in FIG. 11C, and in this case, the third image may be any image in the interface shown in FIG. 11C). The thirteenth interface may be an interface for selecting a photo, and the thirteenth interface is used to perform operations such as unhiding, deleting, and selecting all on a photo. For example, the thirteenth interface may be the interface shown in FIG. 12C. In the interface shown in FIG. 12B, the twenty-second operation may be a tap operation on the photo 1200. The eleventh button for unhiding the photo may be the unhide button 1201 in the interface shown in FIG. 12C. The twenty-third operation on the eleventh button may be a tap operation on the unhide button 1201. Skipping displaying the third image in the twelfth interface may be understood as the terminal device skips displaying, in the interface shown in FIG. 12B, the photo 1200 that is unhidden. The fourth image may be any photo shown in FIG. 12B, except the photo 1200.

Optionally, the twelfth interface further displays a twelfth button for adding a photo in the hidden album, and the method further includes: The terminal device displays a fourteenth interface in response to a twenty-fourth operation on the twelfth button, where the fourteenth interface displays a thirteenth button for viewing the album. The terminal device displays a fifteenth interface in response to a twenty-fifth operation on the thirteenth button, where the fifteenth interface displays an album that is not hidden.

The twelfth interface may be the interface shown in FIG. 13A. The twelfth button may be the button 1301 for adding a photo to a hidden album. The twenty-fourth operation on the twelfth button may be a tap operation on the button 1301. The fourteenth interface may be a selection interface of all photos, and the fourteenth interface is used to select a photo in all the photos. For example, the fourteenth interface may be the interface shown in FIG. 13B. The thirteenth button for viewing the album may be the button 1302 in the interface shown in FIG. 13B for viewing an album. The twenty-fifth operation on the thirteenth button may be a tap operation on the button 1302. The fifteenth interface is an interface for viewing, in the hidden album, an album that is not hidden. The fifteenth interface is used to view, in the hidden album, the album that is not hidden. For example, the fifteenth interface may be the interface shown in FIG. 13C, and the interface includes the album that is not hidden.

Optionally, the fourteenth interface further displays a fifth image and a fourteenth button indicating completion of adding the photo, and the method further includes: When the fifth image is in a selected state, the terminal device adds the fifth image to the hidden album in response to a twenty-sixth operation on the fourteenth button.

In the interface shown in FIG. 13B, the fifth image may be any image in the interface shown in FIG. 13B. The fourteenth button may be a done button shown in FIG. 13B. The twenty-sixth operation on the fourteenth button may be a tap operation on the done button. Skipping displaying the fifth image in the fourteenth interface may be understood as adding the fifth image to the hidden album. It may be understood that when the terminal device adds the fifth image to the hidden album, the fifth image may be displayed in the interface shown in FIG. 13A; or the fifth image may be skipped displaying in the interface shown in FIG. 13A, and the fifth image may be displayed based on user's downward slide operation in the interface shown in FIG. 13A.

In a possible implementation, when the hidden album includes an album to which the fifth image belongs, the terminal device adds the fifth image to the album to which the fifth image belongs. Alternatively, when the hidden album does not include an belonging album, the terminal device creates, in the hidden album, an album to which the fifth image belongs and adds the fifth image to the album to which the fifth image belongs. That the hidden album includes the fifth image may be understood as that the album to which the fifth image belongs to the hidden album.

Any album belonging to the hidden album may be understood in the following three manners. 1. All photos in any album belong to the hidden album; 2. Some photos in any album belong to the hidden album; or 3. All photos in any album do not belong to the hidden album. In this embodiment in this application, the hidden album includes the album to which the fifth album belongs may be understood as satisfying content described in 1 and 2 above.

In a possible implementation, the method further includes: The terminal device displays the third interface in response to a twenty-seventh operation of opening the third interface, where the third interface includes a sixth album to which the fifth image belongs. The terminal device displays the fifth image in response to a twenty-eighth operation on the sixth album, where the twenty-seventh operation may be an operation for opening the third interface.

It may be understood that when the fifth image is added to the belonging sixth album, the fifth image can be viewed in the sixth album in a hidden album interface.

Optionally, the twelfth interface further displays a fifteenth button for adding a photo in the hidden album, and the method further includes: The terminal device displays a sixteenth interface in response to a twenty-ninth operation on the fifteenth button, where the sixteenth interface displays a sixteenth button for switching the album. The terminal device displays a seventeenth interface in response to a thirtieth operation on the sixteenth button, where the seventeenth interface displays a drop-down menu, and the drop-down menu displays the album that is not hidden.

The twelfth interface may be an interface shown in FIG. 14A. The fifteenth button for adding the photo in the hidden album may be a button 1401 for adding a photo to a hidden album. The twenty-ninth operation on the fifteenth button may be a tap operation on the button 1401. The sixteenth interface is an interface for switching albums, and the sixteenth interface is used to switch to another album in the terminal device. For example, the sixteenth interface may be the interface shown in FIG. 14B. The sixteenth button for switching the album may be the button 1402 for switching an album. The thirtieth operation on the sixteenth button may be a tap operation on the button 1402. The seventeenth interface may be an interface for displaying a drop-down menu, and the seventeenth interface is used to view another album. For example, the seventeenth interface may be the interface shown in FIG. 14C. The drop-down menu may be the drop-down menu 1403, and the drop-down menu 1403 displays an album that is not hidden.

Optionally, a display style of the third interface is consistent with a display style of the first interface, the third interface further displays a seventeenth button for switching a display manner of a photo in the hidden album, and the method further includes: When the hidden album satisfies a first view, the terminal device displays a sixth pop-up window in response to a thirty-first operation on the seventeenth button, where the sixth pop-up window displays a fourth option for switching to a second view. The terminal device displays the photo in the hidden album in the third interface in the second view in response to a thirty-second operation on the fourth option.

Descriptions are provided by using an example in which the third interface is the interface shown in FIG. 4A, the first view is an album view, and the second view is a photo view. The seventeenth button may be the button 401 for switching a display manner of a photo in a hidden album. The thirty-first operation on the seventeenth button may be a tap operation on the button 401. The sixth pop-up window may be a menu pop-up window 402 of the hidden album in the interface shown in FIG. 4B. The fourth option may be a photo view option in the pop-up window 402. The thirty-second operation on the fourth option may be a tap operation on the photo view option.

In a possible implementation, descriptions are provided by using an example in which the third interface is the interface shown in FIG. 5A, the first view is a photo view, and the second view is an album view. The seventeenth button may be the button 501 for switching a display manner of a photo in a hidden album. The thirtieth operation on the seventeenth button may be a tap operation on the button 501. The sixth pop-up window may be the menu pop-up window 502 of the hidden album in the interface shown in FIG. 5B. The fourth option may be an album view option in the pop-up window 502. The thirty-second operation on the fourth option may be a tap operation on the album view option.

The third interface may be a hidden album interface, and the first interface may be an ordinary album interface. For example, in the embodiment in FIG. 2A to FIG. 2C, a display style of the ordinary album interface shown in FIG. 2A is consistent with a display style of the hidden album interface shown in FIG. 2C. In the embodiment in FIG. 3A to FIG. 3C, a display style of the ordinary album interface shown in FIG. 3A is consistent with a display style of the hidden album interface shown in FIG. 3C.

Optionally, when the first view is an album view, the second view is a photo view; or when the first view is the photo view, the second view is the album view.

The method provided in embodiments of this application is described above with reference to FIG. 2A to FIG. 18, and an apparatus for performing the above method provided in embodiments of this application is described below. FIG. 19 is a schematic diagram of a structure of an apparatus for hiding a photo according to an embodiment of this application. The apparatus for hiding the photo may be the terminal device in embodiments of this application, or may be a chip or a chip system in the terminal device.

As shown in FIG. 19, the apparatus 1900 for hiding the photo may be used in a communication device, a circuit, a hardware component, or a chip, and the apparatus for hiding the photo includes a display unit 1901, and a processing unit 1902. The display unit 1901 is configured to support the apparatus 1900 for hiding the photo in performing a display step. The processing unit 1902 is configured to support the apparatus 1900 for hiding the photo in performing an information processing step.

In a possible implementation, the apparatus 1900 for hiding the photo may further include a communication unit 1903. Specifically, the communication unit is configured to support the apparatus 1900 for hiding the photo in performing data sending and data receiving steps. The communication unit 1903 may be an input interface or an output interface, a pin, a circuit, or the like.

In a possible embodiment, the apparatus for hiding the photo may further include a storage unit 1904. The processing unit 1902 is connected to the storage unit 1904 through a line. The storage unit 1904 may include one or more memories, and the memory may be one or more devices or components in a circuit that are configured to store a program or data. The storage unit 1904 may exist independently, and is connected to, through a communication line, the processing unit 1902 disposed in the apparatus for hiding the photo. The storage unit 1904 may alternatively be integrated with the processing unit 1902.

The storage unit 1904 may store computer-executable instructions of the method in the terminal device, so that the processing unit 1902 performs the method in the foregoing embodiments. The storage unit 1904 may be a register, a cache, a RAM, or the like, and the storage unit 1904 may be integrated with the processing unit 1902. The storage unit 1904 may be a read-only memory (read-only memory, ROM) or another type of static storage device that may store static information and instructions, and the storage unit 1904 may be independent of the processing unit 1902.

FIG. 20 is a schematic diagram of a hardware structure of another terminal device according to an embodiment of this application. As shown in FIG. 20, the terminal device includes a processor 2001, a communication line 2004, and at least one communication interface (for example, a communication interface 2003 is used as an example for description in FIG. 20).

The processor 2001 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 2004 may include a circuit configured to transmit information between the foregoing components.

The communication interface 2003 uses any apparatus of a transceiver type to communicate with another device or a communication network like an Ethernet, wireless local area networks (wireless local area networks, WLAN), and the like.

Possibly, the terminal device may further include a memory 2002.

The memory 2002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 2004. The memory may be alternatively integrated with the processor.

The memory 2002 is configured to store computer-executable instructions for performing the solutions of this application, and is controlled and executed by the processor 2001. The processor 2001 is configured to execute the computer-executable instructions stored in the memory 2002 to implement the binaural pickup method provided in embodiments of this application.

Possibly, the computer-executable instructions in embodiments of this application may also be referred to as application code. This is not specifically limited in embodiments of this application.

During specific implementation, in an embodiment, the processor 2001 may include one or more CPUs, for example, a CPU 0 and a CPU 1 in FIG. 20.

During specific implementation, in an embodiment, the terminal device may include a plurality of processors, for example, the processor 2001 and a processor 2005 in FIG. 20. Each of these processors may be a single-core (single-CPU) processor, or may be a multi-core (multi-CPU) processor. The processor herein may be one or more devices or circuits, and/or a processing core configured to process data (for example, computer program instructions).

In the foregoing embodiments, the instructions executed by the processor stored in the memory may be implemented in a form of a computer program product. The computer program product may be pre-written in the memory, or may be downloaded and installed in the memory in a form of software.

The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of methods in the foregoing embodiments may be implemented by using software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for hiding a photo, wherein the method comprises:
displaying, by a terminal device, a first interface, wherein an icon of a first album and an icon of a second album are displayed in the first interface;
displaying, by the terminal device, a second interface in response to a first operation of selecting the first album, wherein a first button for hiding the album is displayed in the second interface; and
displaying, by the terminal device, the first interface in response to a second operation on the first button, wherein after the second operation, the icon of the second album is displayed in the first interface, and the icon of the first album is not displayed in the first interface.

2. The method according to claim 1, wherein the displaying, by the terminal device, the first interface in response to a second operation on the first button comprises:
displaying, by the terminal device, a first pop-up window in response to the second operation, wherein text information prompting whether to hide the album and a second button for determining to hide the first album are displayed in the first pop-up window; and
displaying, by the terminal device, the first interface in response to a third operation on the second button.

3. The method according to claim 1 or 2, wherein the method further comprises:
after the first operation, determining, by the terminal device in response to the first operation, whether the first album satisfies a preset condition, wherein when the preset condition is not satisfied, the first button is in a disabled state, or when the preset condition is satisfied, the first button is in an available state.

4. The method according to claim 1, wherein a third button for viewing more functions in albums is further displayed in the first interface, and the method further comprises:
displaying, by the terminal device, a second pop-up window in response to a fourth operation on the third button, wherein a first option for viewing a hidden album is displayed in the second pop-up window; and
displaying, by the terminal device, a third interface in response to a fifth operation on the first option, wherein the icon of the first album is displayed in the third interface.

5. The method according to claim 4, wherein the method further comprises:
displaying, by the terminal device, a fourth interface in response to a sixth operation of selecting the first album in the third interface, wherein a photo in the first album and a fourth button for adding a photo to the album are displayed in the fourth interface; and
in response to a seventh operation on the fourth button, when the terminal device determines that there is the first album that is not hidden and has a same name as the first album, displaying, by the terminal device, a fifth interface, wherein a photo in the first album that is not hidden is displayed in the fifth interface; or
in response to an eighth operation on the fourth button, when the terminal device determines that there is no album that is not hidden and has a same name as the first album, displaying, by the terminal device, a sixth interface, wherein a photo that is not hidden is displayed in the sixth interface, and the photo that is not hidden does not comprise the photo in the first album.

6. The method according to claim 5, wherein the fifth interface further displays a fifth button for viewing the album, and the method further comprises:
displaying, by the terminal device, a seventh interface in response to a ninth operation on the fifth button, wherein an icon of a third album is displayed in the seventh interface;
displaying, by the terminal device, an eighth interface in response to a tenth operation of selecting the third album, wherein a first image in the third album and a sixth button indicating completion of adding the photo are displayed in the eighth interface; and
when the first image is in a selected state, displaying, by the terminal device, the first image in the third interface in response to an eleventh operation on the sixth button.

7. The method according to claim 6, wherein the displaying, by the terminal device, the first image in the third interface in response to an eleventh operation on the sixth button comprises:
displaying, by the terminal device, a third pop-up window in response to the eleventh operation, wherein text information prompting to add a to-be-hidden photo across albums, and a seventh button for determining to hide the photo across albums are displayed in the third pop-up window; and
displaying, by the electronic device, the first image in the third interface in response to a twelfth operation on the seventh button.

8. The method according to claim 4, wherein the third interface comprises an icon of a fourth album, and the method further comprises:
displaying, by the terminal device, a ninth interface in response to a thirteenth operation of selecting the first album in the third interface, wherein an eighth button for unhiding the album is displayed in the ninth interface; and
in response to a fourteenth operation on the eighth button, not displaying, by the terminal device, the icon of the first album, and displaying the icon of the fourth album in the third interface.

9. The method according to claim 4, wherein the method further comprises:
when the terminal device obtains a second image, and the second image belongs to the first album, displaying, by the terminal device, the icon of the first album in the first interface; and
displaying, by the terminal device, a tenth interface in response to a fifteenth operation of selecting the first album, wherein the second image in the first album is displayed in the tenth interface.

10. The method according to claim 1, wherein an icon of a fifth album is further displayed in the first interface, and the method further comprises:
displaying, by the terminal device, a tenth interface in response to a sixteenth operation of selecting the fifth album, wherein a third image is displayed in the tenth interface;
displaying, by the terminal device, an eleventh interface in response to a seventeenth operation of selecting the third image, wherein a ninth button for viewing more functions of the image is displayed in the eleventh interface;
displaying, by the terminal device, a fourth pop-up window in response to an eighteenth operation on the ninth button, wherein a second option for hiding the photo is displayed in the fourth pop-up window; and
not displaying, by the terminal device, the third image in the tenth interface in response to a nineteenth operation on the second option.

11. The method according to claim 10, wherein the first interface further displays a tenth button for viewing more functions in albums, and the method further comprises:
displaying, by the terminal device, a fifth pop-up window in response to a twentieth operation on the tenth button, wherein a third option for viewing a hidden album is displayed in the fifth pop-up window; and
displaying, by the terminal device, a twelfth interface in response to a twenty-first operation on the third option, wherein the third image is displayed in the twelfth interface.

12. The method according to claim 11, wherein the twelfth interface further comprises a fourth image, and the method further comprises:
displaying, by the terminal device, a thirteenth interface in response to a twenty-second operation of selecting the third image in the twelfth interface, wherein an eleventh button for unhiding the photo is displayed in the thirteenth interface; and
in response to a twenty-third operation on the eleventh button, not displaying, by the terminal device, the third image, and displaying the fourth image in the twelfth interface.

13. The method according to claim 12, wherein the twelfth interface further displays a twelfth button for adding a photo in the hidden album, and the method further comprises:
displaying, by the terminal device, a fourteenth interface in response to a twenty-fourth operation on the twelfth button, wherein a thirteenth button for viewing the album is displayed in the fourteenth interface, and the fourteenth interface further comprises a fifth image and a fourteenth button indicating completion of adding the photo;
displaying, by the terminal device, a fifteenth interface in response to a twenty-fifth operation on the thirteenth button, wherein an album that is not hidden is displayed in the fifteenth interface; and
the method further comprises: when the fifth image is in a selected state, adding, by the terminal device, the fifth image to the hidden album in response to a twenty-sixth operation on the fourteenth button.

14. The method according to claim 13, wherein the method further comprises:
displaying, by the terminal device, the third interface in response to a twenty-seventh operation of opening the third interface, wherein the third interface comprises a sixth album to which the fifth image belongs; and
displaying, by the terminal device, the fifth image in response to a twenty-eighth operation on the sixth album.

15. The method according to claim 13, wherein a fifteenth button for adding a photo in the hidden album is further displayed in the twelfth interface, and the method further comprises:
displaying, by the terminal device, a sixteenth interface in response to a twenty-ninth operation on the fifteenth button, wherein a sixteenth button for switching the album is further displayed in the sixteenth interface; and
displaying, by the terminal device, a seventeenth interface in response to a thirtieth operation on the sixteenth button, wherein a drop-down menu is displayed in the seventeenth interface, and the album that is not hidden is displayed in the drop-down menu.

16. The method according to claim 4, wherein a display style of the third interface is consistent with a display style of the first interface, a seventeenth button for switching a display manner of a photo in the hidden album is displayed in the third interface further, and the method further comprises:
when the hidden album satisfies a first view, displaying, by the terminal device, a sixth pop-up window in response to a thirty-first operation on the seventeenth button, wherein a fourth option for switching to a second view is displayed in the sixth pop-up window; and
displaying, by the terminal device, the photo in the hidden album in the third interface in the second view in response to a thirty-second operation on the fourth option.

17. The method according to claim 16, wherein when the first view is an album view, the second view is a photo view; or when the first view is the photo view, the second view is the album view.

18. An apparatus for hiding a photo, comprising a display unit and a processing unit, wherein
the display unit is configured to display a first interface, and an icon of a first album and an icon of a second album are displayed in the first interface;
the display unit is further configured to display a second interface in response to a first operation of selecting the first album; a first button for hiding the album is displayed in the second interface; and
the display unit is configured to display the first interface in response to a second operation on the first button, wherein after the second operation, the icon of the second album is displayed in the first interface, and the icon of the first album is not displayed in the first interface.

19. A terminal device, comprising a memory, a processor, and a computer program that is stored in the memory and that can be run on the processor, wherein when the processor executes the computer program, the terminal device is enabled to perform the method according to any one of claims 1 to 17.

20. A computer-readable storage medium, wherein the computer-readable storage medium stores a computer program, and when the computer program is executed by a processor, a computer is enabled to perform the method according to any one of claims 1 to 17.

21. A computer program product, comprising a computer program, wherein when the computer program is run, a computer is enabled to perform the method according to any one of claims 1 to 17.
